Europäisches Patentamt

European Patent Office

Office européen des brevets

(11) Publication number: **0 506 209 A1**

# EUROPEAN PATENT APPLICATION

(21) Application number: **92201651.4**

(22) Date of filing: **28.04.88**

(51) Int. Cl.⁵: **B23Q 39/04**

This application was filed on 06 - 06 - 1992 as a divisional application to the application mentioned under INID code 60.

(30) Priority: **28.04.87 JP 105439/87**
**28.04.87 JP 105441/87**
**28.04.87 JP 105442/87**
**28.04.87 JP 105443/87**
**28.04.87 JP 105444/87**
**29.05.87 JP 134150/87**
**29.05.87 JP 134151/87**
**23.06.87 JP 156054/87**
**23.06.87 JP 156055/87**
**10.07.87 JP 172488/87**
**24.07.87 JP 185006/87**
**25.09.87 JP 241521/87**
**13.10.87 JP 258012/87**
**24.12.87 JP 327652/87**
**24.12.87 JP 327654/87**

(43) Date of publication of application:
**30.09.92 Bulletin 92/40**

(60) Publication number of the earlier application in accordance with Art.76 EPC: **0 289 333**

(84) Designated Contracting States:
**ES FR GB IT**

(71) Applicant: **YAMAZAKI MAZAK CORPORATION**
**1 Azanorifune Ooazaoguchi Ooguchi-cho**
**Niwa-gun Aichi-ken(JP)**

(72) Inventor: **Kojima, Horishi**
**80 Hongochohigashi, Kiga**
**Konan-shi, Aichi-ken(JP)**
Inventor: **Sakata, Keikichi**
**20-202 Konandanchi, 2-1-1, Fujigaoka**
**Konan-shi, Aichi-ken(JP)**
Inventor: **Watanabe, Seigo**
**4-9-7, Kawai-cho**
**Minokamo-shi, Gifu-ken(JP)**
Inventor: **Mitsukuchi, Yukio**
**29 Miyamae, Imaichibacho**
**Konan-shi, Aichi-ken(JP)**
Inventor: **Hashimoto, Shuichi**
**4-19-12, Aigigaoka**
**Kani-shi, Gifu-ken(JP)**
Inventor: **Kato, Choji**
**3-6, Nishiyamahondori, Meito-ku**
**Nagoya-shi, Aichi-ken(JP)**
Inventor: **Teshigawara, Mikiro, c/o Yamazaki**
**Mazak Corp.**
**1 Azafukino, Ooazaoguchi, Ooguchi-cho**
**Niwa-gun, Aichi-ken(JP)**
Inventor: **Furuhashi, Ryoichi**
**1-641, Kamioguchi, Ooguchi-cho**
**Niwa-gun, Aichi-ken(JP)**
Inventor: **Momoi, Shoji**
**4-92, Ryokuennishi**
**Kagamihara-shi, Gifu-ken(JP)**
Inventor: **Inoue, Toshihiko**
**3-15-10, Shinooka**
**Komaki-si, Aichi-ken(JP)**
Inventor: **Uemura, Kazuki, 401 No. 23 Ocean**
**Plaza**
**61 Kunotsubokitamachi Nishiharu-cho**
**Nishikasugai-cho, Aichi-ken(JP)**
Inventor: **Oshima, Katsushi**
**960 Asanohane, Chiaki-cho**
**Ichinomiya-shi, Aichi-ken(JP)**

(74) Representative: **Lawson, David Glynne et al**
**MARKS & CLERK 57-60 Lincoln's Inn Fields**
**London WC2A 3LS(GB)**

(54) **A complex machining machine tool and a machining method for the use of the machine tool.**

(57) The present invention provides a complex machining machine tool (1) having a single frame in which a chip collecting space (4) is provided at the center portion, a first and a second spindle stocks (5,6) on the frame (2) being relatively free to move in a Z axis direction and being located on respective sides of the chip collecting space (4), workpiece spindles (5b,6b) on said spindle stocks (5,6), free to

rotate and arranged mutually facing each other, and tool rests (7,9). The tool rests (7,9) have respective turrets (7a,9a) which can assume various kinds of movement forms. Furthermore, complicated and various kinds of machinings can be performed in such a manner that the rotation control forms of the workpiece spindles (5b,6b) and the spindle stocks (5,6) are combined. The invention also provides a specific machining method.

## Fig.1

This invention relates to a complex machining machine tool having workpiece spindles provided in the shape of facing mutually, and furthermore being provided tool rests in the shape of corresponding to workpiece spindles respectively.

In recent years, the machining contents of a machine tool is complicated and various, and an efficiency being demanded for a machine tool is going to be high.

In consideration of the above-described circumstances, the object of this invention is to provide a complex machining machine tool which can execute complicated machining contents and machining method using the machine tool.

Embodiments of the invention will now be described, by way of example only, and without limiting the scope of the appended claims.

Generally, the embodiments are comprised as follows. That is, tool rests are independently disposed being free to move and drive respectively in the shape of corresponding to spindle stocks, turrets in which one or more than one tool can be installed are provided inside each tool rest being free to index and rotate and drive at the predetermined machining position, the tool installation portion of each turret is provided so as to project in the further negative direction of X axis in comparison with the portion of the tool rest positioned in the most negative direction of X axis when the tool installation portion is indexed at the machining position.

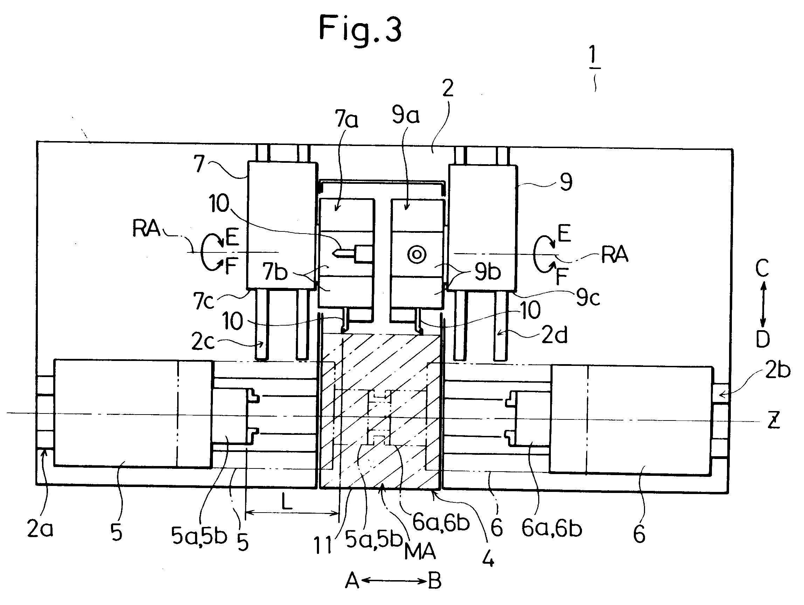

According to the above-described constitution, the distance L between the tool installed in the turret and the workpiece spindle in Fig.3 can be taken longer in comparison with the case that turrets are installed in the outside of tool rests and tools are disposed at the outside of tool rests since the turrets are positioned at the inside of the tool rests respectively. Furthermore, the maximum length of a workpiece to be able to machine by chucking can be taken longer at the same machine dimension in Z axis direction. Therefore, the machine dimension can be smaller if the maximum length of the workpiece is same, and the machine can be made compact.

Since the tool installation surface of the turret is positioned in the shape of projecting in the further negative direction of X axis in comparison with the tool rest, the machining is performed toward a workpiece by means of the tool in such a manner that the tool is rotated on the turret and is indexed at the machining position X1, and thereafter the tool rest is moved in the negative direction of X axis. The tool to be used for machining always projects from the tool rest to the workpiece side. Therefore, the machining can be performed enough toward the workpiece as long as a guide means with a short length is provided without disposing the guide means of the tool rest such as a sliding surface to the position intersecting Z axis in comparison with the tool rest in which the tools are installed as teeth of a comb. Accordingly, the bad influence on the guide means of chip can be eliminated. And, the chip collecting movement can be smoothly performed since the chip collecting space isn't interrupted by the guide means.

In the case of such a constitution that the spindle stocks are provided being free to move and drive in Z axis direction respectively, the spindle stocks can be synchronously and asynchronously moved each other. Therefore, various machining can be performed such as machining holding a long sized workpiece between both spindle stocks.

In the case of such a constitution that the first workpiece handling means is provided in the shape of corresponding to the first spindle stock, the second workpiece handling means is provided in the shape of corresponding to the second spindle stock, the first workpiece holding portion is movably disposed only between the first waiting position and the first workpiece delivery position facing to the first workpiece spindle at the first workpiece handling means, and the second workpiece holding portion is movably disposed only between the second waiting position and the second workpiece delivery position facing to the second workpiece spindle at the second workpiece handling means, the workpiece can be attached to the first spindle stock in such a manner that the workpiece is held by the first workpiece holding portion of the first workpiece handling means, thereafter the first workpiece holding portion is moved from the first waiting position to position the workpiece at the fist workpiece delivery position X2, and in this state, the first spindle stock is moved for the workpiece in Z axis direction to deliver the workpiece to the first spindle stock. The workpiece can be detached from the second spindle stock in such a manner that the second workpiece holding portion of the second workpiece handling means is positioned at the second workpiece delivery position, and thereafter the second spindle stock is moved together with the workpiece for the second workpiece holding portion positioned at the second workpiece delivery position in Z axis direction to deliver the workpiece to the second workpiece holding portion.

The workpiece can be fed from one spindle stock to the other spindle stock without the handling robot and the like in such a manner that both spindle stocks are approached with each other by moving in Z axis direction relatively, and the workpiece being held by one workpiece spindle is delivered to the other workpiece spindle.

In the case of machining of a long sized workpiece, a workpiece is held by each workpiece holding portion of the first and the second workpiece handling means. In this state, the workpiece holding portions are synchronously moved to position the workpiece at the position between the spindle stocks. Furthermore, in this state, both spindle stocks are moved in Z axis direction respectively to be approached the workpiece. In this way, the workpiece can be held by both workpiece spindles.

Moreover, in the case of cutting-off machining of the workpieces being held by both workpiece spindles, the workpiece holding portions of the first and the second workpiece handling means are positioned at the first workpiece delivery position X2, and the second workpiece delivery position X4 respectively. In this state, the workpieces are rotatably held by the workpiece holding portions respectively. In this state, the workpieces can be cut off.

In result, various movements such as the attachment and detachment of various workpieces to two spindle stocks facing mutually, the holding of workpieces accompanied by the cutting-off machining and the like can be performed by the first and/or the second workpiece handling means which has no function of moving in Z axis direction. Furthermore, since the delivery of the workpiece between the spindle stocks can be performed, it isn't necessary for the workpiece handling means to have the function of moving in Z axis direction. Therefore, the control procedure and the constitution of the handling means can be simplified.

The machining can be continued in such a manner that the workpiece is delivered between the spindle stocks by means of the barfeeder, and the machined workpiece is took out only by the second handling means. In result, a complex machining machine tool by which various workpiece machining can be performed can be provided. Furthermore, the handling means can hold the workpiece easily in such a manner that the movement quantity of the spindle stocks in Z axis direction is controlled by means of the machining program if the length of the workpiece to be machined is different. In result, the movement of the workpiece handling means can be restricted at the minimum. And, the control of the workpiece handling means can be simplified in comparison with the former one. Moreover, since the handling means don't move in Z axis direction, the operator don't collide with the handling means and can machine the workpiece safely.

In the case of such a constitution that a workpiece supporting means by which a workpiece is rotatably supported is disposed at the tool rest, a workpiece can be supported by the workpiece supporting means in such a manner that the tool rest is moved and driven. Accordingly, it isn't necessary to provide a center rest appartus and a sliding surface and a driving source for moving the center rest apparatus separately. In the case that the workpiece supporting means is driven by means of the tool rotating drive mechanism of a tool rest, it isn't necessary to provide the driving sources for the workpiece supporting means independently. Therefore, the center rest can be smaller, and its constitution can be simplified.

Moreover, in the case of such a constitution that the workpiece spindles are synchronously rotated, a workpiece can be delivered between the workpiece spindles without stopping the workpiece spindles, and the machining of a long sized workpiece can be performed in the shape of supporting the workpiece between the workpiece spindles.

That is, in the case that the first routine of machining is performed in the state that the workpiece is held by the first workpiece spindle, and the second routine of machining is performed in such a manner that the machined workpiece after the first routine is delivered to the second workpiece spindle, a synchronous rotating control means of the workpiece spindles is provided. When the machined workpiece after the first routine is delivered to the second workpiece spindle from the first workpiece spindle, the first workpiece spindle and the second workpiece spindle are rotated at the same rotation number by means of the synchronous rotating control means. In this state, the fist and the second workpiece spindles are approached each other. The workpiece after the first routine in the rotating state by means of the first workpiece spindle is held by the second workpiece spindle. And, the holding relation between the workpiece and the first workpiece spindle is released. With the above-described constitution, the second routine of machining can be immediately performed in such a manner that the first and the seocnd workpiece spindles are synchronously rotated without stopping its rotation, and the machined workpiece after the first routine in the rotating state is delivered to the second workpiece spindle from the first workpiece spindle. Therefore, the machining time of a workpiece can be shortened.

Moreover, a spindle driving motor control means by which the rotation of the spindle driving motors are controlled is connected with the spindle driving motors of the first and the second workpiece spindles. In the case of machining of the long sized workpiece being supported between the first and the second workpiece spindles, the spindle driving motor control means is driven, and one spindle driving motor of the spindle driving motors is rotated at the predetermined torque. At the same time, the other spindle driving motor is rotated and driven at the smaller torque than the predetermined torque. In this state, the predetermined machining is performed toward the workpiece. With the above-described constitution, the rotation angular velocity quantity of the workpiece spindles are controlled by the spindle driving motor rotating and driving at the predetermined torque, and the workpiece spindles are synchronously rotated at the rotation angular velocity quantity of the spindle being connected with the driving motor if the characteristics of the workpiece spindles (inertia, the characteristics of adjustable speed and the like) don't correspond with each other. In result, bad torsional torque is effectively prevented from acting on the workpiece being held between workpiece spindles which face mutually, so that the workpiece can be machined in this state.

The spindle driving motor control means by which the rotation of the spindle driving motors are controlled is connected with the spindle driving motors of the first and the second workpiece spindles. In the cace of machining, a workpiece is held between the workpiece spindles. Thereafter, when the spindle driving motors are energizing in this state, the spindle driving motor control means is driven. And, one spindle driving motor of the spindle driving motors is self-held, and the other spindle driving motor is rotated at the predetermined torque. Furthermore, in this state, the self-holding of the spindle driving motor being self-held is released, and the spindle driving motor is rotated at the predetermined torque. With the above-described constitution, since the workpiece spindles are driven by their spindle driving motors respectively, the inertia of the spindle being connected with the other spindle driving motor doesn't act on the workpiece. Therefore, the excessive torsional torque can be effectively prevented from acting on the workpiece at the time of energizing.

Moreover, the first tool rest is movably provided in the first movement area in Z axis direction, and the second tool rest is movably and drivably provided in the second movement area having the common movement area which is overlapping with the first movement area in Z axis direction. With the above-described constitution, the machining portion of a long sized workpiece is positioned at the position corresponding to the common movement area. In this state, the workpiece can be machined by only the tool which installs in the first or the second tool rest. At the same time, the machining for the long sized workpiece can be easily performed in such a manner that the portion to be machined is moved in the common movement area. The portion of the workpiece positioned in the common movement area can be machined by means of the first or the second tool rest. Accordingly, it isn't necessary to install the same tool in both the first and the second tool rests, and the tools can be effectively installed in the tool rests. Since the control of machining may be performed toward only one tool rest, the making of the machining program can be easily performed.

A workpiece is held by the first workpiece spindle. In this state, machining is performed toward the workpiece. After the machining, the first and the second workpiece spindles are moved in the rotation angular control direction such as C-axis direction, and are positioned at the predetermined delivery positions. At the same time, the first and the second workpiece spindles are approached with each other to hold the workpiece by the first and the second workpiece spindles. Thereafter, in this state, the holding relation between the workpiece and the first workpiece spindle is released. Moreover, the first and the second workpiece spindles are separated each other to hold the workpiece at the second workpiece spindle side. In this state, the predetermined machining is performed toward the workpiece. With the above-described constitution, the first and the second workpiece spindles are positioned at the delivery positions. In this state, the workpiece being held at the first workpiece spindle side can be directly delivered to the second workpiece spindle side in the state that the movement on the rotation angular control axis is restricted. In result, the workpiece can be delivered to the second workpiece spindle side from the first workpiece spindle side without generating a phase shift from the rotation angular control origin such as C-axis origin, and the milling machining and the like accompanied by the rotating angular control such as C-axis control can be accurately performed toward the delivered workpiece.

Furthermore, a workpiece center rest means is installed in one of the first and the second tool rests at least. In the case of machining of a long sized workpiece, one edge portion of the workpiece is held by the first or the second spindle stock through the workpiece spindle. At the same time, the workpiece is supported by the workpiece center rest means being installed in the first or the second tool rest. In this state, in the case that the other edge portion of the workpiece is machined by means of the tool being installed in the other tool rest which is different from the tool rest supporting the above-described workpiece, the edge portion of the workpiece can be machined in the state that near the edge portion of a long sized workpiece is supported by the workpiece center rest means being installed in the first or the second tool rest. In result, it isn't necessary to provide the workpiece center rest apparatus at the complex machining machine tool through the sliding surface and the like, and the machine tool doesn't become complicated and large. After one edge portion of the long sized workpiece being held by the first spindle stock is machined, the edge portion of the workpiece being held by the workpiece spindle of the first spindle stock through the chucks and the like is pulled out of the workpiece spindle, and can be machined in such a manner that the first and the second spindle stocks are approached with each other, and the workpiece is delivered to the second spindle stock side. In result, both edge portions of the long sized workpiece can be machined without turning inversely, and labour effectiveness can be improved.

Moreover, a workpiece is held by the first spindle stock, and the first routine of machining is performed.

After the first routine, a first step is executed. That is, the second spindle stock is moved the predetermined distance for the first spindle stock. And the workpiece is held by the first and the second spindle stocks.

In this state, a second step is executed. That is, the workpiece is cut off in such a manner that the first and the second spindle stocks are synchronously rotated. And the parts is cut off from the workpiece, and is held by the second spindle stock.

Furthermore, a third step is executed. That is, the second spindle stock is moved together with the parts to the position being distant with the predetermined distance from the first spindle stock.

In this state, a fourth step is executed. That is, the first routine of machining is performed toward the workpiece being held by the first spindle stock. At the same time, the fifth step is executed. That is, the second routine of machining is performed toward the parts being held by the second spindle stock.

Furthermore, the workpiece is fed with the predetermined length from the first spindle stock during the first step through the fourth step. In the case of the above-described constitution, after the first routine, the parts including the portion to which the first routine finishes is cut off form the other raw portion of the workpiece in the state of holding by the second spindle stock, and can be held by the seocnd spindle stock. In result, the first and the second routine of machining can be performed and the parts in the predetermined shape can be successively made without asking some one for help.

Moreover, a workpiece is held by the first spindle stock, and the first routine of machining is performed. After the first routine, the second spindle stock is moved the predetermined distance for the first spindle stock to hold the workpiece by the first and the second spindle stocks. In this state, the holding relation between the first spindle stock and the workpiece is released. And, in this state, the second spindle stock is moved to the position being distant with the predetermined distance from the first spindle stock. Then, the workpiece is pulled out with the predetermined length from the first spindle stock. In this state, the workpiece is held by the first and the second spindle stocks. Thereafter, the workpiece is cut off in such a manner that the first and the second spindle stocks are synchronously rotated. The parts is cut off from the workpiece, and is held by the second spindle stock. Furthermore, the second spindle stock is moved together with the parts to the position being distant with the predetermined distance from the first spindle stock. In this state, the first routine of machining is performed toward the workpiece being held by the first spindle stock. At the same time, the second routine of machining is performed toward the parts being held by the second spindle stock. In the case of the above-described constitution, in addition to the above-described effect, the workpiece can be cut off in the state that the predetermined length of the workpiece is pulled out from the first spindle stock by the second spindle stock without using the barfeeder apparatus after the first routine.

In the case of the constitution comprising a first, a second, and a third steps as described below, the first through the third steps are executed one time or more than one time. That is, the first step is as follows: After the predetermined machining is performed in the state that a workpiece is held by the first and the second spindle stocks, the holding relation between the second spindle stock and the workpiece is released. In this state, the second spindle stock is moved for the first spindle stock to hold the workpiece by the first and the second spindle stocks. The second step is as follows: When the workpiece is held by the first and the second spindle stocks, the holding relation between the first spindle stock and the workpiece is released. The second spindle stock is moved together with the workpiece to the position being distant with the predetermined distance from the first spindle stock. Then, the raw portion of the workpiece is pulled out with the predetermined length from the first spindle stock. The third step is as follows: When the raw portion of the workpiece is pulled out with the predetermined length from the first spindle stock, the pulled out raw portion of the workpiece is held between the first and the second spindle stocks. Then, the machining is performed toward the raw portion. With the above-described constitution, the workpiece can be intermittently pulled out with the predetermined length from the first spindle stock by means of the second spindle stock. In result, the workpiece can be intermittently pulled out with the predetermined length from the first spindle stock without using the specific apparatus such as a barfeeder apparatus, and the raw portion of the workpiece which is pulled out on all such occasions can be machined by holding between the first and the second spindle stocks.

And, in the case of the machining of the third step, the portion to be machined is positioned near the fist or the second workpiece spindle. In this state, the machining is performed. With the above-described constitution, since the workpiece is always machined at the position adjacent to the workpiece spindle, the workpiece spindle holding the workpiece fills the role of a center rest. Therefore, the chattering or the like can be effectively prevented from generating on the workpiece during the machining, and the machining accuracy can be improved.

Moreover, a workpiece is held by the chuck being installed in the first spindle stock so as not to rotate for the chuck and so as to move in Z axis direction. Furthermore, the second spindle stock is moved the predetermined distance for the first spindle stock to hold the edge portion of the workpiece. In this state, the raw portion of the workpiece is pulled out from the first spindle stock for the second spindle stock in such a manner that the second spindle stock is moved together with the workpiece in the direction going away from the first spindle stock. At the same time, the pulled out raw portion is machined by means of the tool rest positioned at the position adjacent to the first spindle stock. With the above-described constitution, the raw portion can be machined at the position adjacent to the first spindle stock by means of the tool rest in such a manner that the raw portion of the workpiece is pulled out from the first spindle stock by means of the second spindle stock. Therefore, the workpiece can be machined without using the barfeeder apparatus by pulling the workpiece out from the first spindle stock for the second spindle stock. Since the machining by means of the tool rest is performed at the position adjacent to the spindle stock, the chuck being installed in the first spindle stock can fill the role of the center rest during the machining of the workpiece, and the machining can be performed in the shape of keeping the high accuracy without the center rest.

Moreover, the different kinds of workpieces are held by the workpiece spindles through the workpiece holding means respectively. In this state, the predetermined machinings are performed toward the workpieces to form the connecting portions at the workpieces respectively. After the machining, the first and the second spindle stocks are relatively moved together with the workpieces to approach with each other. Then, the workpieces are assembled through the connecting portions. With the above-described costitution, the connecting parts can be made in such a manner that the workpieces are connected through the connecting portions. In result, the machining and the assembly of a few kinds of workpieces can be automatically performed by one complex machining machine tool without asking some one for help and without providing the assembly line for assembling the workpieces.

In the accompanying drawings:-

Fig.1 is a strabismus view for showing an embodiment of a complex machining machine tool;

Fig.2 is a front elevation of a complex machining machine tool of Fig.1;

Fig.3 is a top view of Fig.2;

Fig.4 is a sectional view along the line IV-IV of Fig.2;

Fig.5 is a front elevation for showing the another embodiment of a complex machining machine tool;

Fig.6 is a left side elevation of Fig.1;

Fig.7 is a front elevation for showing a loading apparatus installed in a complex machining machine tool as shown in Fig.5;

Fig.8 is a view for showing the important part of a loading apparatus;

Figs.9 through 17 are flow charts for showing the way of the machining of a workpiece by means of a complex machining machine tool as shown in Fig.5;

Figs.18 through 23 are flow charts for showing the way of the machining of a long sized workpiece by means of a complex machining machine tool as shown in Fig.5;

Fig.24 is a view for showing the another example of a hand of a loading apparatus;

Fig.25 is a front elevation for showing the another embodiment of a complex machining machine tool;

Fig.26 is a sectional view along the line II-II of Fig.25;

Fig.27 is a view seen by the arrow YIII of Fig.25;

Fig.28 is a view for showing the relation of the position between two tool rests of a complex machining machine tool as shown in Fig.25;

Fig.29 is a front elevation for showing a tool rest of a complex machining machine tool as shown in Fig.25;

Fig.30 is a view for showing an example of a workpiece center rest apparatus installed in a tool rest;

Fig.31 is a view for showing the engagement condition between a workpiece center rest apparatus and a workpiece;

Figs.32 through 39 are views for showing the process at which a machining is performed toward the shaft shaped workpiece by means of a complex machining machine tool as shown in Fig.25;

Fig.40 is a view for showing the way of the machining of a shaft shaped workpiece after a workpiece is supported by means of a face driver;

Figs.41 through 44 are views for showing the process at which a bar shaped workpiece machining is performed by means of a complex machining machine tool as shown in Fig.25;

Figs.45 through 51 are views for showing an example of the process at which the connecting parts are successively made by means of a complex machining machine tool as shown in Fig.25;

Figs.52 through 58 are views for showing the another example of the process at which the connecting parts are successively made by means of a complex machining machine tool as shown in Fig.25;

Figs.59 through 63 are views for showing the example of the process at which chucked workpiece machining is successively performed toward a kind of a workpiece by means of a complex machining machine tool as shown in Fig.25;

Figs.64 through 66 are views for showing the example of the process at which chucked workpiece machining is successively performed toward two kinds of workpieces by means of a complex machining machine tool as shown in Fig.25;

Figs.67 and 68 are views for showing the another example of the process at which the chucked workpiece machining is successively performed toward two kinds of workpieces by means of a complex machining machine tool as shown in Fig.25;

Figs.69 and 70 are views for showing the another example of the process at which chucked workpiece machining is successively performed toward two kinds of workpieces by means of a complex machining machine tool as shown in Fig.25;

Fig.71 is a view for showing a example of driving structure of a spindle stock in a complex machining machine tool;

Fig.72 is a top view of a complex machining machine tool;

Fig.73 is a view for showing the another example of a driving structure of a spindle stock in a complex machining machine tool;

Figs.74 through 81 are views for showing the way of bar shaped workpiece machining by means of a complex machining machine tool as shown in Fig.71;

Figs.82 through 88 are views for showing the way in which a long and slender sized shaft workpiece is machined by means of a complex machining machine tool as shown in Fig.71;

Figs.89 and 90 are views for showing the way of barfeeder machining by means of a complex machining machine tool as shown in Fig.71;

Fig.91 is a view for showing an embodiment of a driving method of the spindle stocks in a complex machining machine tool;

Figs.92 through 99 are views for describing the way of a machining of a long and slender shaft workpiece;

Fig.100 is a control block diagram for showing an example of a complex machining machine tool;

Fig.101 is a top view of a complex machining machine tool as shown in Fig.100;

Figs.102 through 109 are views for showing the way of a machining of a workpiece making use of a embodiment of a machining control method in a complex machining machine tool;

Fig.110 is a view seen by the arrow WQ toward a workpiece in Fig.104;

Fig.111 is a view seen by the arrow WR toward a workpiece in Fig.108;

Fig.112 is a control block diagram for showing an example of a complex machining machine tool;

Fig.113 is a control block diagram for showing an example of a control circuit of a spindle driving motor;

Fig.114 is a schematic view of a part of a spindle stock;

Fig.115 is a control block diagram for showing an example of a machine tool for which a coordinates system control method is applied;

Fig.116 is a view for showing the relation of each coordinates system.

The preferred embodiment of the present invention will be described hereinafter according to the drawings.

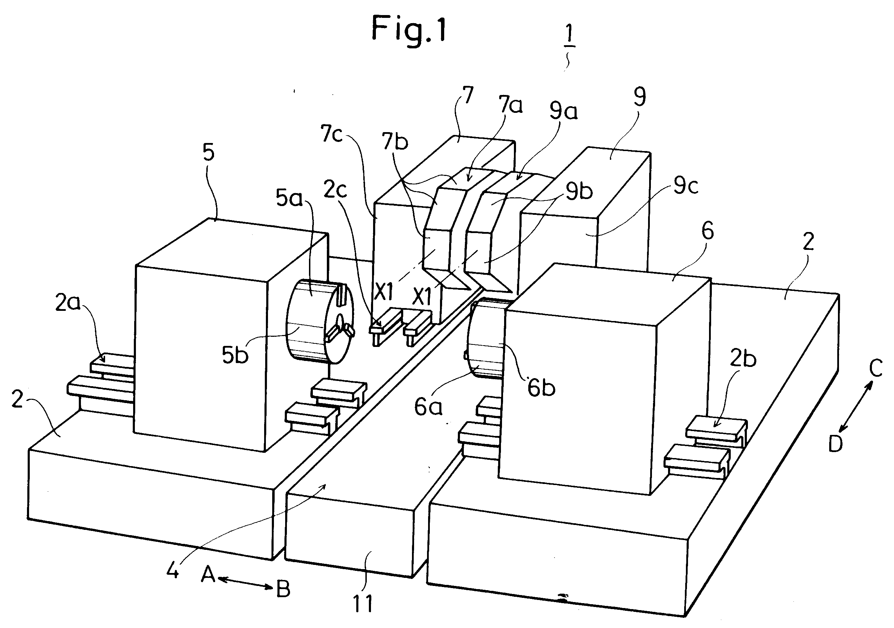

Fig.1 through Fig.4 indicate a suitable example of a complex machining machine tool.

A complex machining machine tool 1 has single frame 2 as shown in Fig.1 through Fig.3. At the center portion of a frame 2, a chip collecting space 4, having a width of W1, is formed in the direction of arrows C and D, in the shape of nearly parting the frame 2 in right and left direction of Fig.1. On both sides holding the chip collecting space 4 of the frame 2, guide rails 2a and 2b are separately formed in the direction of the arrows A and B, that is, in Z axis direction, respectively. On the each guide rail 2a, 2b, a spindle stock 5, 6 is movably provided in the direction of the arrows A and B along the guide rail 2a, 2b, respectively. At each spindle stock 5, 6, a workpiece spindle 5b, 6b installing the workpiece holding means, such as a chuck 5a, 6a and the like, is rotatably supported by the drive motor being stored in the each spindle stock 5, 6. The workpiece spindle 5b and 6b are provided in the form of facing mutually on Z axis, and in such a manner that the center of each rotation corresponds each other, as shown in Fig.3. More specifically, on the frame 2, guide rails 2a and 2d are formed in the shape of holding the chip collecting space 4 and facing mutually, in the X axis direction which is perpendicular toward the Z axis direction, that is, in the direction of the arrows C and D.

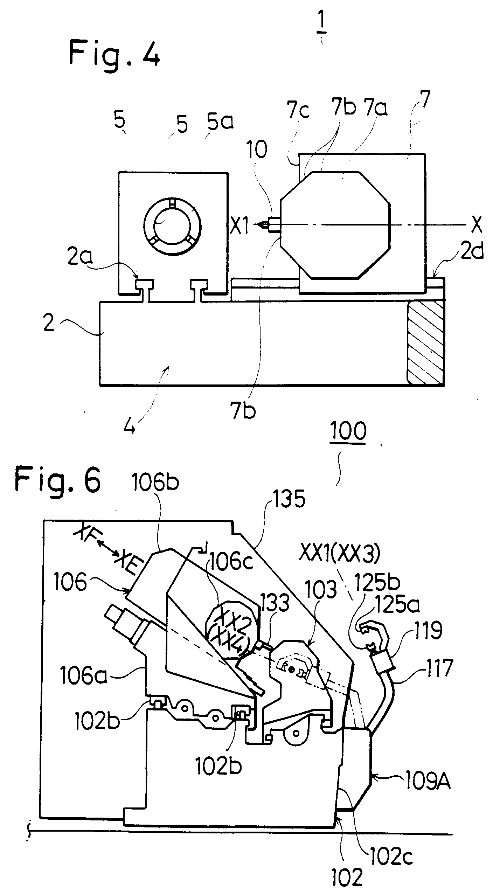

On the each guide rail 2c, 2d, the tool rest 7, 9 is movably and drivably provided only in the directions of arrows C and D, along the guide rail 2c, 2d respectively. At a tool rest 7, 9, each turret 7a, 9a is provided being free to index and rotate in such a manner of facing mutually, with a rotation axis RA set up in parallel with Z axis as its center, in the directions of arrows E and F, as shown in Fig,3. Each turret 7a, 9a is provided in shape of projecting inside of the tool rest 7, 9 in Fig.3, that is, above the chip collecting space 4. More specifically, a tool installation surface 7b, 9b of each turret 7a, 9a is projectly provided in the further negative direction on X axis, that is in the D direction, to the front face of the tool rest 7c, 9c which is most projectly positioned in the negative direction on the X axis of the tool rest 7, 9, when each tool installation surface 7b, 9b positions a machining position X1, as shown in Fig.1 and Fig.4. With each tool installation surface 7b, 9b, plural of tools 10, such as a rotation tool and a turning tool and the like, are attached respectively.

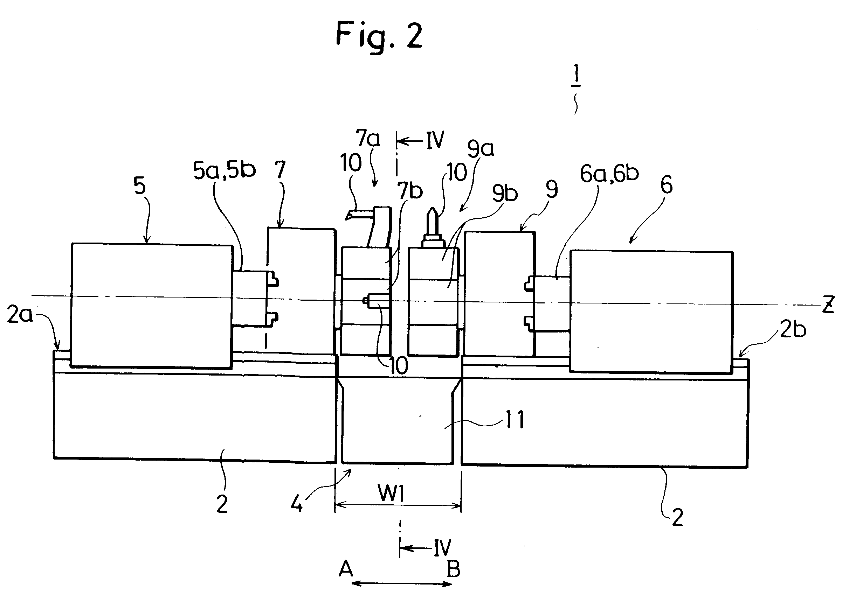

In the chip collecting space 4, a chip collecting bucket 11 is provided enabling to insert and pull out in the direction of the arrows C and D of Fig.3, as shown in Fig.2.

With the above-described constitution of the complex machining machine tool 1, in the case that a workpiece is machined using the complex machining machine tool 1, a workpiece to be machined is held by each chuck 5a, 6a of the spindle stock 5, 6 respectively, or is held between chucks 5a and 6a of the spindle stock 5, 6, as shown in Fig.1 through Fig.4. Thereafter, the workpiece spindle 5b, 6b is rotated with X axis as its center. In the foregoing state, the spindle stock 5, 6 is moved in the directions of arrows A and B along the guide rail 2a, 2b. And the turret 7a, 9a of the tool rest 7, 9 is rotated respectively. Next, the tool installation surface 7b, 9b which is installed the tool 10 using for machining is indexed and positioned at the predetermined machining position X1. At the time the tool 10 is indexed, the tool rest 7, 9 is moved along the guide rail 2c, 2d in the direction arrows C and D, that is, in the X axis direction respectively to perform the predetermined machining toward the workpiece which is installed in the workpiece spindle 5b, 6b.

In the case that a workpiece is installed in each workpiece spindle 5b, 6b, each workpiece spindle 5b, 6b is driven and controlled in the shape of mutual independence. Its rotating speed, feed rate and feed direction in the Z axis direction and the like, are also driven and controlled in such a manner each spindle stock 5, 6 is independent. It is naturally that the tool rest 7, 9 which is installed the tool 10 for machining of the workpiece is driven and controlled in the shape of being independent in the X axis direction. But it is obvious that the turret 7a, 9a projects its tool installation surface 7b, 9b above the chip collecting space 4 and that the turret 7a, 9a moves together with the tool rest 7, 9 only in the X axis direction, as shown in Fig.3. Therefore, the area that the tip of the tool 10 which is installed in the turret 7a, 9a moves together with the movement of the tool rest 7, 9 in the X axis direction, is limited to the upper space of the chip collecting space 4. Then, the tool 10 naturally contacts a workpiece at the position of projecting on the chip collecting space 4 to perform the machining. The chips which are produced in result are immediately fell and collected in a chip collecting bucket 11 which is disposed at the chip collecting space 4 being in the lower part. The machining area MA that the tool 10 is contacted with a workpiece to perform the machining, is almost located on the chip collecting space 4 in view of grade level as shown in the hatching part of Fig.3. Since the tool installation surface 7b, 9b projects from the front face 7c, 9c of the tool rest 7, 9 in the negative direction on the X axis, that is, in the arrow D direction, the machining movements are performed smoothly without interference of a workpiece and the tool rest 7, 9 at the time of machining.

On the other hand, in the case that the machining is performed in such a manner that a workpiece is held between both workpiece spindles 5b and 6b, the workpiece spindle 5b and 6b are synchronously rotated and driven. At the same time, the work piece spindles 5b and 6b are also synchronously moved in the direction of arrows A and B. In the foregoing state, the tool rest 7 and 9 are moved and controlled in shape of being independent of each other in the direction of the arrows C and D to perform the machining to the workpiece by means of the turrets 7a and 9a.

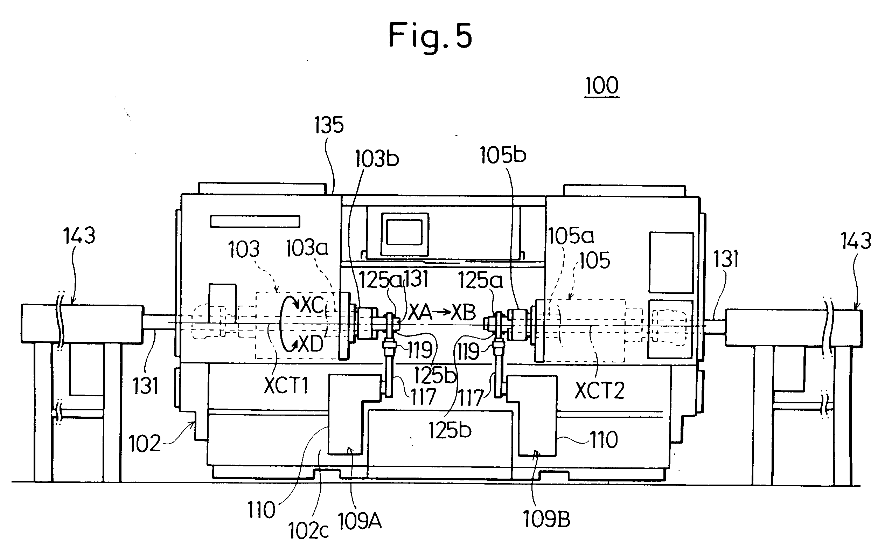

Another embodiment of the complex machining machine tool will be described in Fig.5 through Fig.24.

The complex machining machine tool 100 has a machine body 102, as shown in Fig.5. On the machine body 102, the spindle stock 103, 105 is faced each other in the shape of corresponding the shaft center XCT1 and XCT2 of the spindle 103a, 105a, as will be described later, and is movably and drivably provided in the direction of arrows XA and XB (that is, in the Z axis direction). In the spindle stock 103, 105, each spindle 103a, 105a is rotatably and drivably provided with each shaft center XCT1, XCT2 as its center in the directions of arrows XC and XD respectively. In the spindle 103a, 105a is installed each chuck 103b, 105b.

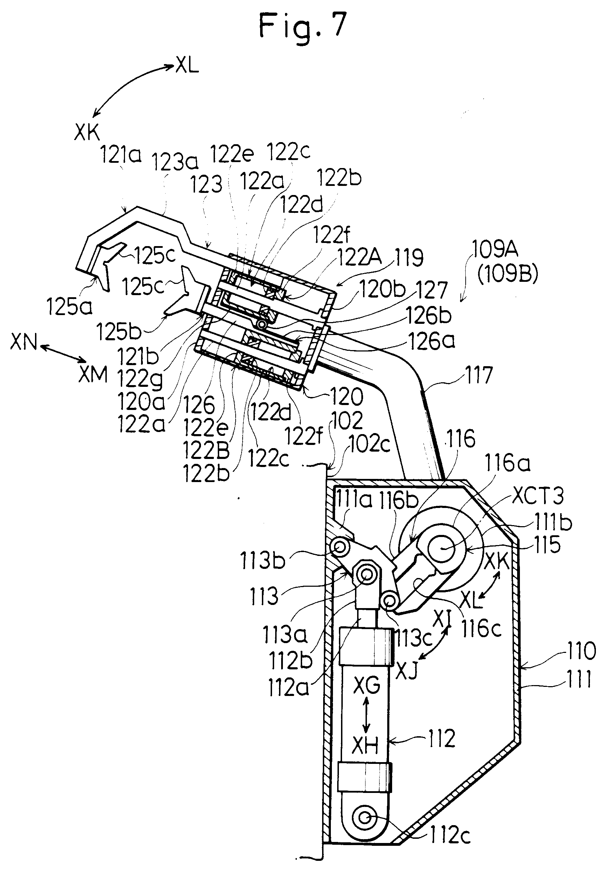

On the machine body 102, two carriages (as shown only one carriage in Fig.6) which constitutes the tool rest 106, 106 being provided in the shape of corresponding with each spindle 103a, 105a are provided movably and drivably through a guide member 102b, 102b in the vertical direction toward the sheet of the figure (that is, in the direction arrows XA and XB of Fig.5.), as shown in Fig.6,respectively. On each carriage 106a as shown in Fig.6, a main body of tool rest 106b being composed of the tool rest 106 is provided movably and drivably in the direction of XE and XF, respectively. This direction is the vertical direction of arrows XA and XB, that is, Z axis direction. With each main body of the tool rest 106b, the tool installation portion 106c, enabling to install plural of tools, being a type of turret, is provided rotatably and drivably.

By the way, at the front surface 102c of the machine body 102 in Fig.5, two loading apparatus 109A and 109B are installed in shape of making a pair of the spindle stocks 103 and 105 respectively. The loading apparatus 109A and 109B have a body 110, an arm 117 and a hand 119, and the like. That is, in the front surface 102c of the machine body 102 as shown in Fig.7, the body 110 is installed. The body 110 has a casing 111 being composed of a shape of a box. In the casing 111, the arm turning cylinder 112 is installed through a pin 112c. With the arm turning cylinder 112, rod 112a is supported being free to project and to retrocede in the directions of arrows XG and XH. At the edge portion of the rod 112a in the figure, a connecting member 112b is installed. At the upper left hand portion of the arm turning cylinder 112 in Fig.7, the lever support portion 111a of the casing 111 is provided. With the lever support portion 111a, the lever 113 is supported in shape of being free to turn through the pin 113b in the directions of arrows XI and XJ. In the center portion of the lever 113 in Fig.7, the connecting member 112b which is installed in the rod 112a of the arm turning cylinder 112 is installed through the pin 113a. Furthermore, at the right edge portion of the lever 113 in the figure, the roller 113c is rotatably provided.

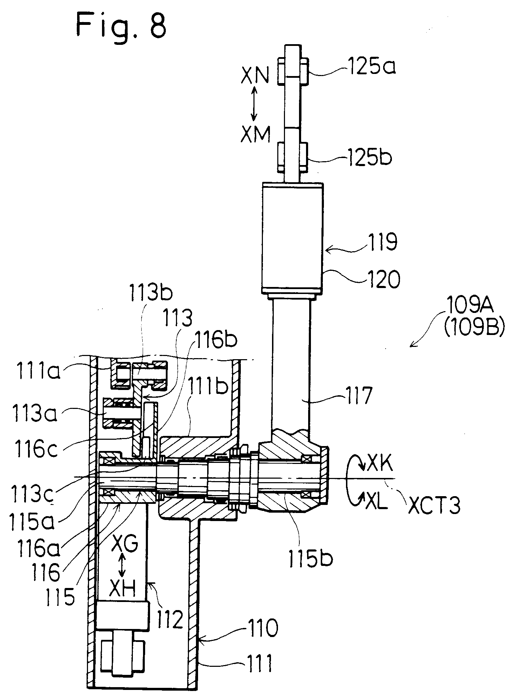

At the oblique portion of the right hand over the arm turning cylinder 112 in Fig.7, the bearing portion 111b of the casing 111 is disposed. With the bearing portion 111b, engaging shaft 115 projects its right edge portion 115b in the figure to the outside of the casing 111, as shown in Fig.8, and is rotatably supported with the shaft center XCT3 of the shaft 115 as its center in the directions of arrows XK and XL. With the left edge portion 115a of the engaging shaft 115 in the figure, the engaging member 116 is installed through a boss portion 116a of the engaging member 116. With the boss portion 116a, a plate 116b being composed of the engaging member 116 is provided in the shape of jutting out in a right-angle direction toward the shaft center XCT3 of the engaging shaft 115. With the plate 116b, the engaging slot 116c is formed. And the roller 113c of the lever 113 is fitted in and engaged with the slot 116c in the shape of being free to turn.

At the right edge portion 115b of the engaging shaft 115 in Fig.8, the arm 117 is installed in shape of being able to oscillate together with the engaging shaft 115 in the directions arrows XK and XL. At the edge portion of the arm 117 in Fig.7, the hand 119 is provided. The hand 119 has the main frame 120 having the form of a box. With the main frame 120, the click portions 121a and 121b for holding the workpiece are provided. The click portion 121a, 121b has the driving cylinder 122A, 122B, the click 125a, 125b and the like, respectively. Two driving cylinders 122A and 122B are provided in the main frame 120. The driving cylinder 122A, 122B has the support rod 122a, the piston 122b and the cylinder 122c, and the like, respectively. The support rod 122a, 122a of the driving cylinder 122A, 122B is provided in such a manner the upper and lower portion of the support rod 122a in Fig.7 are connected with the upper plate 120a and the lower plate 120b of the main frame 120, respectively. At the center portion of each support rod 122a, each piston 122b is stationary disposed. Furthermore, with respective support rod 122a, a cylinder 122c is slidably engaged with the piston 122b through its inside surface of surrounding in the figure, and is provided being free to move in the up and down directions in Fig.7 along the support rod 122a. In the cylinder 122c, 122c, the oil chamber 122d is formed respectively in such a manner that the support rod 122a is covered. At the head portion 122e and the bottom portion 122f of each cylinder 122c, the pipes which are connnected with the hydraulic apparatus respectively (not shown) are connected in such a manner that the pressure oil is being able to supply with the oil chamber 122d. At the lower side surface of the cylinder 122c of the driving cylinder 122A in Fig.7, plural cogs 122g are formed at the predetermined intervals in the directions of arrows XM and XN. With these cogs 122g, the cog wheel 127 which is rotatably provided, are meshed.

Furthermore, at the upper side surface of the cylinder 122c of the driving cylinder 122A in Fig. 7, a support bar 123 which is formed at reverse J-form, is movably provided together with the cylinder 122c in the directions of arrows XM and XN. With the support bar 123, the bending portion 123a is formed in shape of projecting from the main body 120 in the arrow XN direction. At the top portion of the bending portion 123a in the figure, the click 125a is provided. At the click 125a, the workpiece holding portion 125c is formed in the shape of V-form in the right angles direction toward the paper surface in Fig.7.

At the upper side surface of the cylinder 122c of the driving cylinder 122B in Fig.7, the support bar 126 is movably provided together with the cylinder 122c in the directions of arrows XM and XN. With the support bar 126, the click 125b projects from the main body 120 in the direction as shown by arrow XN, and is installed in the shape of facing to the click 125a. With the click 125b, the workpiece holding portion 125c is formed in the shape of V-form in the right angles direction toward the paper surface in Fig.7. At the right edge portion of the support bar 126 which is inserted in the main body 120 in the figure, the stepped portion 126a is disposed in the shape of facing to the cog wheel 127. At the stepped portion 126a, plural cogs 126b are formed at the predetermined intervals in the directions of arrows XM and XN. The cogs 126b are engaged with the cog wheel 127.

Furthermore, the cover 135 is provided in the shape of covering with the main body 102 of the complex machining machine tool 100, as shown in Fig.6. And, at both right side and left side of the complex machining machine tool 100 in Fig.5, a bar feeder 143, 143 is provided in such a manner that the bar shaped workpiece is being able to supply with to the chuck 103b, 105b through the spindle 103a, 105a, respectively.

With the above-described constitution of the complex machining machine tool 100, in the case of a workpiece is required to be machined, at first, the workpiece 131 to be machined is installed in the chuck 103b by using the loading apparatus 109A of left hand in Fig.5. For the sake of this, the operator inserts the workpiece 131 between the clicks 125a and 125b of the hand 119 which is positioned at the waiting position XX1 as shown by full line in Fig.6. In the foregoing state, the hydraulic apparatus (not shown) is driven to supply inside of the cylinder 122c with the pressure oil from the side of the bottom portion 122f of the driving cylinder 122A, as shown in Fig.7, and to drain the pressure oil in the oil chamber 122d from the side of the head portion 122e. At the same time, the pressure oil is supplied from the side of the head portion 122e of the driving cylinder 122B to the inside of the cylinder 122c, and the pressure oil in the oil chamber 122d is drained from the side of the bottom portion 122f. Then, the cylinder 122c of the driving cylinder 122A moves along the support rod 122a together with the support bar 123 in the direction as shown by the arrow XM in such a manner that it is pushed down by the supplied pressure oil and meshes with the cog wheel 127 and the surface of its the inside circumference in Fig.7 is slidably contacted with the piston 122b. At the same time, the cylinder 122c of the driving cylinder 122B moves along the support rod 122a together with the support bar 126 in the direction as shown by the arrow XN in such a manner that it is pushed up by the supplied pressure oil and meshes with the cog wheel 127 and the surface of its inside circumference in Fig.7 is slidably contacted with the piston 122b. Then, the click 125a which is installed in the support bar 123 moves in the direction as shown by the arrow XM in Fig.7, the click 125b which is installed in the support bar 126 moves in the direction as shown by the arrow XN. Accordingly, the workpiece 131 is held in the shape of gripping by the click 125a, 125b. Each click 125a, 125b is synchronously moved at equal speed for the use of the action of the cog wheel 127, the cog 122g, and 126b in the directions arrows XM and XN. As a result, the workpiece 131 is accurately held at the intermediate position in the directions of arrows XM and XN of the click 125a, 125b.

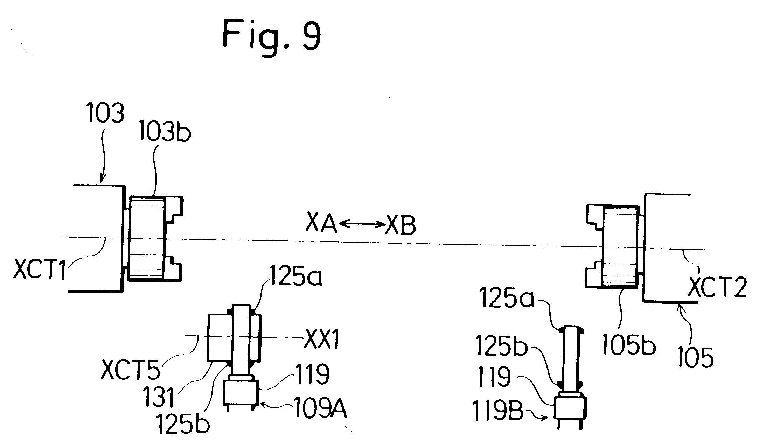

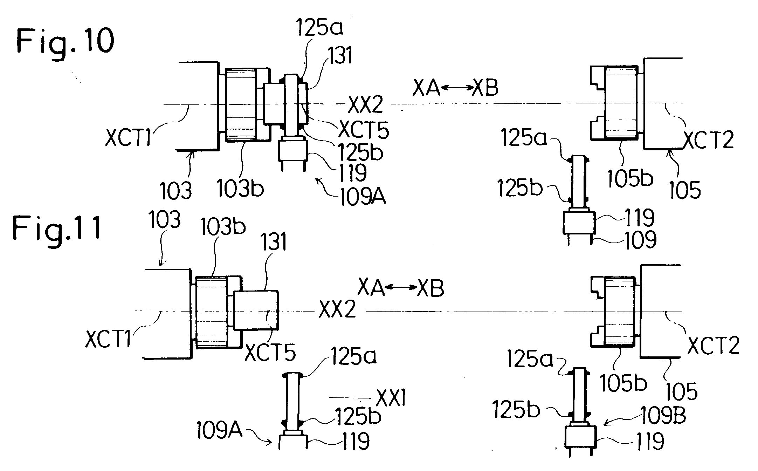

In this way, at the time that the workpiece 131 is held by the loading apparatus 109A as shown in Fig.9, the arm turning cylinder 112 of the loading apparatus 109A as shown in Fig.7, is driven to retract the rod 112a together with the connecting member 112b in the direction as shown by the arrow XH, and to position the rod 112a at the position which is indicated by full line in the figure. Then, the lever 113 rotates in the shape of being pulled down by the connecting member 112b, with the pin 113b as its center in the direction as shown by the arrow XJ. When the lever 113 rotates in the direction as shown by the arrow XJ, the roller 113c which is provided with the right edge portion of the lever 113 in the figure, also rotates in the direction as shown by arrow XJ while moving to rotate in the engaging ditch 116c being formed into the engaging member 116. At the time, the engaging member 116 rotates in the shape of being pushed and pressed to the lower part in the figure by the roller 113c, together with the engaging shaft 115, with the shaft center CT3 of the shaft 115 as its center in the direction as shown by the arrow XK. As a result, the hand 119 moves through the arm 117 in the direction as shown by the arrow XK in the state that the workpiece 131 is held by the hand 119, and is positioned at the workpiece delivery position XX2 facing to the chuck 103b as shown in Fig.10.

Next, in the state that the chuck 103b is opened, the driving motor (not shown) for driving the spindle stock 103 in the Z axis direction (in the directions arrows XA and XB), is driven at the lower torque to move the spindle stock 103 together with the chuck 103b toward the hand 119 in the direction as shown by arrow XB. Then, the chuck 103b abuts against the left edge portion of the workpiece 131 which is held by the hand 119 in Fig.10. Furthermore, the chuck 103b pushes the workpiece 131 in the direction as shown by the arrow XB. At this time, since the driving motor 103 moving the spindle stock 103 in the direction as shown by the arrow XB, is driven at lower torque, the force which the spindle stock 103 pushes the workpiece 131 through the chuck 103b in the direction as shown by the arrow XB is weak, so that the hand 119 and the like, is not deformed by the pushing force.

In this way, when the workpiece 131 is pushed against the chuck 103b, the chuck 103b is closed, and the workpiece 131 is held by means of the chuck 103b. Thereafter, in this state, the pressure oil is supplied with the inside of each cylinder 122c from the head portion 122e of the driving cylinder 122A, and the bottom portion 122f of the driving cylinder 122B, as shown in Fig.7. At the same time, the pressure oil which has been supplied with inside of the cylinder 122c heretofore is drained through the bottom portion 122f of the driving cylinder 122A, and the head portion 122e of the driving cylinder 122B. Then, the cylinder 122c of the driving cylinder 122A moves along the support rod 122a in the direction as shown by the arrow XN together with the support bar 123 in such a manner that it is pushed up by the pressure oil which is supplied with the inside of the cylinder 122c and meshes with the cog wheel 127 and the surface of its inside circumference in Fig.7 is slidably contacted with the piston 122b. At the same time, the cylinder 122c of the driving cylinder 122B moves along the support rod 122a in the direction as shown by the arrow XM together with the support bar 126 in such a manner that it is pushed down by the supplied pressure oil and meshes with the cog wheel 127 and the surface of its inside circumference in Fig.7 is slidably contacted with the piston 122b. So, the click 125a and the click 125b are synchronously opened and moved in the directions of arrows XN and XM, so that the holding relation between the workpiece 131 and the click 125a, 125b is released.

In this way, at the time that the workpiece 131 is held with the chuck 103b as shown in Fig.10, and that holding retation between the workpiece 131 and the hand 119 of the loading apparatus 109A is released, the driving motor for driving the spindle stock 103 in the Z axis direction is driven to move the spindle stock 103 the predetermined distance together with the chuck 103b in the direction gone away from the hand 119, that is, in the direction as shown by the arrow XA. Furthermore, in this state, the arm turning cylinder 112 as shown in Fig.7 is driven, and the rod 112a is projected together with the connecting member 112b in the direction as shown by the arrow XG. Then, the lever 113 turns with the pin 113b as its center in the direction as shown by the arrow XI in the shape of pushing by the connecting member 112b. When the lever 113 turns in the direction as shown by the arrow XI, the roller 113c of the lever 113 also turns in the direction as shown by the arrow XI, while moving to rotate in the engaging ditch 116c of the engaging member 116. Then, the engaging member 116 rotates together with the engaging shaft 115 with the shaft center XCT3 of the shaft 115 as its center in the direction as shown by the arrow XL in the shape of being pushed against the upper potion of the figure by the roller 113c. As a result, the hand 119 is moved through the arm 117 in the direction as shown by the arrow XL, and is positioned at the waiting position XX1 as shown by full line in Fig.11.

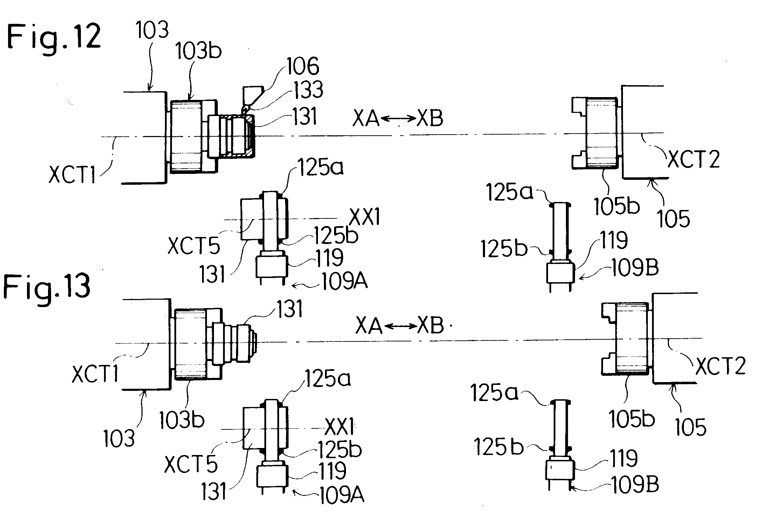

Next, the chuck 103b as shown in Fig. 12 is rotates together with the work piece 131. In this state, the machining of the first routine is performed toward the workpiece 131 by means of the tool 133 in such a manner that the tool rest 106 corresponding to the spindle 103a is moved and driven together with the tool 133 in the direction as shown by the arrow XE in Fig.6 and in the directions as shown by the arrows XA and XB (Z axis direction) in Fig.5 appropriately. During the machining, the workpiece 131 to be machined next is supplied with the hand 119 of the loading apparatus 109A as shown in Fig.12 to hold the workpiece 131.

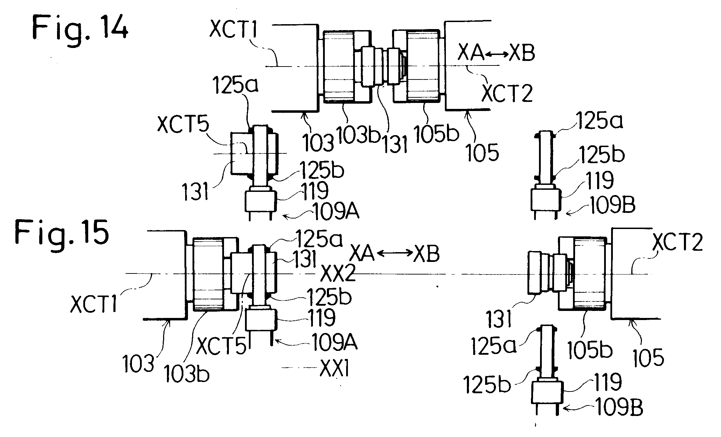

In this way, as shown at the left hand in Fig.13, when the first routine is performed toward the workpiece 131, the spindle stock 103 is moved predetermined distance together with the chuck 103b in the direction as shown by the arrow XB. At the same time, the spindle stock 105 is moved the predetermined distance in the direction as shown by the arrow XA, in the state that the chuck 105b is opened. By this, the spindle stock 103, 105 become closer each other. Then, the right edge portion of the work piece 131 which is held by the chuck 103b and to which the first routine finished, in Fig.14, is inserted to the chuck 105b. Therefore, the chuck 105 is closed and the right edge portion of the workpiece 131 in the figure is held. Furthermore, the chuck 103b is opened to release the holding relation between the chuck 103b and the workpiece 131. In this state, the spindle stock 103 is moved predetermined distance together with the chuck 103b in the direction as shown by the arrow XA, as shown in Fig.15. And, the spindle stock 105 is moved predetermined distance, in the state that the workpiece 131 is held with the chuck 105b, in the direction as shown by the arrow XB, to perform the delivery of the workpiece 131 between the spindle stocks 103 and 105.

Thereafter, in this state, the chuck 105b is rotated together with the workpiece 131, and the tool rest 106 corresponding to the spindle 105a is moved and driven together with the tool 133 in the direction as shown by the arrow XE in Fig.6 and in the directions as shown by the arrows XA and XB (Z axis direction) in Fig.5, apparatently. In this way, the second routine of the machining is performed toward the workpiece 131 by means of the tool 133 as shown in Fig.6. And during this time, the workpiece 131 is supplied with the chuck 103b of the spindle stock 103 by means of the loading apparatus 109A, to perform the first routine of the machining toward the workpiece 131, as shown in Fig.15.

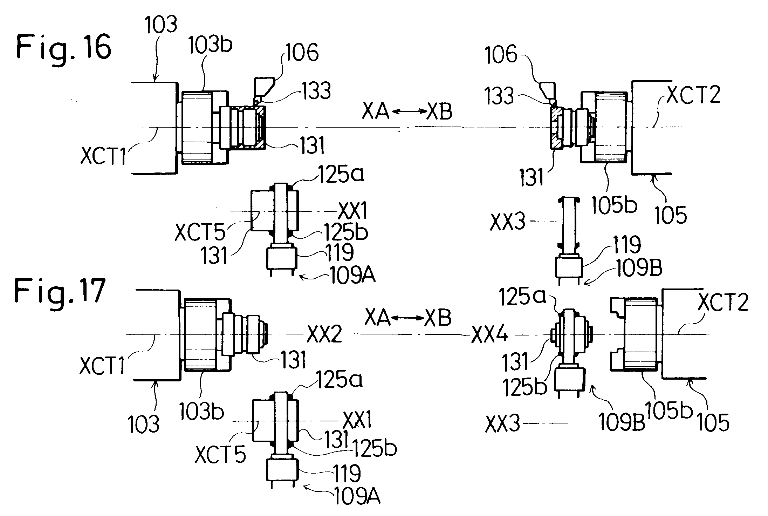

In this way, when the second routine of the machining is performed toward the workpiece 131 holding by the chuck 105b, the arm turning cylinder 112 of the lading apparatus 109B is driven to retract the rod 112a in the direction as shown by the arrow XH. As a result, the arm 117 is moved together with the hand 119 in the direction as shown by the arrow XK to position at the workpiece delivery position XX4 facing to the chuck 105b as shown in Fig. 17. In this state, the spindle stock 105 is moved and driven in the direction as shown by the arrow XA in the state that the workpiece 131 after the machining is held by the chuck 105b. Then, the workpiece 131 is positioned at the position which is inserted between the click 125a and 126b of the hand 119. In this state, the clicks 125a and 125b are closed to hold the workpiece 131. Next, the holding relation between the workpiece 131 and the chuck 105b is released. In this state, the spindle stock 105 is moved together with the chuck 105b in the direction as shown by the arrow XB. Furthermore, the hand 119 is turned and driven together with the workpiece 131 after the machining in the direction as shown by the arrow XL in Fig.7, to position the waiting position XX3 as shown by full line in Fig.6. In this state, the holding relation between the workpiece 131 after the machining and the hand 119 of the loading apparatus 109B is released, and the workpiece 131 is detached from the hand 119.

In the avobe-described embodiment, when the delivery of the workpiece 131 between the spindle stocks 103 and 105 is performed, it had mentioned that the spindle stock 103 is moved in the direction as shown by the arrow XB, and the spindle stock 105 is moved in the direction as shown by the arrow XA, respectively, so that the spindle stocks 103 and 105 are approached each other. However, in the method of approach of the spindle stocks 103 and 105, that isn't the thing. Any method is available if these spindle stocks 103 and 105 are able to be approached each other without inconvenience. For example, it may be that these spindle stocks 103 and 105 are approached each other to perform the delivery of the workpiece 131, in such a manner that the spindle stock 105 only is moved toward the spindle stock 103 in the direction as shown by the arrow XA and the spindle stock 103 is not moved in Z axis direction (directions as shown by the arrows XA and XB). On the contrary, it may be that the spindle stocks 103 and 105 are approached each other, in such a manner that the spindle stock 103 only is moved toward the spindle stock 105 in the direction as shown by the arrow XB and the spindle stock 105 isn't moved in the Z axis direction.

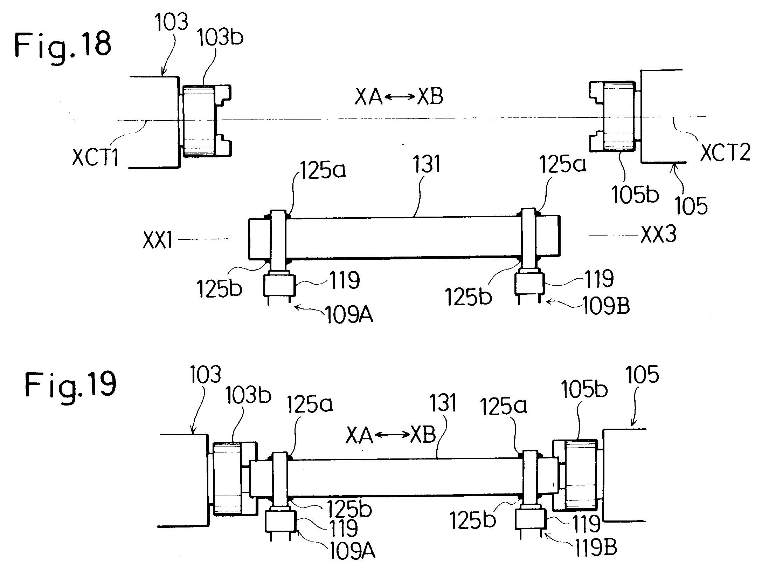

In particular, in the case of machining of the long-sized workpiece 131, the loading apparatus 109A, 109B is positioned at each waiting position XX1, XX3 to adjust each hand 119, 119, as shown in Fig.18. In this state, the workpiece 131 is held by both the hands 119 and 119. The spindle stock 103 is moved in the direction as shown by the arrow XA, and the spindle stock 105 is moved in the direction as shown by the arrow XB, respectively so as to be able to supply the workpiece 131 between the chucks 103b and 105b. Then, the interval between the chucks 103b and 105b is made wider by the predetermined distance than the length of the workpiece 131 in the directions as shown by the arrows XA and XB. Next, in this state, each arm 117, 117 of the loading apparatus 109A, 109B, as shown in Fig. 7 is synchronously turned and driven together with the hand 119, 119 in the direction as shown by the arrrow XK.

Then, the hand 119, 119 is positioned at position facing to each chuck 103b, 105b of the spindle stock 103, 105 as shown in Fig. 19, respectively. And, the workpiece 131 which is held by the hand 119, 119 is positioned between the chucks 103b and 105b. In this state, the spindle stock 103 is moved together with the chuck 103b in the direction as shown by the arrow XB, the spineld 105 is moved together with the chuck 105b in the direction as shown by the arrow XA, respectively. So, the workpiece 131 is held in the shape of being gripped by the chuck 103b, 105b. Next, the chuck 125a, 125b of each hand 119 of the loading apparatus 109A, 109B is opened to release the holding relation between the hand 119, 119 and the workpiece 131. Furthermore, in this state, each arm 117, 117 of the loading apparatus 109A, 109B, as shown in Fig.7, is turned and driven together with each hand 119, 119 in the direction as shown by the arrow XL to being returned at the waiting positions XX1, XX3, as shown in Fig.18.

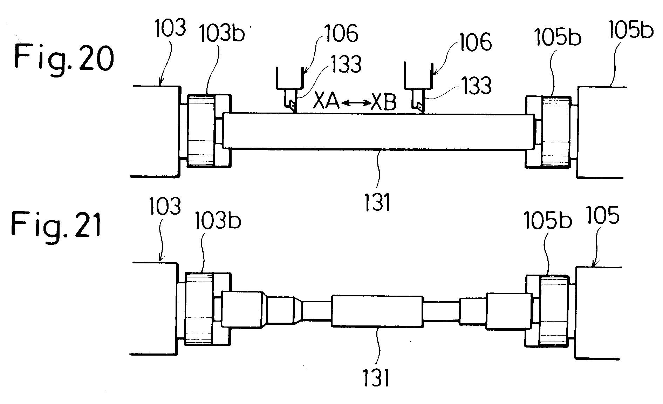

In this way, when the long-sized workpiece 131 is held by the chuck 103b, 105b, the chuck 103b, 105b is synchronously rotated together with the workpiece 131. Next, in this state, the tool rest 106, 106 as shown in Fig. 6 is moved and driven in the directions as shown by the arrows XE and XF and the arrows XA and XB as shown in Fig.5 to machine the workpiece 131 in the predetermined shape, by the tool 133, such as a bite, which is installed in each tool rest 106 as shown in Fig.20.

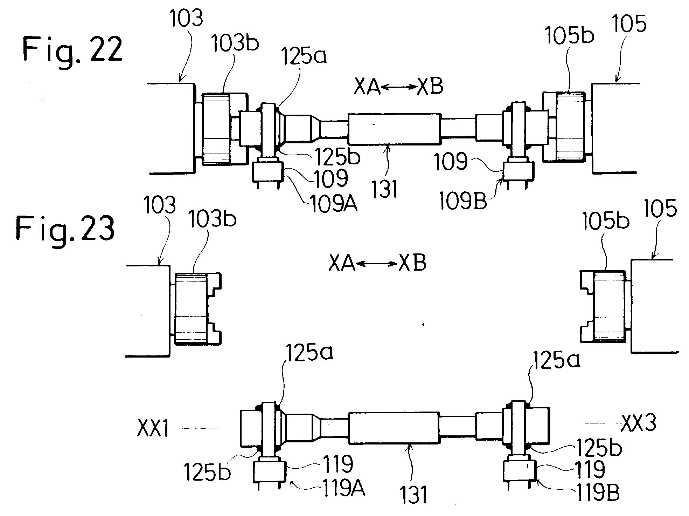

In this way, when the long-sized workpiece 131 is machined in the predetermied shape as shown in Fig.21, the workpiece 131 after the machining is held by each hand 119, 119 of the loading apparatus 109A, 109B, as shown in Fig.22. Furthermore, in this state, the spindle stock 103 is moved in the direction as shown by the arrow XA, the spindle stock 105 is moved in the direction as shown by the arrow XB to retract from the workpiece 131. Next, each hand 119, 119 of the loading apparatus 109A, 109B is synchronously turned and driven together with the workpiece 131 in the direction as shown by the arrow XL, as shown in Fig.7, to position the workpiece 131 at the waiting position XX1, XX3 as shown in Fig.23. In this state, the holding relation between each hand 119, 119 and the workpiece 131 after the machining is released to carry the workpiece 131 to the predetermined place by taking down the workpiece 131.

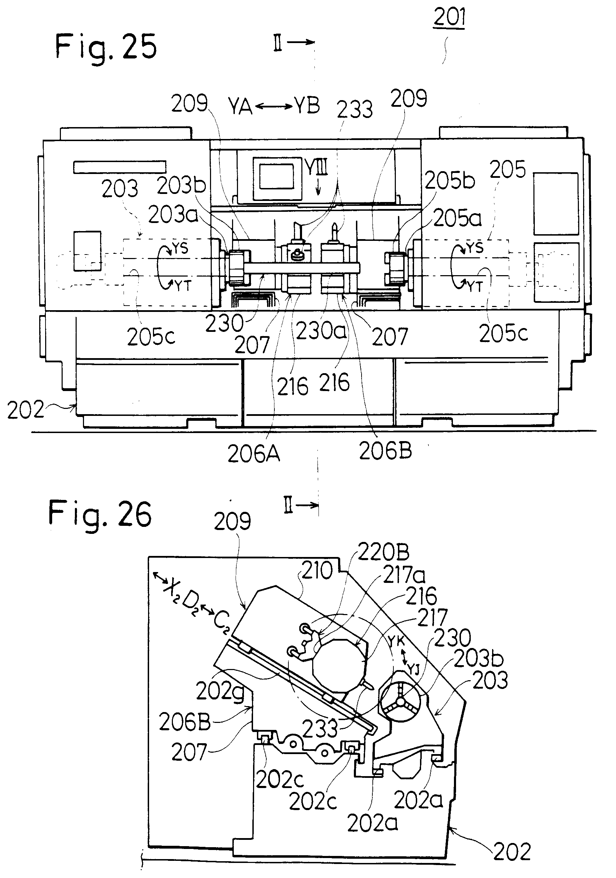

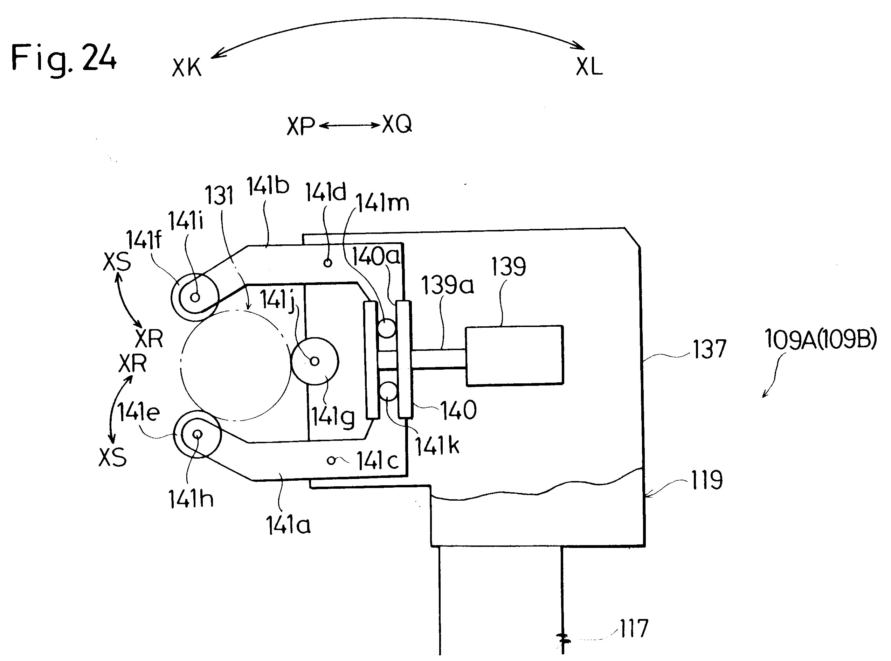

In the above-described embodiment, it has been mentioned the constitution that the click 125a, 125b having the workpiece holding portion 125c, 125c which is formed in V-shape, is provided being free to open, close and drive as the hand 119, as shown in Fig.7, and workpiece 131 is held in the shape of being gripped between each workpiece holding portion 125c of the click 125a, 125b. Of course, that isn't the thing, any constitution is available if the hand 119 can hold the workpiece 131 certainly. For example, it may be the constitution that the rollers are rotatably provided as the hand 119 at the front edge portion of the click as shown in Fig.24. Hereinafter, the hand 119 having the rollers will be explained on a basis of Fig.24.

The hand 119 has main body 137 which is provided at the top portion of the arm 117 as shown in Fig.24. In the main body 137, the driving cylinder 139 is provided. With the driving cylinder 139, the rod 139a is supported being free to project and retrocede in the right and left directions in the figure, that is, in the directions as shown by the arrow XP and XQ. At the top portion of the rod 139a, the engaging member 140 is installed. At the engaging member 140, the ditch 140a is formed. In the ditch 140a, the roller 141k, 141m which is rotatably supported by the click 141a, 141b as described later is fitted being free to be slidable and engaged. The click 141a, 141b is provided being free to turn with the main body 137 through the pin 141c, 141d in the directions as shown by the arrows XR and XS. At each top portion of the click 141a, 141b, each roller 141e, 141f is rotatably provided through the pin 141h, 141i. With the main body 137 as shown in Fig.24, the roller 141g is rotatably provided through the pin 141j. And, the left edge portion of the roller 141g in the figure is projected from the main body 117 in the direction as shown by the arrow XP.

A barfeeder machining is able to be performed toward the workpiece 131 which is a bar-shaped workpiece, making use of the loading apparatus 109A, 109B having the hand 119 as described before, and the barfeeder 143, 143 which is disposed at right and left sides both of the complex machining machine tool 100 in Fig.5.

That is, in case of the barfeeder machining, at first, the spindle stock 103, 105 as shown in Fig.5 is moved and driven in the directions as shown by the arrows XA and XB, respectively. And, the chuck 103b is positioned at the position having the predetermined distance from the hand 119 of the loading apparatus 109A in the direction as shown by the arrow XA. Similarly, the chuck 105b is positioned at the position having the predetermined distance from the hand 119 of the loading apparatus 109B in the direction as shown by the arrow XB. In this state, the barfeeder 143, 143 as shown in Fig.5 is driven to deliver the workpiece 131, 131 toward each chuck 103b, 105b through each spindle 103a, 105a. It is set that the workpiece 131, 131 projects its edge with the predetermined length from the chuck 103b in the direction as shown by the arrow XB, and projects its edge with the predetermined length form the chuck 105b in the direction as shown by the arrow XA.

Next, the spindle 103a, 105a is rotated and driven respectively, to rotate the workpiece 131, 131 through the chuck 103b, 105b. At the same time, each tool rest 106 as shown in Fig.6 is moved and driven together with the tool 133 in the direction as shown by the arrows XA and XB, and in the direction as shown by the arrows XE and XF as shown in Fig.6, to machine the outside cylindrical portion of the workpiece 131, 131 as shown in Fig.5.

In this way, at the time that the machining of the workpiece 131, 131 is finished, the workpiece 131, 131 is cut off respectively in such a manner that the machined portion of the workpiece 131, 131 is apart from the other raw portion. For the sake of this, at first, the spindle stock 103 as shown in Fig.5 is moved together with the workpiece 131 in the directions as shown by the arrows XA and XB, the spindle stock 105 is moved together with the workpiece 131 in the directions as shown by the arrows XA and XB. Thereafter, each machined portion of the workpiece 131, 131 is positioned at the position facing to each hand 119, 119 (as shown in Fig.24) of each loading apparatus 109A, 109B. Each tool rest 106 as shown in Fig.6 is moved and driven together with the cutting-off tool 133 in the right angles direction toward the paper surface in the figure, that is, in the direction as shown by the arrow XA and XB in Fig.5 , to position each tool 133 at the position facing to the portion of the workpiece 131, 131 to be cut.

Next, the driving cylinder 139 of each hand 119 as shown in Fig.24 is driven to project the rod 139a, 139a together with the engaging member 140, 140 in the direction as shown by the arrow XP, respectively. Then, the click 141a, 141b of each hand 119 turns with the pin 141c, 141d as its center through the roller 141k, 141m and the ditch 140a of the engaging member 140 in the shape of being pushed by the rod 139a in the direction as shown by the arrow XS, and is opened.

In this state, each arm 117 of the loading apparatus 109A, 109B is turned and driven together with the hand 119, 119 in the direction as shown by the arrow XK to make the each machined portion of the workpiece 131, 131 as shown in Fig.5 fit in and engage between the clicks 141a and 141b of each hand 119. In this state, the driving cylinder 139 of each hand 119 as shown in Fig.24 is driven to make each rod 139a, 139a together with the engaging member 140, 140 retract in the direction as shown by the arrow XQ. Then, the click 141a, 141b turns with the pin 141c, 141d as its center through each roller 141k, 141m and the ditch 140a of the engaging member 140 in the shape of being pulled by the rod 139a in the direction as shown by the arrow XR. Then, each roller 141e, 141f of the click 141a, 141b just connects with the top end portion of the workpiece 131,131. Furthermore, each workpiece 131 is pushed toward the roller 141g to being gripped between the roller 141e, 141f and 141g.

In this way, when each worked portion of the workpiece 131 is supported by each hand 119, the spindle 103a, 105a as shown in Fig.5 is rotated and driven together with the workpiece 131, 131. At the same time, the tool rest 106, 106 is fed together with the cutting-off tool 133, 133 in the direction as shown by the arrow XE in Fig.6 to cut off the workpiece 131, 131, so that each machined portion of the workpiece 131, 131 is being apart from the other raw portion. On this occasition, since the workpiece 131, 131 is rotatably supported by the roller 141e, 141f and 141g of each hand 119 as shown in Fig.24, the hand 119 doesn't prevent the rotation of the spindle 103a, 105a and the cutting-off work of each workpiece 131 is performed without inconvienience. And, on this occasion, since the machined portion of each workpiece 131 is supported by the hand 119 in such a manner that the movement in the directions as shown by the arrows XA and XB is restricted, the machined portion doesn't fall from the hand 119.

In this way, when the machined portion of each workpiece 131 is cut off, each arm 117, 117 of the loading apparatus 109A, 109B as shown in Fig.24 is turned and driven in the direction as shown by the arrow XL in such a manner that the machined portion of the workpiece 131, 131 is supported with the hand 119, 119, to position each hand 119 at the waiting position XX1, XX3 as shown in Fig.6. Next, the click 141a, 141b of each hand 119 of the loading apparatus 109A, 109B is opened. The supporting relation between the hand 119, 119 and the machined portion of the workpiece 131, 131 is released. And the machined portion is took down from each hand 119 to carry out it to the predetermined place.

When the machined portion of each workpiece 131 is carried out, the bar feeder 143, 143 as shown in Fig.5 is driven. Thereafter, the workpiece 131, 131 is supplied to each chuck 103b, 105b through each spindle 103a, 105a to continue the predetermined barfeeder machining.

In the above-described embodyment, it had mentioned the case that the workpiece 131 after the first routine being held by the chuck 103b is delivered to the side of the spindle stock 105 in such a manner the spindle stocks 103 and 105 are approached each other by moving in the Z axis direction.

However, in the method of delivery of the workpiece 131, that isn't the thing. Any method is available if the workpiece 131 is able to be delivered from the side of the spindle stock 103 to the side of the spindle stock 105, certainly. For example, in the case that the workpiece 131 is a bar-shaped workpiece, and that the machining is performed while the workpiece 131 is supplied to the chuck 103b by the barfeeder 143 as shown at left hand in Fig.5, the holding relation between the workpiece 131 and the chuck 103b as shown in Fig.5 is released after the first routine. In this state, the barfeeder 143 is driven to move the workpiece 131 in the direction as shown by the arrow XB. Then, the top edge portion of the workpiece 131 is inserted in chuck 105b being opened. In this state, the workpiece 131 is held by the chucks 103b and 105b in such a manner the chucks 103b and 105b are closed. In this state, the predetermined portion of the workpiece 131 between the chucks 103b and 105b is cut off by the cutting-off tool 133, as described before. And the machining of the second routine is performed toward the workpiece 131 holding by the chuck 105b after the cutting. Furthermore, the workpiece 131 after the second routine is carried out to the predetermined carring place from the chuck 105b making use of the hand 119 of the loading apparatus 109B.

It may be that the delivery of the workpiece 131 is performed as follows. That is, after the first routine, the holding relation between the chuck 103b and the workpiece 131 is released. In this state, the workpiece 131 is held by the hand 119 of the loading apparatus 109B. Furthermore, in this state, the spindle stock 103 is moved in the direction as shown by the arrow XA in Fig.5 to pull the raw portion of the workpiece 131 out of the chuck 103b. Next, the holding relation between the workpiece 131 and the hand 119 is released. And, the spindle 105 is moved in the direction as shown by the arrow XA. The top edge portion of the workpiece 131 is held by the chuck 105b to cut off the workpiece 131. In this way, the method of the delivery of the workpiece 131 is completed.

Another embodiment of the complex machining machine tool will be described in Fig. 25 through Fig.70.

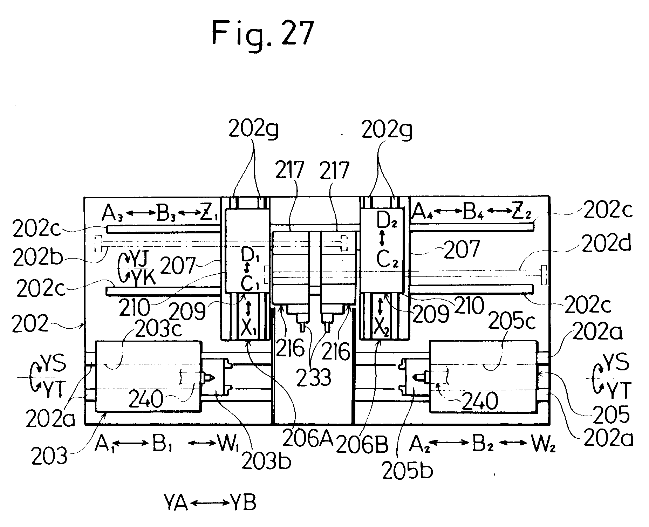

The complex machining machine tool 201 has the machine body 202 as shown in Fig.25. On the machine body 202, the spindle stocks 203 and 205 are opposing mutually. And the spindle stock 203, 205 is movably and drivably provided through the guide rail 202a, 202a as shown in Fig.27 in the direction as shown by the arrow $A_1$ and $B_1$ (that is, in the $W_1$ axis direction) and in the direction as shown by the arrow $A_2$ and $B_2$ (that is, in the $W_2$ axis direction). Each direction is the parallel direction toward the direction as shown by the arrow YA and YB. With the spindle stock 203, 205, the spindle 203a, 205a is rotatably and drivably provided in the direction as shown by the arrow YS and YT, as shown in Fig.25, respectively. In the spindle 203a, 205a, each chuck 203b, 205b is installed. In the spindle 203a, 205a, each through hole 203c, 205c is formed in the shape of penetrating the spindle 203a, 205a in the direction as shown by the arrow YA, YB. In the through hole 203c, 205c, each center 240, 240 is movably disposed in each spindle 203a, 205a and each chuck 203b, 205b, in the directions as shown by the arrow YA and YB, as shown in Fig.27.

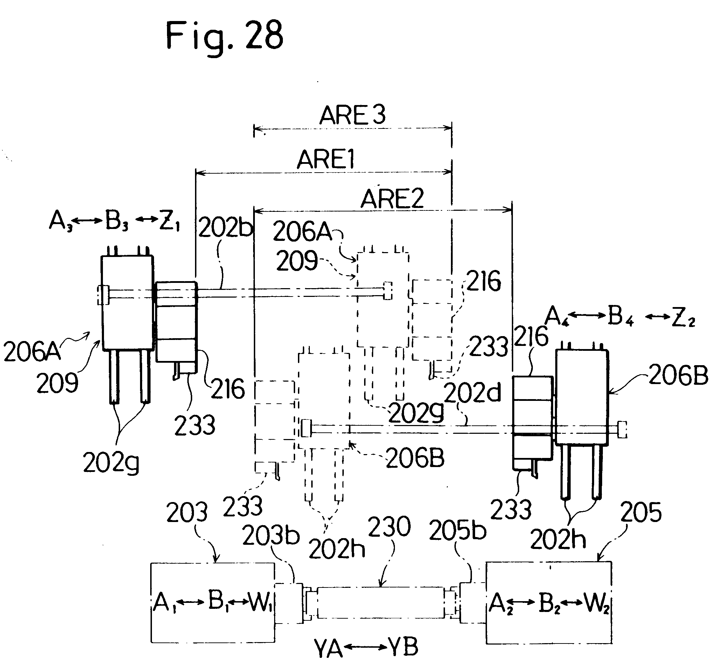

On the machine body 202, the carriage 207, 207 being composed of the tool rest 206A, 206B is movably provided through the guide rail 202c, 202c which is disposed in the right angles direction toward the paper surface in the figure as shown in Fig.26 (that is, the directions as shown by the arrows YA and YB in Fig.27), in the direction as shown by the arrows $A_3$ and $B_3$ (that is, in $Z_1$ axis direction) and in the direction as shown by the arrow $A_4$ and $B_4$ (that is, in $Z_2$ axis direction). Each direction is the parallel direction toward the direction as shown by the arrow YA and YB, respectively. With each carriage 207, 207 of the tool rest 206A, 206B, each ball screw 202b, 202d is disposed in the shape of lengthening in the directions as shown by the arrows YA and YB in Fig.28 is connected through the nut (not shown). With the ball screw 202b, 202d, each servo-motor (not shown) is connected. The tool rest 206A, 206B moves in each movement area ARE1, ARE2, in such a manner the servo-motor is driven to make each ball screw 202b, 202d rotate in the reciprocal directions. By the way, the movement area ARE1, ARE2 denotes the movement boundary of each tool 233 in the directions as shown by the arrows YA and YB, when the tool rest 206A, 206B moves together with tool 233 along the movement direction of the spindle 203, 205, that is, the directions as shown by the arrows YA and YB. The movement area ARE1, ARE2 is provided in the shape of overlapping mutually. The common movement area ARE3 denotes the boundary being overlapped by the movement area ARE1 and ARE2.

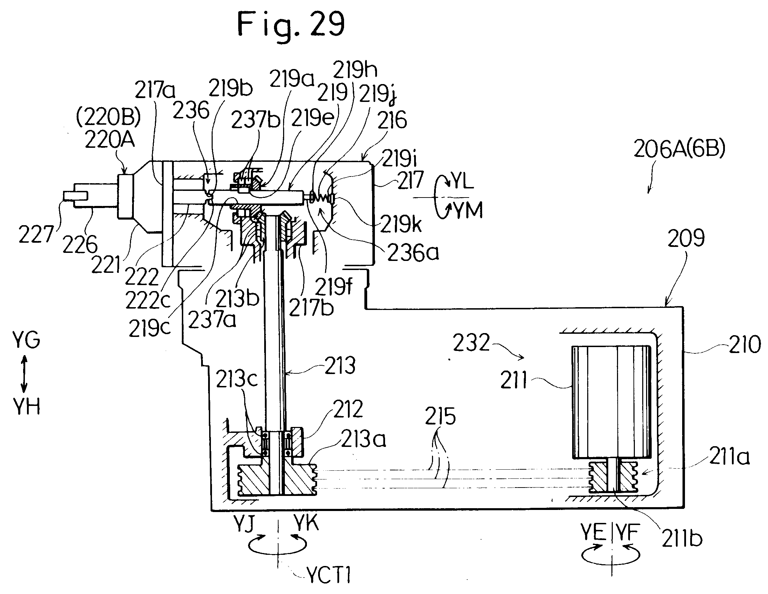

Furthermore, with each carriage 207, 207, as shown in Fig.27, each turret base 209 is movably and drivably provided through the guide rail 202g, 202g in the directions as shown by the arrows $C_1$ and $D_1$ (in $X_1$ axis direction) and in the directions as shown by the arrows $C_2$ and $D_2$ (in $X_2$ axis direction). Each turret base 209 has each main body 210. With each main body 210, each turret 216 is provided being free to turn and drive in the directions as shown by the arrows YJ and YK in Fig.29. The turret 216 has a casing 217.

By the way, in the casing 217 and the turret base 209, the tool rotation driving structure 232 is provided. The tool rotation driving structure 232 has a driving motor 211, a pulley 211a, 213a, a bearing portion 212, 217b, a shaft 213, a belt 215, a bevel gear 213b, 219a, and a rotation shaft 219, and the like. In the main body 210 of the turret base 209, the driving motor 211 is disposed. The shaft 211b is rotatably supported with the driving motor 211 in the directions as shown by the arrows YE and YF. In the shaft 211b, the pulley 211a is installed. In the main body 210, the bearing portion 212 is provided. At the bearing portion 212, the shaft 213 stretches its shaft center YCT1 in up and down directions in Fig.29, that is, the directions as shown by the arrows YG and YH, and is rotatably supported with the shaft center YCT1 as its center in the directions as shown by the arrows YJ and YK. In the lower edge portion of the shaft 213 in the figure, the pulley 213a is installed. The belt 215 is disposed in the shape of streching between the pulley 213a and the pulley 211a which is installed in the shaft 211b of the driving motor 211. And, in the upper edge portion of the shaft 213 in the figure, the bevel gear 213b is installed.

The turret 216 is rotatably disposed with the shaft 213 as its center in the directions as shown by the arrows YJ and YK at the main body 210 of the turret base 209 as shown in Fig.29. The turret 216 has the casing 217. In the casing 217, the bearing portion 217b is provided. In the bearing portion 217b, the bevel gear 213b which is installed in the shaft 213 is fitted being free to rotate through the bearing 237a in the directions as shown by the arrows YJ and YK. The bevel gear 219a meshes the bevel gear 213b. The bevel gear 219a is rotatably supported by the bearing portion 217b through the bearing 237b in the directions as shown by the arrows YL and YM.

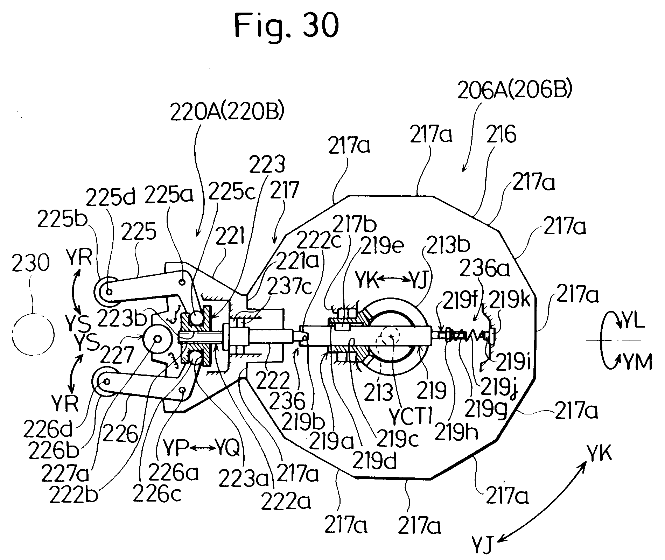

With the bevel gear 219a, the hole 219c is provided in the shape of penetrating in the right and left directions in Fig.30, that is, in the directions as shown by the arrows YP and YQ. With the hole 219c, a key way 219d is disposed. Furthermore, in the hole 219c of the bevel gear 219a, the rotation shaft 219 is fitted and supported being free to move only in the directions as shown by the arrows YP and YQ in such a manner the key 219e which is installed in the peripheral surface of the rotation shaft 219 in the figure, is fitted for the key way 219d being free to be slidable. With the right edge portion 219f of the rotation shaft 219 in Fig.30, a pressuring portion 236a being composed of the cluch 236 is provided. The pressuring portion 236a has a screw portion 219g, a nut 219h, a support pin 219i, a spring 219j, and the like. The screw portion 219g is disposed at the right edge portion 219f of the rotation shaft 219.

The nut 219h is disposed at the screw portion 219g. Furthermore, in the casing 217 of the turret 216, the support pin 219i is rotatably provided through the bearing 219k in the directions as shown by the arrows YL and YM, in the shape of facing to the nut 219h, the spring 219j is disposed between the nut 219h and the support pin 219i. At the left edge portion of the rotation shaft 219 in Fig.30, the connecting ditch 219b being composed of the clutch 236 is formed in a wedge.

Furthermore, plural tool installation portion 217a is formed at the outside surface in Fig.30 of the turret 216, 216 being composed of the tool rest 206A, 206B, respectively. Each workpiece center rest apparatus 220A, 220B is installed in one tool installation portion 217a among these tool installation portion 217a.

The workpiece center rest apparatus 220A, 220B has each main body 221 as shown in Fig.30. In the main body 221, the connecting shaft 222 is rotatably disposed through the bearing 237c, and the like, in the directions as shown by the arrows YL and YM. At the right edge portion of the connecting shaft 222 in Fig.30, the connecting portion 222c being composed of the clutch 236 is disposed in a wedge. The connecting portion 222c is fitted in the connecting ditch 219b of the rotation shaft 219 being free to connect and separate. The mail screw 222b is disposed at the top end portion 222a of the connecting shaft 222. The engaging member 223 is movably provided with the top edge portion 222a only in the directions as shown by the arrows YP and YQ in such a manner the female screw 223b which is provided with the engaging member 223, is fitted in the male screw 222b. The ditch 223a is formed at the engaging member 223 in a ring, in the shape of surrounding the top edge portion 222a of the connecting shaft 222.

The click 225, 226 is provided with the main body 221 being free to open and close through each pin 225a, 226a in the directions as shown by the arrows YR and YS. Each click 225, 226 is formed in the shape of almost L-writing. Each support roller 225b, 226b is rotatably installed in the left edge portion of the click 225, 226 in Fig.30, through the shaft 225d, 226d. Each ball 225c, 226c is provided with the other edge portion of the click 225, 226. The ball 225c, 226c slidably fits in the ditch 223a of the engaging member 223. Furthermore, on the main body 221 between the clicks 225 and 226, the pressing roller 227 projects its portion out of the main body 221, and is rotatably provided with the shaft 227a as its center.

With above-described constitution of the complex machining machine tool 201, in the case a long size shaft-shaped workpiece is required to be machined making use of the machine tool 201, it is necessary for the workpiece 230 to support by the workpiece center rest apparatus 220A or 220B. So as not to deflect from the rotation center during the machining. For the sake of this, at first, the workpiece center rest apparatus 220A, 220B is installed in the turret 216, 216 of the tool rest 206A, 206B, as shown in Fig.30, respectively. So, each machine body 221 of the workpiece center rest apparatus 220A, 220B as shown in Fig.30 is attached to the tool installation portion 217a of the turret 216 in such a manner the connecting portion 222c of the connecting shaft 222 is fitted in the connecting ditch 219b of the rotation shaft 219. On this occasion, the connecting shaft 222 is certainly connected with the rotation shaft 219 since the connecting ditch 219b is pushed to the connecting portion 222c by the elasticity of the spring 219j.

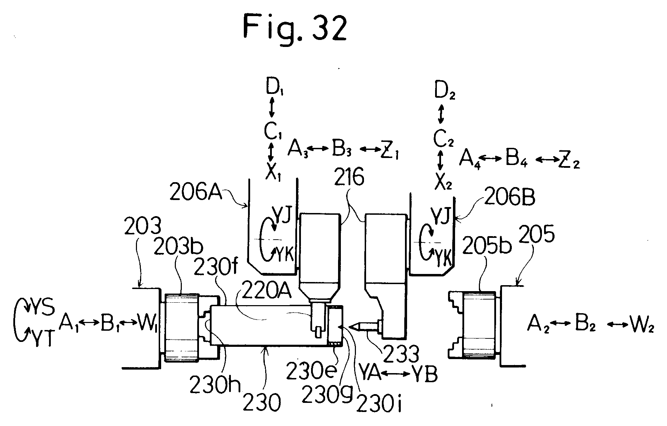

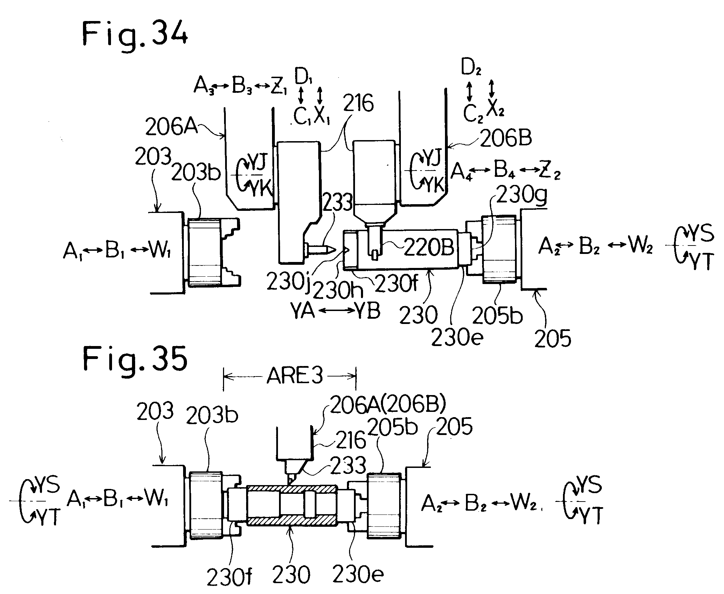

In this way, at the time that the workpiece center rest apparatus 220A, 220B is installed in the turret 216, 216 of the tool rest 206A, 206B, the former machining is performed. The former machining denotes the machining that the holding portion of the long-sized workpiece 230 by the chuck 203b, 205b (that is, both right and left edges portion 230f, 230e in Fig.32) is cut in the form of a cylinder, or the center hole 230i, 230j is provided with the edge surface 230g, 230b of the workpiece 230 as shown in Fig.32 and Fig.34, before the main machining.

Then, the edge portion 230f of the left hand in the figure of the long-sized workpiece 230 to be machined, as shown in Fig.32, is held by the chuck 203b. Thereafter, in this state, the turret 216 of the tool rest 206A is turned in the directions as shown by the arrows YJ and YK, to make the workpiece center rest apparatus 220A face to the workpiece 230 as shown in Fig.30. Next, the tool rest 206A is moved with the predetermined distance together with the workpiece center rest apparatus 220A in the arrrow $C_1$ direction in Fig.27, that is, in the arrow YP direction in Fig.30, and the workpiece 230 is passed between the rollers 225b and 226b. In this way, the pressing roller 227 of the center rest apparatus 220A is come into contact with the workpiece 230.

In this state, the driving motor 211 in the turret base 209 as shown in Fig.29 is driven to rotate the pulley 211a in the direction as shown by the arrow YF. Then, the shaft 213 rotates together with the bebel gear 213b, through the pulley 211a, 213a and the belt 215 in the direction as shown by the arrow YK. The rotation shaft 219 rotates through the bevel gear 213b, 219a in the direction as shown by the arrow YL. Accordingly, the connecting shaft 222 as shown in Fig.30 rotates through the connecting ditch 219b and the connecting portion 222c in the direction as shown by the arrow YL, and the top edge portion 222a of the connecting shaft 222 also rotates in the direction as shown by the arrow YL. When the torque more than the predetermined torque value is transmitted to the connecting shaft 222 through the clutch 236, the connecting state between the connecting ditch 219b of the clutch 236 and the connecting portion 222c is released. So, the connecting shaft 222 is stop rotating in the direction as shown by the arrow YL.

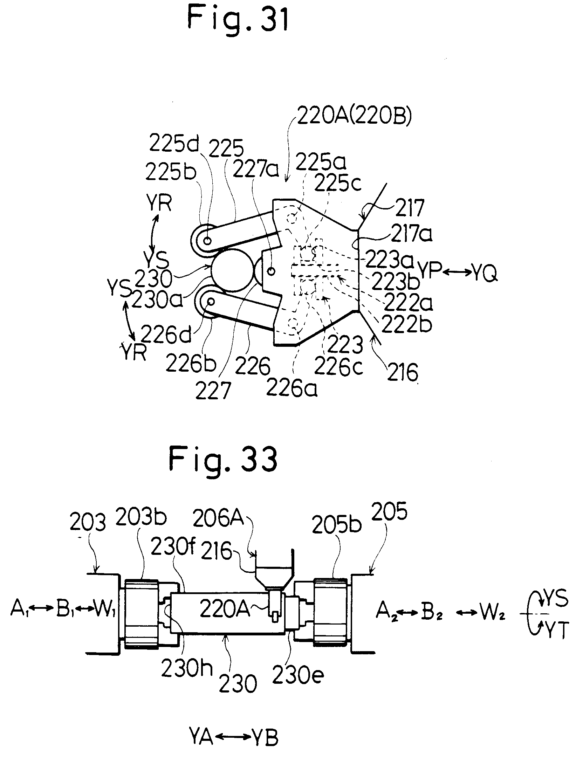

After the connecting sahft 222 rotates in the direction as shown by the arrow YL, the engaging member 223 which is fitted in the male screw 222b of the top edge portion 222a through the female screw 223b, moves toward the shaft center YCT1 of the shaft 213 in the direction as shown by the arrow YQ in Fig.30 at the top edge portion. Then, the ball 225c, 226c of the click 225, 226 turns with each pin 225a, 226a as its center in the direction as shown by the arrow YS in the shape of being pulled by the engaging member 223, while the ball 225c, 226c is slidably moving in the ditch 223a of the engaging member 223. So, each support roller 225b, 226b of the click 225, 226 turns in the direction as shown by the arrow YS, as shown in Fig.31, to come into contact with the workpiece 230. Furthermore, the workpiece 230 is pressured for the pressing roller 227.

On this occasion, the pressuring support force operating on the workpiece 230 depends on the torque which is transmitted to the side of the coonecting shaft 222 from the side of the rotation shaft 219 through the clutch 236 as shown in Fig.30. In case that the transmission torque is more than the setting value, the connecting state of the connecting ditch 219b and the connecting portion 222c is released against the elasticity of the spring 219j. Accordingly, the connecting sahft 222 stops rotating in the direction as shown by the arrow YL. Then, the torque isn't transmitted to the click 225, 226 through the engaging member 223, and the click 225, 226 stops turning in the direction as shown by the arrow YS, further. As a result, the support roller 225b, 226b stops pressuring the workpiece 230 for the pressing roller 227, and the pressuring support force operating on the workpiece 230 is maintained at the setting value. Accordingly, the workpiece 230 doesn't become to be hard to rotate since it is not pressured too much by the center rest apparatus 220A, 220B.

In this way, after the workpiece 230 is supported by the workpiece center rest apparatus 220A in the shape of being held by the support roller 225b, 226b and the pressing rolller 227, the turret 216 of the tool rest 206B as shown in Fig.26 is turned in the directions as shown by the arrows YJ and YK, to position the tool 233 for machining the center hole at the predetermined position. Thereafter, in this state, the ball screw 202d as shown in Fig.28 is rotated by driving the servomotor (not shown). And, the tool rest 206B is moved together with the tool 233 in the direction as shown by the arrow $A_4$ in Fig.32. Moreover, the tool rest 206B is moved the predetermined distance in the direction as shown by the arrow $C_2$. Then, the tool 233 is positioned at the position facing to the edge surface 230g of the right hand in the figure of the workpiece 230. Next, the chuck 230b is rotated together with the workpiece 230 in the direction as shown by the arrow YS. In this state, the tool rest 206B is fed with the predetermined distance together with the tool 233 in the direction as shown by the arrow $A_4$. And, the center hole 230i is disposed at the edge surface 230g of the workpiece 230 by means of the tool 233.

In this occasion, since the workpiece 230 is supported near the edge portion 230e of the right hand in Fig.32 with the workpiece center rest apparatus 220A, the workpiece 230 don't deflect from the rotation center during desposing of the center hole 230i, and the center hole 230i is disposed smoothly.

In this way, after the center hole 230i is disposed, the tool rest 206B is moved in the direction as shown by the arrow $B_4$ and in the direction as shown by the arrow $D_2$, as shown in Fig.32, to move and retract form the workpiece 230. Next, the turret 216 of the tool rest 206B is turned in the directions as shown by the arrows YJ and YK, to position the tool 233 for cutting the outside cylindrical portion at the predetermined position. And, in this state, the tool rest 206B is moved and driven together with the tool 233 for cutting the outside cylindrical portion, in the directions as shown by the arrows $A_4$ and $B_4$ and in the directions as shown by the arrows $C_2$ and $D_2$. So, the edge portion 230e of the workpiece 230 is cut in the form of a cylinder by making use of the tool 233. On this occasion, since the workpiece 230 is rotatably supported near the edge portion 230e of the right hand in Fig.32 with the workpiece center rest apparatus 220A as same the case that the center hole 230i is provided as being described before, the workpiece 230 don't deflect form the rotation center during the machining, and the cutting for the cylinder is accurately performed. After the machining had finished, the tool rest 206B is moved and retracted in the direction as shown by the arrow $B_4$ and in the direction as shown by the arrow $D_2$.

Thereafter, the chuck 205b of the spindle stock 205 as shown in Fig.32 is opened. In this state, the spindle stock 205 is moved in the direction as shown by the arrow $A_2$. So, the machined edge portion 230e of the right hand in the figure of the workpiece 230 is inserted in the chuck 205b as shown in Fig.33. Next, in this state, the chuck 205b is closed. Futhermore, the driving motor 211 of the tool rotation driving structure 232 as shown in Fig.29 is driven because of releasing the supporting relation between the workpiece center rest apparatus 220A and the workpiece 230. So, the shaft 211b is rotated in the direction as shown by the arrow YE. Then, the connecting shaft 222 is moved through the pulley 211a, 213a, the belt 215, the shaft 213, the bevel gear 213b, 219a, the rotation shaft 219, the clutch 236, and the like, in the direction as shown by the arrow YM. And the engaging member 223 as shown in Fig.30 is moved in the direction as shown by the arrow YP. Then, the click 225, 226 is turned around the pin 225a, 226a through each ball 225c, 226c in the direction as shown by the arrow YR, so that the support roller 225b, 226b apparts from the workpiece 230. Accordingly, the supporting relation between the workpiece center rest apparatus 220A and the workpiece 230 is released. After the supporting relation between center rest apparatus 220A and the workpiece 230 is released, the tool rest 206A is moved in the direction as shown by the arrow $D_1$ in Fig.32, to retract from the workpiece 230.

Thereafter, the spindle stock 203 is moved in the direction as shown by the arrow $B_1$, and at the same time, the spindle stock 205 is moved in the direction as shown by the arrow $B_2$. Then, the spindle stock 203, 205 is synchronously moved the predetermined distance together with the workpiece 230 in the direction as shown by the arrow YB. Next, the turret 216 of the tool rest 206B as shown in Fig.26 is turned in the directions as shown by the arrows YJ and YK, to position the workpiece center rest apparatus 220B at the predetermined positon facing to the workpiece 230. Moreover, in this state, the tool rest 206B is moved together with the workpiece center rest apparatus 220B in the directions as shown by the arrows $A_4$ and $B_4$ and in the direction as shown by the arrow $C_2$, in Fig.34. In this state, near the egde portion 230f of the left hand in the figure of the workpiece 230 is supported by the center rest apparatus 220B.

Thereafter, the click 203b of the spindle stock 203 is opened. In this state, the spindle stock 203 is moved in the direction as shown by the arrow $A_1$, to position the spindle stock 203 at the position as shown by full line in Fig.34. And, the turret 216 of the tool rest 206A is turned in the directions as shown by the arrows YJ and YK, to position the tool 233 for machining the center hole at the predetermined position. Furthermore, in this state, the servo-motor (not shown) is driven, so that the ball Screw 202b as shown in Fig.28 is rotated. So, the tool rest 206A is moved the predetermined distance together with the tool 233 in the directions as shown by the arrows $A_3$ and $B_3$ in Fig.34, and furthermore in the direction by the arrow $C_1$. Then, the tool 233 for machining center hole is positioned at the position facing to the edge portion 230h of the workpiece 230.

Next, the chuck 205b is rotated together with the workpiece 230 in the direction as shown by the arrow YS. In this state, the tool rest 206A is fed with the predetermined distance together with the tool 233 for machining the center hole in the direction as shown by the arrow $B_3$, to form the center hole 230j at the edge surface 230b of the workpiece 230 by the tool 233. Furthermore, after the center hole 230j is formed at the workpiece 230, the turret 216 of the tool rest 206A is turned in the directions as shown by the arrows YJ and YK to position the tool 233 for cutting the outside cylindrical portion at the predetermined position. In this way, the edge portion 230f of the workpiece 230 is cut in the form of a cylinder by the tool 233.

On this occasion, since the workpiece 230 is supported near its edge portion 230f by the center rest apparatus 220B, the workpiece 230 don't deflect from the rotation center. And it enables that the center hole 230i is accurately formed at the workpiece 230, and the outside cylindrical portion of the edge portion 230f is machined, too. After the machining, the tool rest 206A is moved and retracted in the direction as shown by the arrow $D_1$.

In this way, after the former machining of the workpiece 230 had finished, the chuck 203b is opened. In this state, the tool rest 203 is moved the predetermined distance together with the chuck 203b in the direction as shown by the arrow $B_1$.

Then, the edge portion 230f of the workpiece 230 which is performed the machining for cutting is inserted in the chuck 203b. In this state, the chuck 203b is closed. And the workpiece 230 is held between the chucks 203b and 205b as shown in Fig.35. Then, the workpiece 230 is positioned at the position corresponding the common movement area ARE3 as shown in Fig.28. Thereafter, the supporting relation between the workpiece center rest apparatus 220B and the workpiece 230 is released. And, the chuck 203b, 205b is syncronously rotated in the direction as shown by the arrow YS. In this state, the tool rest 206A is moved together with the tool 233 for cutting the outside cylindrical portion, in the directions as shown by the arrows $C_1$ and $D_1$ and in the direction as shown by the arrows $A_3$ and $B_3$, in the movement area as shown in Fig.28. In this way, the main machining is performed toward the outside cylindrical portion of the workpiece 230 in Fig.35 by the tool 233 which is installed in one tool rest 206A. On this occasion, since the long sized workpiece 230 is positioned at the position corresponding to the common movement area ARE3 by the spindle stock 203, 205 as shown in Fig.28, the main machining can be also performed toward the workpiece 230 by the other tool rest 206B. That is, the tool rest 206B is moved together with the tool 233 for cutting the outside cylindrical portion in the directions as shown by the arrows $C_2$ and $D_2$, and in the directions as shown by the arrows $A_4$ and $B_4$ in the movement area ARE2. In this way, the machining can be also performed toward the portion of the workpiece 230 between the chucks 203b and 205b by only the tool 233.

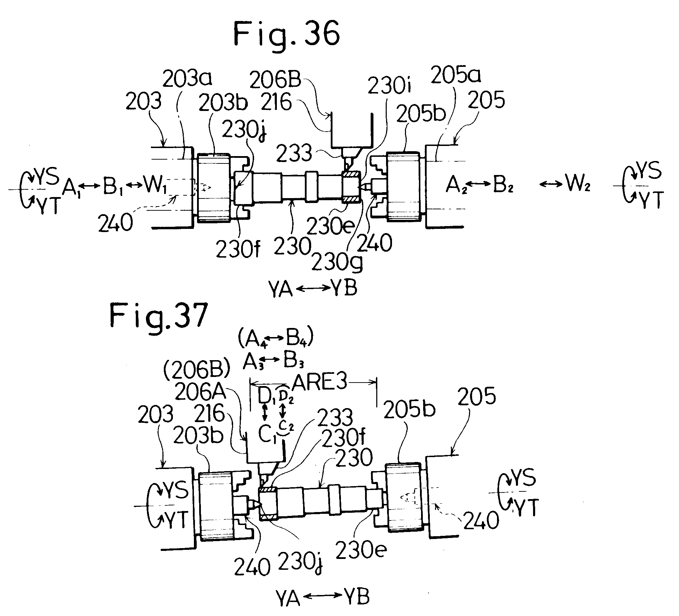

Thereafter, the machining of the portion of the workpiece 230 which is held by the chuck 205b, that is, the edge portion 230e of the right hand in Fig.36, is performed. For the purpose of this, the center 240 which is disposed at the spindle stock 205 is moved the predetermined distance in the direction as shown by the arrow YA in the spindle 205a and the chuck 205b, as shown in Fig.36. Then, the center 240 projects from the chuck 205b in the direction as shown by the arrow YA, and is inserted in the center hole 230i which is disposed at the edge portion 230g of the workpiece 230.

Next, the holding relation between the chuck 205b and the workpiece 230 is released. In this state, the spindle stock 205 is moved the predetermined distance together with the chuck 205b in the direction as shown by the arrow $B_2$. At the same time, the center 240 is moved, at the same speed with chuck 205, in the direction as shown by the arrow $A_2$. Then, the chuck 205b is positioned at the position being apart from the edge portion 230e with the predetermined distance for the right hand in Fig.36, in the state that the edge portion 230e of the workpiece 230 is supported with the center 240. In this state, the chuck 203b is rotated together with the workpiece 230 in the direction as shown by the arrow YS. Furthermore, the machining for turning is performed toward the edge portion 230e of right hand of the workpiece 230 in Fig.36, by the tool 233 which is installed in the tool rest 206B for machining the edge portion of the workpiece. On this occasion, the workpiece 230 don't deflect from the rotation center because of being supported by the center 240, and the machining for turning toward the edge portion 230e of the workpiece 230 is performed accurately. After the machining, the center 240 is moved and retracted in the direction as shown by the arrow YB, and is positioned at the position as shown by the broken line in Fig.37. And, the edge portion 230e after the machining is held by the chuck 205b.

At the same time, the center 240 which is provided with the spindle stock 203 is projected from the position as shown by the broken line in Fig.36 through the spindle 203a and the chuck 203b with the predetermined distance away from the chuck 203b in the direction as shown by the arrow YB, for the purpose of the machining for turning of the workpiece portion (that is, the edge portion 230f of the workpiece 230) being held by the chuck 203b, and is inserted in the center hole 230j of the workpiece 230 of the left hand in the figure. The edge portion 230f of the workpiece 230 is supported by the center 240, and the chuck 203b is retaracted to the left hand in the figure as shown in Fig.37. In this state, the machining for turning is performed toward the edge portion 230f of the workpiece 230 of the left hand in the figure by means of the tool 233 which is installed in the tool rest 206A for machining of edge portion of the workpiece. On this occasion, as described before, the workpiece 230 doesn't deflect from the rotation center because of being supported by the center 240. Accordingly, the machining for turning toward the edge portion 230f of the workpiece 230e is performed accurately.

On this occasion, since the workpiece 230 being held between the spindle stocks 203 and 205 is positioned at the position corresponding to the common movement area ARE3 as shown in Fig.28, the machining can be also performed toward the edge portion 230f of the workpiece 230 by means of the tool rest 206B. That is, the tool rest 206A is moved and retracted in the direction as shown by the arrow $A_3$. Secondary, in this state, the tool rest 206B is moved, together with the tool 233 which is used for the machining of the edge portion 230e of the workpiece 230, in the direction as shown by the arrow $A_4$ in the movement area ARE2. So, the tool 233 is faced to the edge portion 230f of the workpiece 230 as shown in Fig.37. In this state, the tool rest 206B is fed with the predetermined distance together with the tool 233 in the direction as shown by the arrow $C_2$, and is moved in the directions as shown by the arrows $A_4$ and $B_4$. In this way, the machining for cutting is performed toward the edge portion 230f of the workpiece 230, in the form of a cylinder, by means of the tool 233. In case that the machining is performed toward the edge portion 230f of the workpiece 230 by means of the tool rest 206B, the machining of edges portions 203e and 203f of the workpiece 230 can be performed by means of only tool 233 which is installed in one tool rest (that is, the tool rest 206B in the present embodiment). It isn't necessary to install the tool 233 for the purpose of the machining of the edge portion 230e, 230f of the workpiece 230 in the other tool rest (the tool rest 206A in the present embodiment).

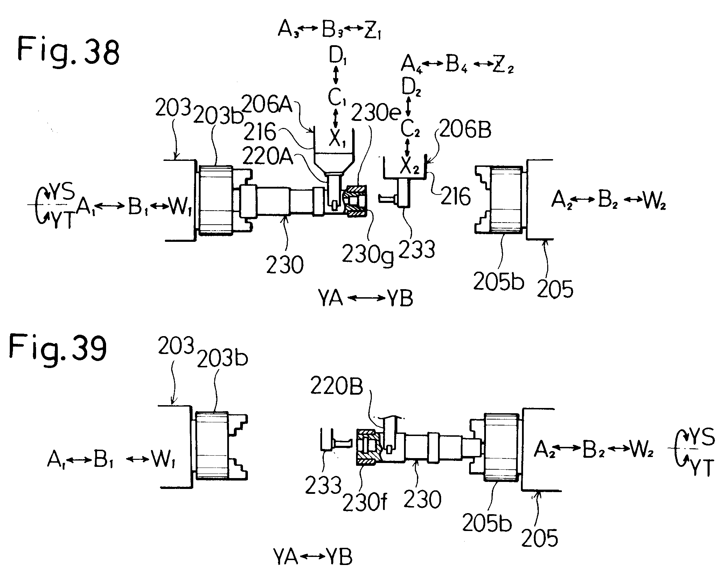

And, in case that the machining for boring is performed toward each edge portion 230e, 230f of the workpiece 230, at first, the former machining (exclusive of the machining for providing the center hole 330i, 330j as shown in Fig.32 and Fig.34) as shown in Fig.32 through Fig.34 is performed toward the edge portion 230e, 230f of the workpiece. Moreover, the main macnining is performed toward the outside cylindrical portion of the workpiece 230 as shown in Fig.35. And, in this state, near the edge portion 230e of the workpiece 230 of the right hand in the figure as shown in Fig.38 is supported by the workpiece center rest apparatus 220A which is installed in the tool rest 206A.

Thereafter, the tool rest 206B is moved together with the tool 233 for cutting the inside diameter portion, such as a drill, a boring tool, in the directions as shown by the arrows $A_4$ and $B_4$, and in the direction as shown by the arrow $C_2$. And the tool 230 is faced to the edge surface 230g of the workpiece 230. Next, the chuck 203b is rotated together with the workpiece 230 in the direction as shown by the arrow YS. In this state, the tool rest 206B is fed with the predetermined distance together with the tool 233 for cutting the inside diameter portion in the direction as shown by the arrow $A_4$, In this way, the predetermined machining of the inside diameter portion is performed toward the edge portion 230e of the workpiece 230 by means of the tool 233. And, the outside cylindrical portion of the edge portion 230e of the workpiece 230 is machined by means of the tool 233 which is installed in the tool rest 206B, for machining the outside cylindrical portion. On this occasion, since the workpiece 230 is supported near its edge portion 230e by the workpiece center rest apparatus 220A, the workpiece 230 doesn't deflect from the rotation center, even if the cutting force by the tool 233 operates upon the workpiece 230. And the machining of the inside diameter portion and outside cylindrical portion are accurately performed toward the edge portion 230e of the workpiece 230.

Thereafter, the spindle stock 205 as shown in Fig.38 is moved the predetermined distance together with the chuck 205b in the direction as shown by the arrow $A_2$, to hold the edge portion 230e of the workpiece 230 by the chuck 205b. Secondarily, the supporting relation between the workpiece center rest apparatus 220A and the workpiece 230 is released. In this state, the tool rest 206A is moved and retracted in the direction as shown by the arrow $D_1$. And, the spindle stock 203, 205 is synchronously moved together with the workpiece 230 in the direction as shown by the arrow YB, to position the spindle stock 205 at the position as shown in Fig.39. In this state, the edge portion 230f of the workpiece 230 of left hand in the figure is supported by the workpiece center rest apparatus 220B which is installed in the tool rest 206B. And, the holding relation between the spindle stock 203 and the workpiece 230 is released. Then, the spindle stock 203 is moved the predetermined distance away from the workpiece 230 in the direction as shown by the arrow $A_1$, to position at the position as shown by the full line in the figure.

Thereafter, in this state, the predetermined macnining of the inside diameter portion is performed toward the edge portion 230f of the workpiece 230 by means of the tool 233 which is installed in the tool rest 206A for cutting the inside diameter portion. Moreover, the predetermined machining of the outside cylindrical portion is performed toward the edge portion 230f of the workpiece 230 by means of the tool (not shown) which is installed in the tool rest 206A for macnining the outside cylindrical portion. On this occasion, since the workpiece 230 is supported its edge portion 230f by the workpiece center rest apparatus 220B, the workpiece 230 is able to be prevented from deflecting from the rotation center efficiently, even if the cutting force by the tool 233 operates upon the workpiece 230.

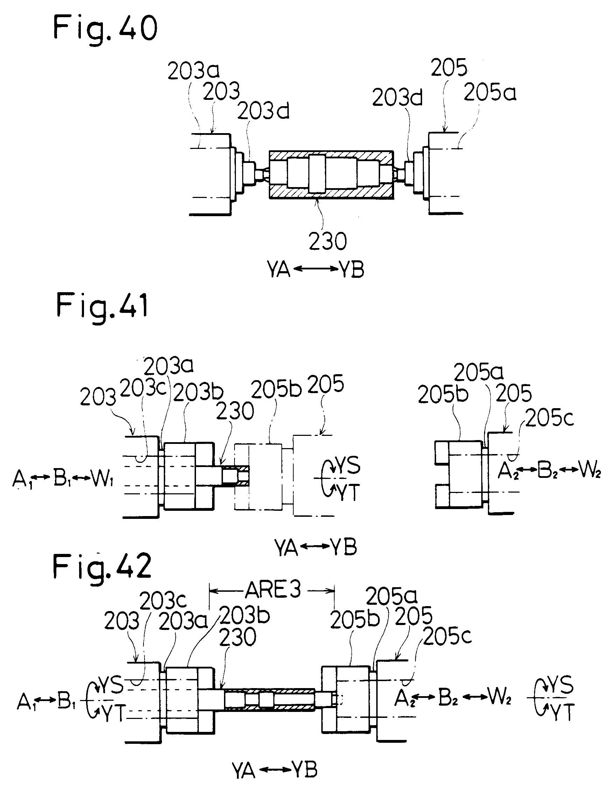

In the above-described embodiment, in case that a shaft shaped workpiece is required to be machined, it had mentioned that the workpiece 230 is supported by the center 240, 240. However, in the workpiece supporting means, that isn't the thing. Any method is available if the edge portion 230e, 230f of the workpiece 230 can be rotatably supported in the directions as shown by the arrows YS and YT when the machining is performed. For example, the face driver 203d, 203d as shown in Fig.40, as the workpiece supporting means, is installed in each spindle 203a, 205a of each spindle stock 203, 205. The workpiece 230 is held between the face drivers 203d and 203d. In this state, the main machining may be performed toward the workpiece 230.

In the case that a bar shaped workpiece is required to be machined , the bar shaped workpiece 230 is set to project the top edge portion of the bar shaped workpiece 230 from the chuck 203b with the predetermined distance in the direction as shown by the arrow YB, through the through hole 203c of the spindle 203a and the chuck 203b, as shown in Fig.41. Secondarily, the chuck 203b is rotated together with the bar shaped workpiece 230 in the direction as shown by the arrow YS. In this state, the machining of the top edge portion of the bar shaped workpiece 230 is performed. And, the chuck 205b is opened. In this state, the spindle stock 205 is moved the predetermined distance toward the spindle 203 in the direction as shown by the arrow $A_2$. The chuck 205b is positioned at the position as shown by the imaginary line in Fig.41. In this state, the bar shaped workpiece 230 is held by the chuck 203b, 205b by means of closing the chuck 205b.

Thereafter, the holding relation between the chuck 203b and the workpiece 230 is released. In this state, the spindle stock 205 is moved the predetermined distance together with the chuck 205b in the direction as shown by the arrow $B_2$. Then, the bar shaped workpiece 230 is moved in the direction as shown by the arrow YB in the shape of being pulled by the chuck 205b. The raw portion of the bar shaped workpiece 230 is pulled out from the chuck 203b with the predetermined length, as shown in Fig.42, to position at the position corresponding to the common movement area ARE3 as shown in Fig.28. Next, the chuck 203b is closed to hold for the workpiece 230 by the chuck 203b, 205b. In this state, the chuck 203b, 205b is synchronously rotated together with the bar shaped workpiece 230 in the direction as shown by the arrow YS. Thereafter, the tool rest 206A or 206B is moved together with the tool 233 in the directions as shown by the arrows $A_3$ and $B_3$, or in the directions as shown by the arrows $A_4$ and $B_4$, respectively. In this way, the predetermined machining is performed toward the bar shaped workpiece 230 between the chucks 203b and 205b by means of the tool 233.

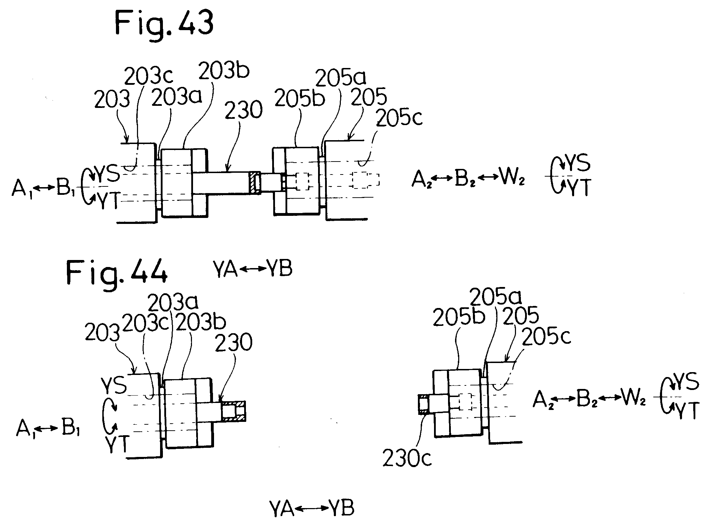

Thereafter, the holding relation between the chuck 205b and the bar shaped workpiece 230 is released. In this state, the spindle stock 205 is moved the predetermined distance together with the chuck 205b in the direction as shown by the arrow $A_2$ in Fig.43. Then, the machined portion of the bar shaped workpiece 230 is inserted into the through hole 205c of the spindle stock 205. Next, in this state, the chuck 205b is closed, and the machined portion of the bar shaped workpiece 230 is held. At the same time, the holding relation between the chuck 203b and the bar workpiece 230 is released. In this state, the spindle stock 205 is moved the predetermined distance together with the chuck 205b in the direction as shown by the arrow $B_2$. Then, the bar shaped workpiece 230 is moved in the direction as shown by the arrow YB, and the raw portion of the bar workpiece 230 is pulled out from the chuck 203b.

Thereafter, the predetermined portion of the bar shaped workpiece 230 between the chucks 203b and 205b is cut off. In this state, the spindle stock 205 is moved together with the chuck 205b in the direction as shown by the arrow $B_2$ in Fig.43. Secondarily, the machining is performed toward the left edge portion of the workpiece block 230c (that is, the machined portion of the bar shaped workpiece 230 which is cut and separated from the bar shaped workpiece 230) being held by the chuck 205b in Fig.44. And the right edge portion of the workpiece 230 in the figure being held by the chuck 203b is machined. At each spindle 203a, 205a of the spindle stock 203, 205, through hole 203c, 205c is formed respectively in the shape of penetrating in the directions as shown by the arrows YA and YB, as shown in Fig.41. Therefore, the successive machining can be performed toward the outside cylindrical portion of the workpiece 230 in such a manner that the long and big workpiece 230 is held by the chuck 203b, 205b through the through hole 203c, 205c, and the workpiece pulling out movement (The cutting-off movement as shown in Fig.43 don't involve.) as shown in Fig.41 through Fig.43 is performed by the spindle stock 203, 205 to pull out the raw portion of the workpiece 230 in the direction as shown by the arrow YB, and the raw portion of the workpiece 230 is machined every movement.

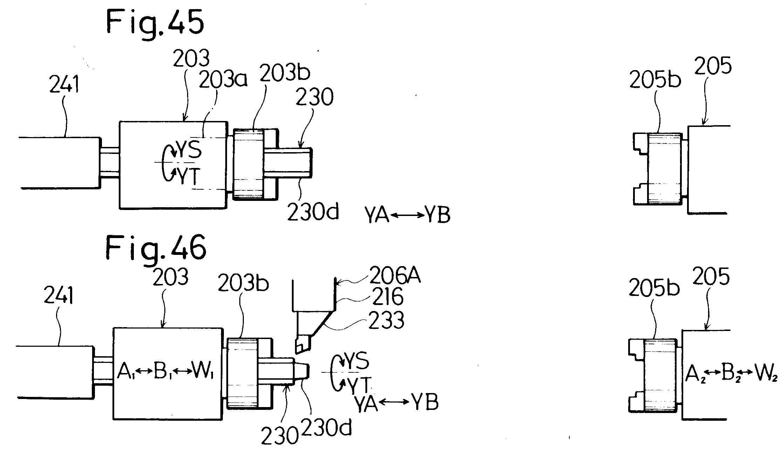

By the way, in the case that the bar shaped workpiece 230 is machined to cut out two kinds of workpieces, 230r and 230s, and the cut out workpiece 230r and 230s are screwed each other, to make one combination parts 230T, the bar shaped workpiece 230 is set to project its top edge portion 230d of the bar shaped workpiece 230 from the chuck 203b, with the predetermined distance in the direction as shown by the arrow YB, through the spindle 203a and the chuck 203b by means of the bar feeder 241 which is disposed at the left hand in Fig.45. Thereafter, the chuck 203b as shown in Fig.46 is rotated with the predetermined rotating speed together with the bar shaped workpiece 230 in the direction as shown by the arrow YS. In this state, the machining for cutting is performed toward the top edge portion 230d of the bar shaped workpiece 230 by means of the tool 233 which is installed in the tool rest 206A for cutting the outside cylindrical portion. Furthermore, the male screw is formed at the top edge portion 230d by means of the tool 233 for screw cutting.

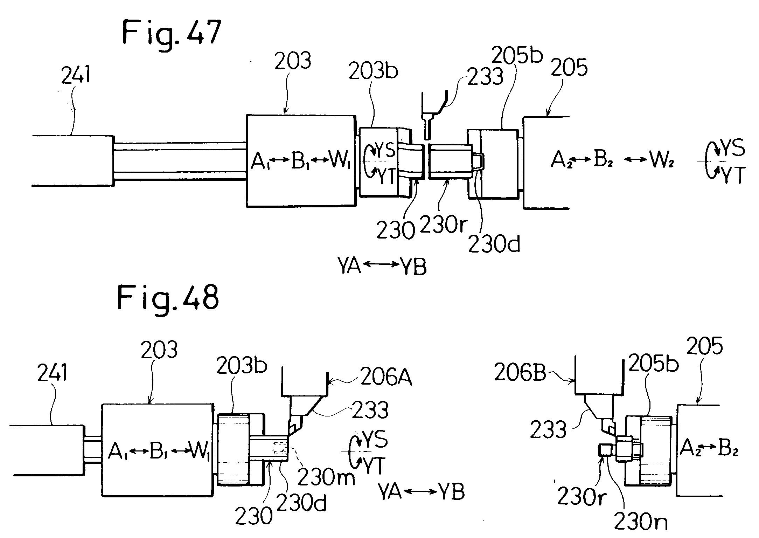

Thereafter, the spindle stock 203 is moved in the direction as shown by the arrow $B_1$ in the state that the bar shaped workpiece 230 is held through the chuck 203b. And, the spindle stock 205 is moved the predetermined distance together with the chuck 205b toward the spindle stock 203 in the direction as shown by the arrow $A_2$. Then, the top edge portion 230d of the bar shaped workpiece 230 is inserted inside the chuck 205b, as shown in Fig.47. Next, the chuck 205b is closed to hold the top edge portion 230d of the bar shaped workpiece 230. In this state, the chuck 203b, 205b is synchronously rotated together with the bar shaped workpiece 230 in the direction as shown by the arrow YS. Under the condition, the predetermined portion of the bar workpiece 230 being held between the chucks 203b and 205b is cut by means of the tool 233 which is installed in the tool rest 206A or 206B for cutting off.

Thereafter, the spindle stock 203 is moved the predetermined distance together with the bar shaped workpiece 230 in the direction as shown by the arrow $A_1$ in Fig.47. And, the spindle stock 205 is moved together with the workpiece 230r (The workpiece 230r denotes a part of the bar shaped workpiece 230 which is cut and separated from the bar shaped workpiece 230 being held by the spindle stock 203 by means of the tool 233 for cutting off) in the direction as shown by the arrow $B_2$. In this way, the spindle stock 203, 205 is positioned at the position as shown in Fig.48, respectively. Thereafter, the female screw 230m is formed at the top edge portion 230d of the bar shaped workpiece 230 being held by the spindle stock 203 by means of the tool 233 which is installed in the tool rest 206A for cutting the inside cylindrical portion, such as a drill, a boring tool, and the tool 233 for forming of the female screw. On the other hand, the male screw 230n is formed by means of the tool 233 which is installed in the tool rest 206B for forming of the male screw, toward the raw portion of the workpiece 230r being delivered to the spindle stock 205.

In this way, that the male screw 230n is formed at the workpiece 230r, and the female screw 230m is formed at the top edge portion 230d of the bar shaped workpiece 230, the chuck 205b as shown in Fig.48 is rotated together with the workpiece 230r with the predetermined rotation speed (usually, the rotation of low speed) in the direction as shown by the arrow YS or in the direction as shown by the arrow YT. Thereafter, in this state, the spindle stock 205 is moved together with the workpiece 230r in the direction as shown by the arrow $A_2$. At the same time, the spindle stock 203 is moved together with the bar shaped workpiece 230 toward the spindle stock 205 in the direction as shown by the arrow $B_1$. Then, the male screw 230n of the workpiece 230r is also moved in the direction as shown by the arrow YA while rotating in the direction as shown by the arrow YS or YT, to fit in the female screw 230m of the bar shaped workpiece 230. And, the workpiece 230r is grappled with the bar shaped workpiece 230. Next, the chuck 203b, 205b is synchronously rotated together with the connected workpiece 230r and the bar shaped workpiece 230 in the direction as shown by the arrow YS. In this state, the predetermined portion of the bar shaped workpiece 230 being held between the chucks 203b and 205b is cut by means of the tool 233 which is installed in the tool rest 206B for cutting-off. On this occasion, since the chuck 203b, 205b syncronously rotates in the same direction, the bar shaped workpiece 230 and the workpiece 230r which is held by the chucks 203b and 205b is synchronously rotated in the same direction. Therefore, the assembly of the bar shaped workpiece 230 and the workpiece 230r don't become loose during the machining for cutting-off.

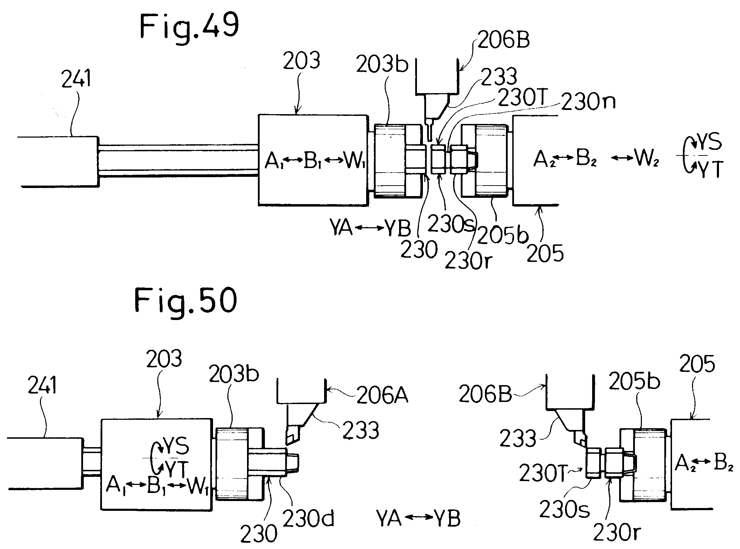

In this way, at the time that the assembly of the workpiece 230r and the workpiece 230s (The workpiece 230s denotes the portion of the bar shaped workpiece 230 which is cut and separated from the bar shaped workpiece 230 being held by the spindle stock 203, in the state of being fitted in the workpiece 230r.) is performed in such a manner that the male screw 230n is fitted in the female screw 230m, and that one connecting parts 230T being composed of the workpieces 230r and 230s is made, the spindle stock 205 is moved the predetermined distance together with the connecting parts 230T in the direction as shown by the arrow $B_2$. And, the spindle stock 203 is moved the predetermined distance together with the bar shaped workpiece 230 in the direction as shown by the arrow $A_1$. So, the spindle stock 203, 205 is positioned at the position as shown in Fig.50. In this state, the bar feeder 241 as shown at left hand in the figure is driven, and the bar shaped workpiece 230 is moved in the direction as shown by the arrow YB. So, the top edge portion 230d in the figure of the bar shaped workpiece 230 is projected from the chuck 203b with the predetermined length in the direction as shown by the arrow YB. In this state, the predetermined machining is performed by means of the tool 233 which is installed in the tool rest 206A toward the top edge portion 230d of the bar shaped workpiece 230. On the other hand, the machining of an end face is performed by means of the tool 233 which is installed in the tool rest 206B toward the workpiece 230s of the connecting parts 230T being held by the spindle stock 205 as shown in Fig.50, to finish the machining of the connecting parts 230T.

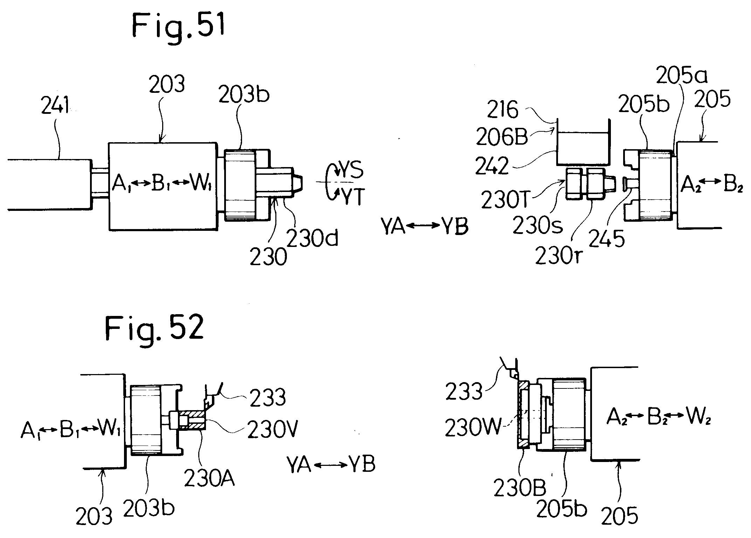

In this way, at the time that the machining had finished toward the connecting parts 230T, the parts catcher 242 which is installed in the tool rest 206B is positioned at the position away from the chuck 205b with the predetermined distance in the direction as shown by the arrow YA, as shown in Fig.51. In this state, the chuck 205b is opened, and the connecting parts 230T is gotten out of the chuck 205b in the direction as shown by the arrow YA by means of wellknown workpiece getting out device 245 which is disposed in the spindle 205a, the connecting parts 230T which is gotten out is caught by the parts catcher 242, and is carried out of the machine.

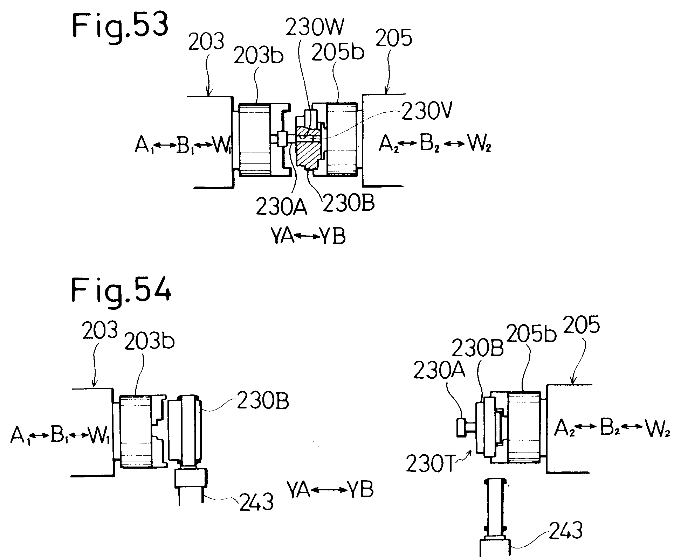

In the above-described embodiment, it mentioned the case that the different kinds of the workpieces 230r, 230s were cut off from the bar shaped workpiece 230 and machined, and one connecting parts 230T is made in such a manner the assembly of the workpiece 230r and 230a is performed by means of spindle stock 203, 205. However, a component parts of the connecting parts 230T isn't restricted to the workpiece 230r, 230s which is cut-off from the same bar shaped workpiece 230, various workpieces are thinkable. For example, one connecting parts 230T can be also made in such a manner that the different kinds of the workpieces 230A, 230B in a single substance as shown in Fig.52 are machined, and the assembly of the workpiece 230A and 230B is performed. For the sake of this, at first, the first routine of the machining is performed toward the workpiece 230A which is supplied by the workpiece handling unit 243 hereinafter described, by means of the tool 233 at the spindle stock 203, to form a press-in portion 230v which is formed in the shape of a bar. And, the second routine of the macnining is performed toward the workpiece 230B being delivered to the spindle stock 205 by means of the tool 233 after the first routine of the machining was performed at the spindle stock 203. Thereafter, the spindle stock 203 is moved together with the chuck 203b in the direction as shown by the arrow $B_1$. At the same time, the spindle stock 205 is moved together with the workpiece 230B in the direction as shown by the arrow $A_2$. Then, the workpieces 230A and 230B are approched each other as shown in Fig.53. The press-in portion 230v of the workpiece 230A is pressured into the hole 230w of the workpiece 230B. The assembly of the workpieces 230A and 230B is performed. So, the connecting parts 230T is made.

In this way, at the time that the assembly of two kinds of the workpieces 230A and 230B is performed to make the connecting parts 230T, the holding relation between the workpiece 230A and the chuck 203b is released. In this state, the spindle stock 205 is moved the predetermined distance together with the assembled workpieces 230A and 230B in the direction as shown by the arrow $B_2$, to

position at the position as shown in Fig.54. And the spindle stock 203 is moved the predetermined distance in the direction as shown by the arrow $A_1$, to position at the position as shown in Fig.54.

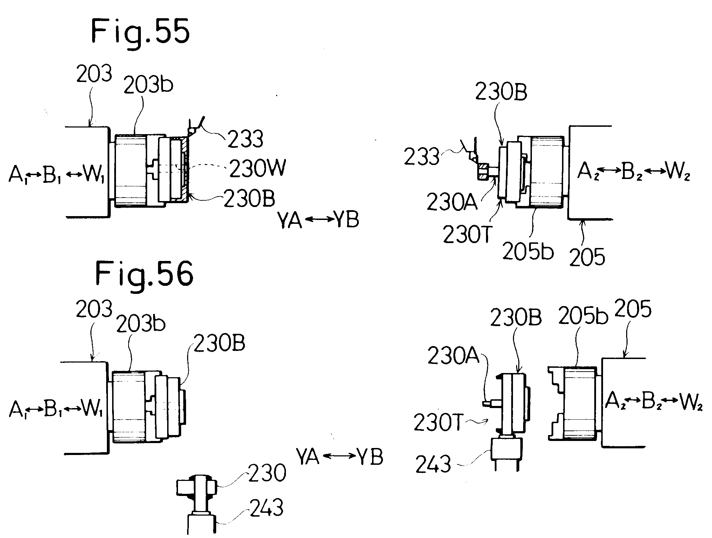

Thereafter, the workpiece 230B is supplied with the spindle stock 203 as shown in Fig.54 by means of the workpiece handling unit 243, and the first routine of the machining is performed toward the supplied workpiece 230B as shown in Fig.55. So, the hole 230w, and the like are formed. And, the second routine of the machining is performed toward the workpiece 230A of the connecting parts 230T of the spindle stock 205 side. Next, the connecting parts 230T which the macnining had finished is carried out the machine from the spindle stock 205 by means of the workpiece handling unit 243 as shown at the right hand in Fig.56.

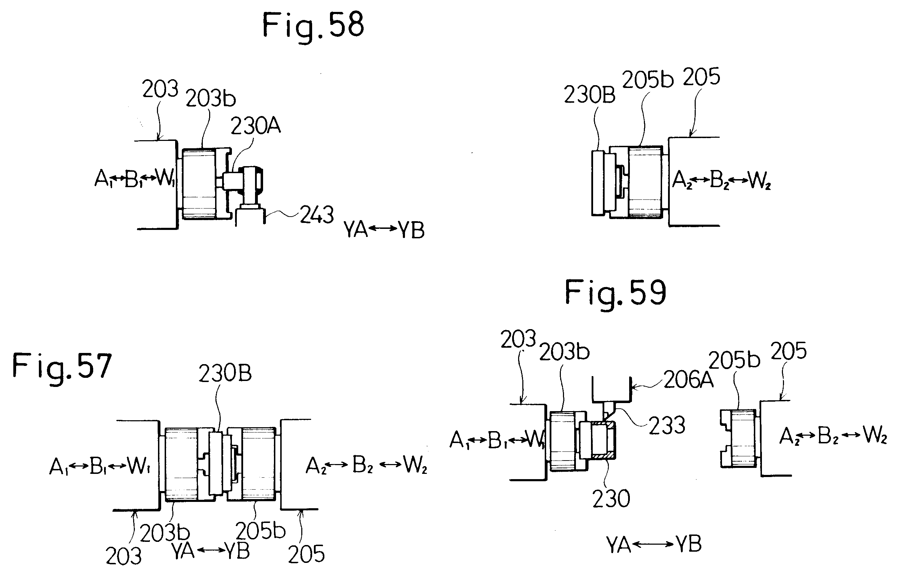

Thereafter, the spindle stock 203, 205 is moved the predetermined distance in the direction as shown by the arrow $B_1$ and in the direction as shown by the arrow $A_2$, as shown in Fig.57 respectively. In this state, the workpiece 230B after the first routine which is held by the spindle stock 203 is delivered to the spindle stock 205. This delivery of the workpiece 230B is usually performed in the state that the chuck 203b, 205b is stopped. However, the spindle stocks 203 and 205 are approached each other in the state that the spindle 203a and 205a of both spindle stocks 203 and 205, that is, the chuck 203b, 205b are rotated in order to shorten the machining time. Thereafter, the delivery movement can be naturally performed between both spindle stocks 203 and 205 while the workpiece 230B is rotated. In this case, the workpiece 230B can be delivered between the spindles 203a and 205a without the generating a phase shift in such a manner that the phases of the rotation of both spindles 203a and 205a in the C-axis direction are matched each other, even if the milling machining accompanied with the C-axis control is performed toward the workpiece 230B. In this way, when the workpiece 230B is delivered to the spindle stock 205, the second routine of the machining is performed toward the workpiece 230B which is delivered to spindle stock 205 as shown in Fig.58. And, the premachined workpiece 230A is supplied with the chuck 203b of the spindle stock 203 by means of the workpiece handling unit 243, to perform the first routine of the machining toward workpiece 230A. Then, the press-in portion 230v is formed.

In the above-described embodiment, it mentioned the case that the connecting parts 230T was made in such a manner that the different kinds of the workpieces were fitted and pressed-in each other to assemble. In the method of the assembly, that isn't the thing. Any method is available, if a pair of workpieces can be certainly connected in such a manner that the spindle stock 203, 205 is approached each other while holding the workpieces respectively.

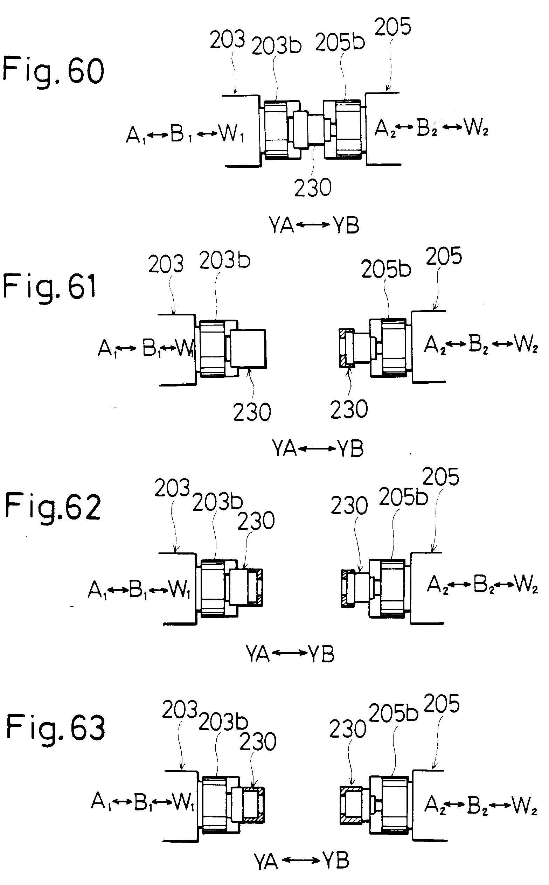

Furthermore, in the case that the chuck workpiece machining is performed making use of the complex machining machine tool 201, the workpiece 230 to be machined is supplied with the chuck 203b of the spindle stock 203 as shown in Fig.59. In this state, the first routine of the machining is performed by means of the tool 233 which is installed in the tool rest 206A toward the workpiece 230. Secondarily, the spindle stock 203 is moved together with the workpiece 230 toward the spindle stock 205 in the direction as shown by the arrow $B_1$, as shown in Fig.60. At the same time, the spindle stock 205 is moved in the direction as shown by the arrow $A_2$ in the state of opening the chuck 205b. In this state, the workpiece 230 is held by the chuck 203b, 205b after the chuck 205b is closed. Thereafter, the holding relation between the chuck 203b and the workpiece 230 is released. In this state, the spindle stock 203 is moved in the direction as shown by the arrow $A_1$. And, the spindle stock 205 is moved together with the workpiece 230 in the direction as shown by the arrow $B_2$. So, the spindle stock 203, 205 is positioned at the position as shown in Fig.61.

Thereafter, the second routine of the machining is performed toward the workpiece 230 which is delivered to the spindle stock 205 as shown in Fig.61. On the other hand, at the spindle stock 203 the second routine of the machining which is the same as the machining at the spindle stock 205 is performed toward the workpiece 230 as shown in Fig.62, after the raw workpiece 230 is supplied to the spindle stock 203. Then, the same machining (that is, the second routine of the machining) are performed at nearly the same time at the spindle stocks 203 and 205. Therefore, the machining finishing time is almost the same. For the sake of this, after the machined workpiece 230 is carried out from the chuck 205b, the workpiece 230 being held by the spindle stock 203, after the second routine of the machining, can be delivered to the spindle stock 205 immediately.

Thereafter, the first routine of the machining is performed toward the workpiece 230 which is delivered to the spindle stock 205 as shown in Fig.63. And, the raw workpiece 230 is supplied with the spindle stock 203, to perform the first routine of the machining, the same with the machining at the spindle stock 205, toward the Workpiece 230. At the time that the first routine of the machining is performed toward the workpiece 230 being held by the spindle stock 203, 205, respectively, the workpiece 230 at the spindle stock 205 after the first and second routine of the machining is carried out of the machine. In this state, the workpiece 230 at the spindle stock 203 is delivered to the spindle stock 205.

In this way, since the machining time of the spindle stocks 203 and 205 can be equal, it isn't necessary for one spindle stock which had finished the machining at first has to wait the end of the machining of the other spindle stock during the machining. And, the machining can be performed efficiently.

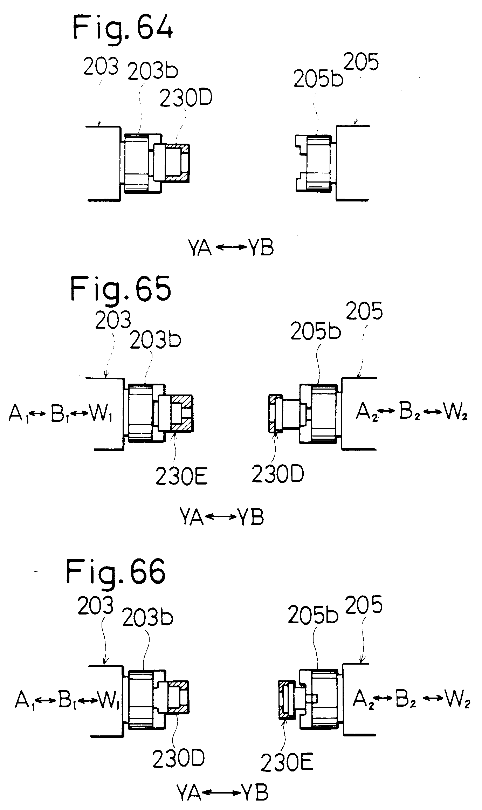

In the above-described embodiment, it is mentioned that the successive machining of first and second routine is performed toward one kind of workpiece 230. As will be described later, the successive machining of the first and second routine can be also performed toward two kinds of workpieces 230D and 230E. That is, as shown in Fig.64, the workpiece 230D is supplied with the spindle stock 203, to perform the first routine of the machining toward the workpiece 230D. Thereafter, the workpiece 230D after the first routine of the machining is delivered to the spindle stock 205 from the spindle stock 203 as shown in Fig.65, to perform the second routine of the machining toward the workpiece 230D which is delivered to the spindle stock 205.

On the other hand, the workpiece 230E being different from the kind of the workpiece 230D is supplied with the spindle stock 203 as shown in Fig.65, to perform the first routine of the machining toward the workpiece 230E. On this occasion, the time to take for the second routine of the machining of the workpiece 230D is set up to be almost equal to that for the first routine of the machining of the workpiece 230E. Therefore, the machining end time of these workpiece 230D and 230E nearly corresponds. And, the workpiece 230E after the first routine of the machining can be immediately delivered to the spindle stock 205 from the spindle stock 203 after the machined workpiece 230D is carried out from the spindle stock 205, as shown in Fig.66. Thereafter, the second routine of the machining is performed toward the workpiece 230E which is delivered to the spindle stock 205. And, the workpiece 230D is supplied with the spindle stock 203, to perform the first routine of the machining toward the workpiece 230D.

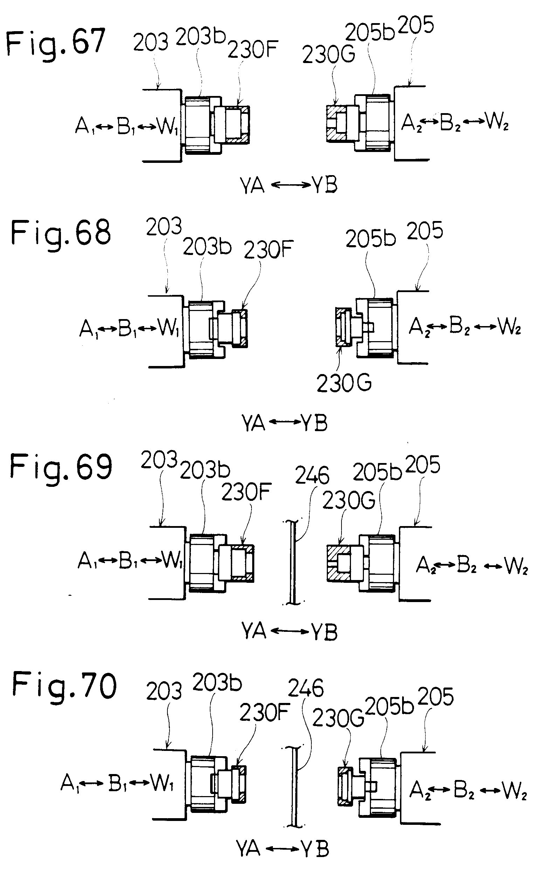

In the above-described embodiment, it is mentioned the case that two kinds of workpieces 230D and 230E are delivered between the spindle stocks 203 and 205, and the first and second routine of the machining is performed toward the workpiece 230D, 230E. However, the first and second routine of the machining can be performed toward the two kinds of the workpieces 230F and 230G without delivering the workpiece between the spindle stocks 203 and 205, as will be described later. That is, the first routine of the machining is performed toward the workpiece 230F which is supplied with the spindle stock 203 as shown in Fig.67, and the first routine of the machining is performed toward the workpiece 230G which is supplied with the spindle stock 205.

Next, after the holding relation between the spindle stock 203, 205 and each workpiece 230F, 230G is released, each workpiece 230F, 230G is respectively turned around. In this state, these workpieces are installed in the spindle stock 203, 205 as shown in Fig.68, again. Thereafter, in this state, the second routine of the machining is performed toward the workpiece 230F, 230G, respectively. At this time, the partition 246 is disposed between the spindle stocks 203 and 205 as shown in Fig.69 and Fig.70. Therefore, when the machining is performed toward the workpiece 230F of the spindle stock 203 side and the workpiece 230G of the spindle stock 205 side, the chips of the workpiece 230F, 230G and the cutting oil using for machining of the workpiece 230F, 230G don't mix each other, and the chips processing, and the like can be smoothly performed. The case that the workpieces 230F and 230G are different in materials is especially efficient.

In the above-described embodiment, it had mentioned the case that the workpiece holding movement is performed in the tool rest 206A, 206B, which installs the rotation tool in one installation portion 217a among each tool installation portion 217a can rotate and drive the tool as shown in Fig.30, in such a manner that the workpiece center rest apparatus 220A, 220B is installed instead of the rotation tool. However, in the tool rest which can install the workpiece center rest apparatus 220A, 220B, that isn't the thing. Any constitution is available if the tool rest has the structure for rotating and driving the tool, such as the tool rotation driving structure 232 as shown in Fig.29. For example, it can be natural to constitute in such a manner the workpiece center rest apparatus 220A, 220B is installed in the optional position in which the rotation tool can be installed, and the workpiece holding movement can be performed, regarding the tool rest being free to rotate and drive the plural rotation tools installed, and the tool is selectly connected with the spindle driving structure for the tool rotation, such as a motor 211, through the clutch plate and the like.

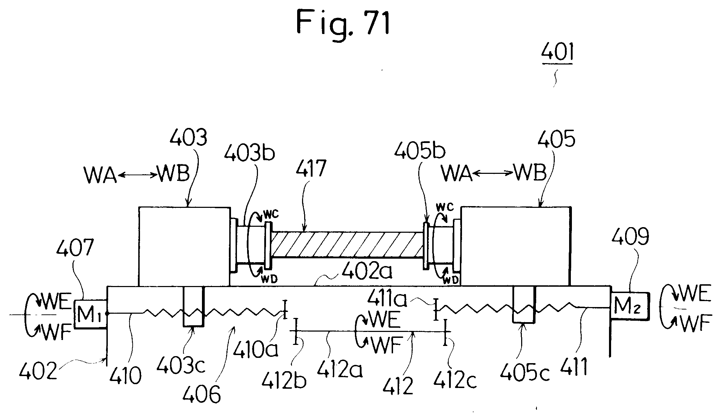

Another embodiment of the complex machining machine tool will be described in Fig.71 through Fig.90.

The complex machining machine tool 401 has the main body 402 of which a guide face 402a is disposed on the upper portion, as shown in Fig.71. On the guide surface 402a, two spindle stocks 403 and 405 are mutually facing in the shape of being independently movable in the shaft axis direction of each spindle (not shown) of the spindle stock 403, 405, that is, in the directions as shown by the arrows WA and WB (Z axis direction). The chuck 403b, 405b which is installed in the spindle (not shown) is rotatably disposed in the directions as shown by the arrows WC and WD at the spindle stock 403, 405. The long sized workpiece 417 is rotatably installed in the directions as shown by the arrows WC and WD between the chucks 403b and 405b, in such a manner that both right and left edges portions in the figure of the workpiece 417 are held by the chuck 403b, 405b. Furthermore, each nut 403c, 405c projects inside the main body 402 through the guide surface 402a at the lower end portion of the spindle stock 403, 405 in Fig.71, and is movably disposed together with the spindle stock 403, 405 in the directions as shown by the arrows WA and WB (Z axis direction) in the main body 402. Each female screw (not shown) is disposed at the nut 403c, 405c in the shape of penetrating it in the Z axis direction.

The spindle stock driving unit 406 is provided at the main body 402, as shown in Fig.71. The spindle stock driving unit 406 is composed of the driving motor 407, 409, the driving screw 410, 411, the clutch 412, and the like. That is, the driving motor 407, 409 is disposed at both right and left edges portions of the machine body 402 in Fig.71. Each driving screw 410, 411 having the same pitch is rotatably connected in the directions as shown by the arrows WE and WF with the driving motor 407, 409. Each nut 403c, 405c as described before, is fitted in the driving screw 410, 411. Therefore, the driving screw 410, 411 is rotated in the directions as shown by the arrows WE and WF by engaging the driving motor 407, 409, so that the spindle stock 403, 405 is moved and driven in the direction as shown by the arrow WA or in the direction as shown by the arrow WB (Z axis direction) through each nut 403c, 405c.

Each gear 410a, 411a is fixed to the top edge portion of the driving screw 410, 411, as shown in Fig.71. And, the clutch 412 is provided between the driving screws 410 and 411 in the shape of being able to connect with the driving screw 410, 411. The clutch 412 has the shaft 412a. The shaft 412a is rotatably provided in the directions as shown by the arrows WE and WF, and is movably provided in the directions as shown by the arrows WA and WB (Z axis direction). Each gear 412b, 412c is fixed to both right and left ends portions of the shaft 412a in Fig.71.

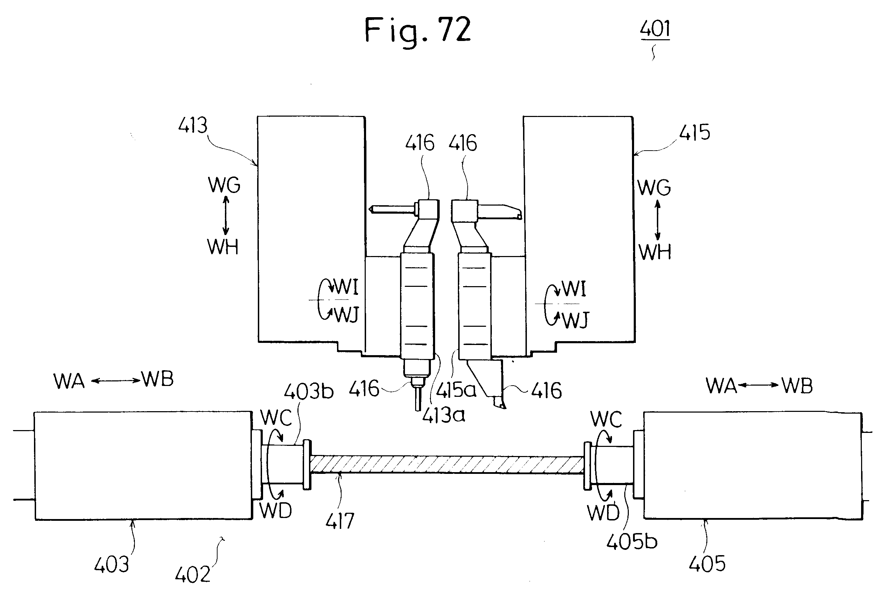

Furthermore, two turret type tool rest 413, 415 are provided being free to move and drive only in the directions as shown by the arrows WG and WH (that is, X axis direction) with the machine body 402 as shown in Fig.72. The directions as shown by the arrows WG and WH are perpendicular toward the directions as shown by the arrows WA and WB. Each turret head 413a, 415a is supported being free to rotate and drive by the tool rest 413, 415 in the directions as shown by the arrows WI and WJ. Plural tool 416 being composed of a turning tool such as a bite, a rotation tool such as a drill, and a milling cutter are installed in the turret head 413a, 415a being free to attach and detach.

With the above-described constitution of the complex machining machine tool 401, in the case that a long sized workpiece 417 is required to be machined as shown in Fig.71, both right and left end portions of the workpiece 417 in the figure are held by chucks 403b and 405b, respectively. In this way, when the workpiece 417 is supported between the chucks 403b and 405b, the turret head 413a, 415a of the tool rest 413, 415 as shown in Fig.72 is properly rotated in the direction as shown by the arrow WI or in the direction as shown by the arrow WJ, to position the tool 416 to be used for the machining at the position facing to the workpiece 417. Next, in this state, the chuck 403b, 405b is synchronously rotated and driven together with the workpiece 417 in the direction as shown by the arrow WC or in the direction as shown by the arrow WD. Furthermore, the clutch 412 as shown in Fig.71 is moved the predetermined distance to the left hand of the figure from the position as shown by full line in the figure. Then, the gear 412b, 412c being composed of the clutch 412 meshes the gear 410a, 411a being fixed to each top edge portion of each driving screw 410, 411. Then, the driving screw 410, 411 is connected each other through the gear 410a, 411a and the clutch 412.

Thereafter, in this state, the other driving motor 407 is driven in the state that either of two driving motors 407, 409 as shown in Fig.71, for example, the driving motor 409 stops driving. Then, the driving screw 410 is rotated together with the gear 410a in the direction as shown by the arrow WE or in the direction as shown by the arrow WF by means of the driving motor 407. When the gear 410a is rotated in the direction as shown by the arrow WE or in the direction as shown by the arrow WF, the clutch 412 is rotated through the gear 412b being meshed with the gear 410a in the direction as shown by the arrow WF or in the direction as shown by the arrow WE. Then, the driving screw 411 is rotated through the gear 411a being meshed with the gear 412c of the clutch 412 in the direction as shown by the arrow WE or in the direction as shown by the arrow WF in Fig.71. On this occasion, since the number of teeth of the gear 410a and the gear 411a and the number of teeth of the gear 412b and the gear 412c are same respectively, the driving screw 410, 411 is rotated in the same direction at the same rotation angular velocity. For this reason, the spindle stock 403, 405 is synchronously moved through the nut 403c, 405c being fitted in each driving screw 410, 411 in the direction as shown by the arrow WA or in the direction as shown by the arrow WB (Z axis direction), properly.

In this way, the predetermined machining is performed toward the workpiece 417 in such a manner that the spindle stock 403, 405 as shown in Fig.71 is synchronously moved in the directions as shown by the arrows WA and WB (Z axis direction), and the tool rest 413, 415 as shown in Fig,72 is moved and driven together with the tool 416 in the directions as shown by the arrows WG and WH (X axis direction), properly.

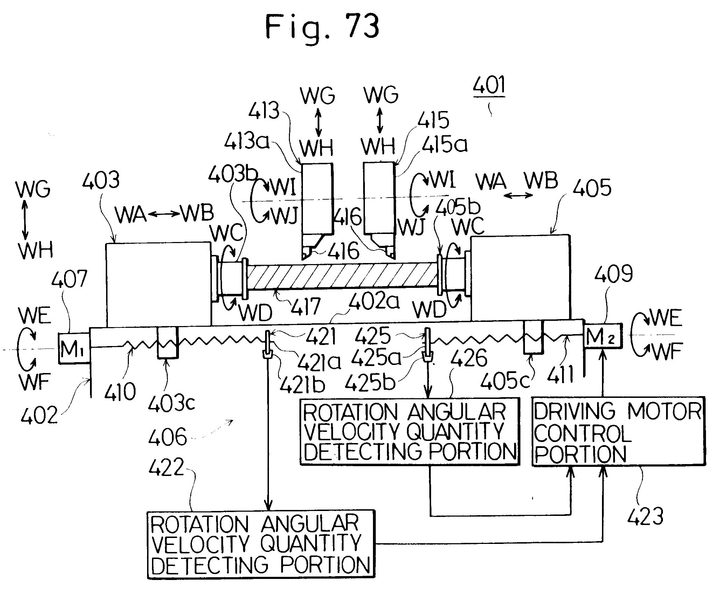

In the above-described embodiment, it mentioned the case that two spindle stocks 403 and 405 facing mutually was synchronously moved in the directions as shown by the arrows WA and WB (that is, Z axis direction) by means of the spindle stock driving unit 406 as shown in Fig.71. In the spindle stock driving unit 406, that isn't the thing. Any constitution is available if the spindle stock 403, 405 can be synchronously moved in the Z axis direction. The case that the spindle stock 403, 405 is synchronously moved and driven in the Z axis direction by means of the spindle stock driving unit 406 as shown in Fig.73 will be described thereinafter. The same portion with the described portion in Fig.71 and Fig.72 are marked the same numerals. Therefore, the explanation of its part is omitted.

A rotary encoder 421, 425 is installed in each top edge portion of the driving screw 410, 411 being composed of the spindle stock driving unit 406 of the complex machining machine tool 401 as shown in Fig.73. The rotary encoder 421, 425 has a disc 421a, 425a providing a number of magnetic and optical marks (not shown). The sensor 421b, 425b for reading the mark is disposed at the lower position of the disc 421a, 425a in Fig.73, respectively. A rotation angular velocity detecting portion 422 connects with the torary encoder 421. A driving motor control portion 423 connects with the rotation angular velocity detecting portion 422. The driving motor control portion 423 connects with the driving motor 409. The rotation angular velocity detecting portion 426 connects with the rotary encorder 425 being installed in the top edge portion of the driving screw 411. The rotation angular velocity detecting portion 426 connects with the driving motor control portion 423.

In the case that a long sized workpiece 417 is required to be machined by means of the complex machining machine tool 401 as shown in Fig.73, both right and left edges portions of the workpiece 417 in the figure are held by the chuck 403b, 405b being installed in each spindle stock 403, 405. Besides, the turret head 413a, 415a of the tool rest 413, 415 as shown in Fig.72 is properly rotated in the direction as shown by the arrow WI or in the direction as shown by the arrow WJ. Then, the tool 416, 416 to be used for the machining is positioned at the position facing to the workpiece 417. In this state, the chuck 403b, 405b is simultaneously rotated together with the workpiece 417 in the direction as shown by the arrow WC or in the direction as shown by the arrow WD. Furthermore, the driving motor 407 as shown in Fig.73 is driven to rotate the driving screw 410 in the direction as shown by the arrow WE or in the direction as shown by the arrow WF, properly. Then, the spindle stock 403 is moved together with the chuck 403b through the nut 403c in the direction as shown by the arrow WA or WB (that is, Z axis direction). At the same time, the disc 421a being composed of the rotary encorder 421 is also rotated together with the driving screw 410 in the direction as shown by the arrow WE or WF. Then, the sensor 421b reads out the marks on the disc 421a to output them to the rotation angular velocity detecting portion 422.

The rotation angular velocity detecting portion 422 being on a basis of said reading, detects the rotation angular velocity of the driving screw 410 in the direction as shown by the arrow WE or in the direction as shown by the arrow WF in Fig.73, and outputs the control signal corresponding to said rotation angular velocity to the driving motor control portion 423. Then, the driving motor control portion 423 being on a basis of said outputted signal controls the driving motor 409. And, the driving screw 411 is rotated in the same direction with the screw 410 as shown by the arrow WE or in the direction as shown by the arrow WF, in the shape of equalling the rotation angular velocity to that of the driving screw 410. Therefore, the spindle stock 405 is moved through the nut 405c together with the chuck 405b in the direction as shown by the arrow WA or in the direction as shown by the arrow WB (Z axis direction), synchronizing with the spindle stock 403.

On this occasion, the disc 425a of the rotary encorder 425 as shown in Fig.73 is also rotated together with the driving screw 411 in the direction as shown by the arrow WE or in the direction as shown by the arrow WF. Then, the sensor 425b reads the marks on the disc 425a, and output them to the rotation angular velocity detecting portion 426. The rotation angular velocity detecting portion 426 being on a basis of said reading, detects the rotation angular velocity of the driving screw 411 in the directions as shown by the arrows WE or WF, and outputs said rotation angular velocity to the driving motor control portion 423. Then, the driving mortor control portion 423 outputs the corrected driving signal so as to being zero for their deflection, to the driving motor 409 in such a manner that said rotation angular velocity is made comparison with the rotation angular velocity of the driving motor 407 being outputted from the rotation angular velocity detecting portion 422. The driving motor 409 being on a basis of said corrected driving signal to rotate the driving screw 411 in the direction as shown by the arrow WE or in the direction as shown by the arrow WF. Accordingly, the rotation angular velocity of the driving screw 410, 411 keeps the same. And, the spindle stock 403, 405 is simultaneously and smoothly moved in the directions as shown by the arrows WA and WB (Z axis direction) in the state of supporting the workpiece 417 between the chucks 403b and 405b.

In this way, the spindle stock 403, 405 as shown in Fig.73 is simultaneously moved together with the workpiece 417 in the directions as shown by the arrows WA and WB (Z axis direction). Furthermore, the tool rest 413, 415 is properly moved toghther with the tool 416, 416 in the directions as shown by the arrows WG and WH (X axis direction). Then, the workpiece 417 is machined in the predetermined shape by means of each tool 416.

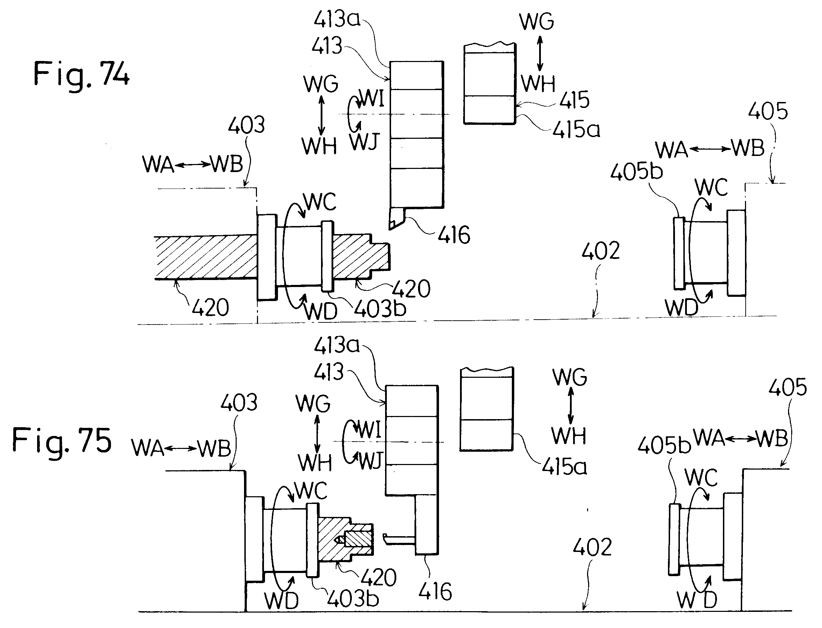

Thereafter, the case that a bar shaped workpiece is machined by means of the complex machining machine tool 401, will be described. That is, in the case that the bar shaped workpiece 420 as shown in Fig.74 is required to be machined, the bar shaped workpiece 420 is pushed out through the chuck 403b being installed in the spindle stock 403 in the direction as shown by the arrow WB by means of the barfeeder apparatus (not shown). Thus the top edge portion in the figure of the bar shaped workpiece 420 to be performed the first routine is set in the shape of projecting from the chuck 403b in the direction as shown by the arrow WB. Thereafter, the turret head 413a of the tool rest 413 is properly rotated in the direction as shown by the arrow WI or in the direction as shown by the arrow WJ in Fig.74. Then, the tool 416 for turning the outside diameter is positioned at the position facing to the bar shaped workpiece 420. Next, in this state, the chuck 403b is rotated together with the bar shaped workpiece 420 in the direction as shown by the arrow WC. When the bar shaped workpiece 420 is rotated in the direction as shown by the arrow WC, the driving motor 407 as shown in Fig.71 is driven, and the driving screw 410 is properly rotated in the direction as shown by the arrow WE or in the direction as shown by the arrow WF. Moreover, the spindle stock 403 is properly moved through the nut 403c in the direction as shown by the arrow WA or in the direction as shown by the arrow WB (Z axis direction). At the same time, the tool rest 413 as shown in Fig.74 is moved and driven together with the tool 416 in the directions as shown by the arrows WG and WH (X axis direction), properly. Thus the machining for turning is performed toward the outside cylindrical portion of the bar shaped workpiece 420 by means of the stool 416 in the predetermined shape.

When the machining for turning is performed toward the outside cylindrical portion of the bar shaped workpiece 420, as shown in Fig.74, the tool rest 413 is properly moved in the direction as shown by the arrow WG to retracted from the bar shaped workpiece 420. In this state, the turret head 413a of the tool rest 413 is properly rotated in the direction as shown by the arrow WI or in the direction as shown by the arrow WJ. So, the tool 416 for turning the inside diameter, such as a drill, a boring tool, is positioned at the position facing to the bar shaped workpiece 420. Thereafter, in the state, the tool rest 413 is fed with the predetermined distance together with the tool 416 in the direction as shown by the arrow WH in Fig.75. Moreover, the spindle stock 403 is moved and driven properly in the directions as shown by the arrows WA and WB (Z axis direction) in the state that the bar shaped workpiece 420 is held by the chuck 403b. In this way, the inside diameter portion of the bar shaped workpiece 420 is machined by means of the tool 416.

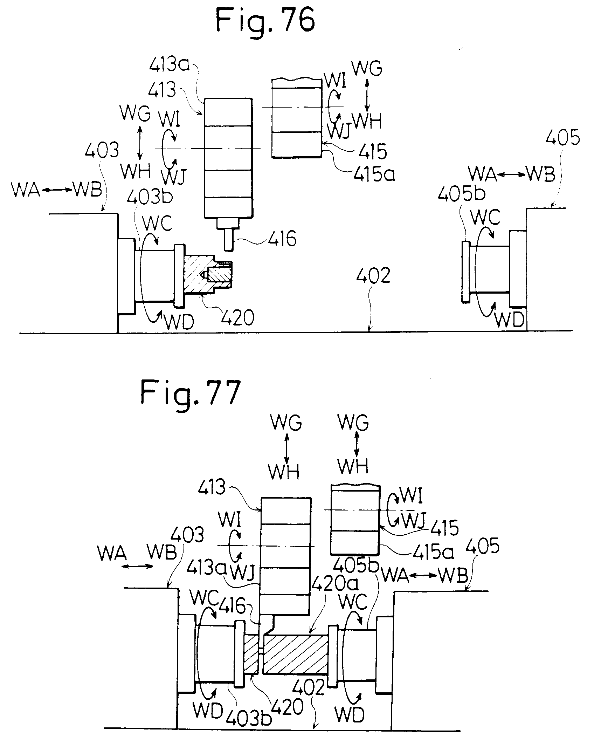

When the inside diameter portion of the bar shaped workpiece 420 is machined as shown in Fig.75, the spindle stock 403 is properly moved in the direction as shown by the arrow WA, to be out the tool used for the machining of the inside diameter portion. In this state, the tool rest 413 is moved in the direction as shown by the arrow WG to be retracted from the bar shaped workpiece 420. When the tool rest 413 is retracted, the turret head 413a is properly rotated in the directions as shown by the arrows WI or WJ. So, the tool 416, such as a end mill, is positioned at the position facing to the bar shaped workpiece 420. Thereafter, the rotation of the chuck 403b in the direction as shown by the arrow WC is stopped, and the tool 416 is rotated and driven. In this state, the tool rest 413 is fed with the predetermined quantity in the direction as shown by the arrow WH in Fig.76, and the spindle stock 403 is moved and driven in the directions as shown by the arrows WA and WB (Z axis direction), properly. In this way, the milling machining is performed toward the bar shaped workpiece 420. The chuck 403b of the spindle stock 403 is properly rotated in the directions as shown by the arrows WC and WD by C-axis control. In this state, the milling machining can be performed. After the milling machining, the tool rest 413 is retracted from the bar shaped workpiece 420 in the direction as shown by the arrow WG. In this state, the cutting-off tool 416 is positioned at the position facing to the bar shaped workpiece 420.

In this way, when the first routine of the machining is performed toward the top edge portion of the bar shaped workpiece 420, the tool rest 413 is moved in the direction as shown by the arrow WG to be retracted from the bar shaped workpiece 420, and the rotation of the chuck 403b in the directions as shown by the arrows WC and WD is stopped. Thereafter, the chuck 403b as shown in the Fig.76 is loosen. In this state, the barfeeder apparatus (not shown) is driven, and the bar shaped workpiece 420 is pushed out with predetermined length in the direction as shown by the arrow WB, through the chuck 403b. When the bar shaped workpiece 420 is pushed out with the predetermined length from the chuck 403b, the chuck 403b is fastened to hold the bar shaped workpiece 420. In this state, the portion to which the first routine of the machining is performed in the bar shaped workpiece 420 is fitted into the chuck 405b, in such a manner that the chuck 405b of the spindle stock 405 is loosened, and the tool rest 405 is moved in the direction as shown by the arrow WA in Fig.76. In this state, the chuck 405b is fastened, and the bar shaped workpiece 420 is supported between the chucks 403b and 405b.

Thereafter, in this state, the cutting-off tool 416 which is installed in the tool rest 413 is positioned at the position facing to the bar shaped workpiece 420. When the tool 416 is faced to the bar shaped workpiece 420, the portion (This is called as the parts 420a, thereinafter) including the portion to which the first routine of the machining of the bar shaped workpiece 420 have finished, and the raw portion to be performed the second routine of the machining of the bar shaped workpiece 420 as scheduled, is cut off from the other raw portion of the bar shaped workpiece 420 by means of the tool 416, in such a manner that the chuck 403b, 405b as shown in Fig.77 is synchronously rotated together with the bar shaped workpiece 420 in the direction as shown by the arrow WC by means of the method described before, and the tool rest 413 is fed with the predetermined distance in the direction as shown by the arrow WH.

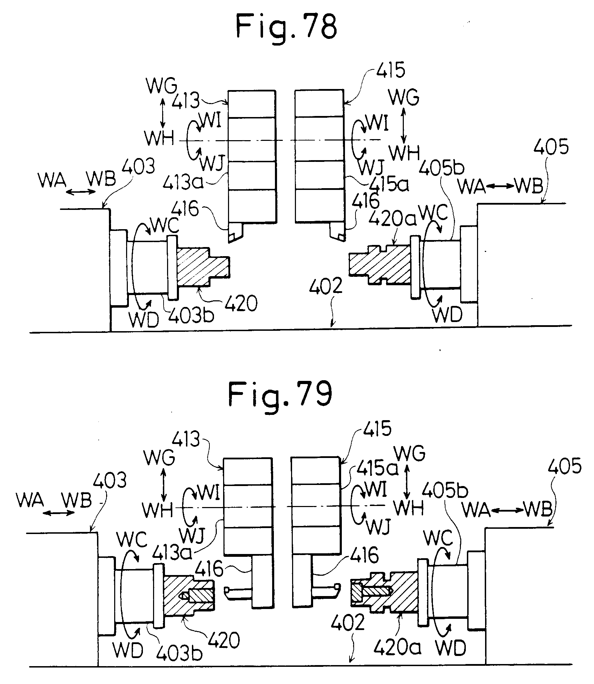

In this way, at the time that the parts 420a is cut off as shown in Fig.77, the tool rest 413 is retracted from the bar shaped workpiece 420 in the direction as shown by the arrow WG, and the spindle stock 405 is moved the predetermined distance in the direction as shown by the arrow WB, that is, in the direction away from the spindle stock 403 in the state that the parts 420a is held by the chuck 405b. Thereafter, the rotation of the chuck 403b in the direction as shown by the arrow WC is stopped. In this state, the chuck 403b is loosened. Next, the bar shaped workpiece 420 is pushed out from the chuck 403b in the direction as shown by the arrow WB as shown in Fig.78 in such a manner that the barfeeder apparatus is gone. The raw portion of the bar shaped workpiece 420 is projected with the predetermined length from the chuck 403b in the direction as shown by the arrow WB. In this state, the chuck 403b is fastened, and the bar shaped workpiece 420 is held.

Thereafter, in this state, the first routine is performed toward the raw portion of the bar shaped workpiece 420. At the same time, the second routine is performed toward the parts 420a. For the sake of this, at first, the turret head 413a, 415a of the tool rest 403, 405 is properly rotated in the direction as shown by the arrow WI or in the direction as shown by the arrow WJ in Fig.78, respectively, and the tool 416, 416 for turning the outside diameter is positioned at the position facing to the bar shaped workpiece 420, the parts 420a, respectively. Thereafter, each chuck 403b, 405b of the tool rest 403, 405 is rotated in the direction as shown by the arrow WC, respectively. In this state, the machining for turning is performed in the predetermined shape toward each outside cylindrical portion of the bar shaped workpiece 420, the parts 420a by means of the tool 416, 416, in such a manner that the spindle stock 403, 405 is properly and independently moved and driven in the directions as shown by the arrows WA and WB (Z axis direction), and the tool rest 413, 415 is properly moved together with the tool 416, 416 in the directions as shown by the arrows WG and WH, that is, in X axis direction.

When each outside cylindrical portion of the bar shaped workpiece 420 and the parts 420a is machined for the turning as shown in Fig.78, respectively, the tool rest 413, 415 is retracted from the bar shaped workpiece 420, the parts 420a, and in this state, the tool 416, 416 which is installed in the tool rest 413, 415, for turning the inner diameter is respectively positioned at the position facing to the bar shaped workpiece 420, the parts 420a. Thereafter, the tool rest 413, 415 is fed with the predetermined distance in the direction as shown by the arrow WH in Fig.79. And, each tool 416 as described before, is faced to the right edge surface of the bar shaped workpiece 420 in the figure, to the left edge surface of the parts 420a in the figure, respectively. In this state, the spindle stock 403, 405 is moved in the directions as shown by the arrows WA and WB (Z axis direction) in the shape of being independent respectively. In this way, each inside diameter portion of the bar shaped workpiece 420 and the parts 420a is machined in the predetermined shape.

When each inside diameter portion of the bar shaped workpiece 420 and the parts 420a is machined in the predetermined shape as shown in Fig.79, the spindle stock 403 is properly moved in the direction as shown by the arrow WA, and the spindle stock 405 is properly moved in the direction as shown by the arrow WB, to be out each tool 416 from each inside diameter portion. In this state, the tool rest 413, 415 is moved in the direction as shown by the arrow WG, to be retracted from the bar shaped workpiece 420, and the like. Furthermore, the rotation of the chuck 403b, 405b in the direction as shown by the arrow WC is stopped.

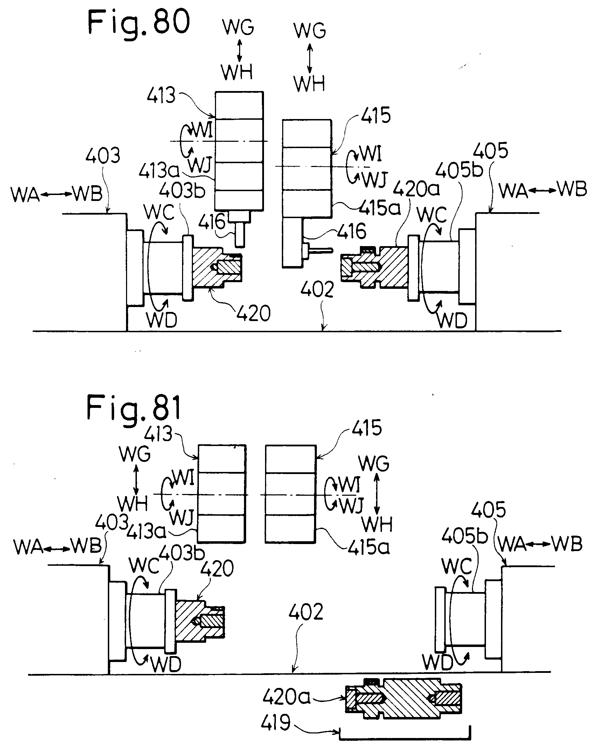

Thereafter, in this state, the milling machining is performed toward the bar shaped workpiece 420 by means of the tool 416 in such a manner that the tool rest 413 as shown in Fig.80 is fed with the predetermined quantity together with the tool 416 for the milling machining in the direction as shown by the arrow WH, and the spindle stock 403 is properly moved together with the bar shaped workpiece 420 in the directions as shown by the arrows WA and WB (Z axis direction). On this occasion, the chuck 403b is properly rotated in the directions as shown by the arrows WC and WD by means of the C-axis control, so that the milling machining can be performed. And, the second routine is performed in paralle with the said milling machining in such a manner that the other tool rest 415 is fed with the predetermined quantity together with the tool 416, such as a drill, in the direction as shown by the arrow WH, to face the tool 416 to the machining portion of the parts 420a as shown in Fig.80, in this state, the spindle stock 405 is properly moved together with the parts 420a in the directions as shown by the arrows WA and WB (Z axis direction), to perform a drill machining and the like toward the parts 420a by means of the tool 416. When the second routine finishes toward the parts 420a, the chuck 405b is loosened to detach the machined parts 420a from the chuck 405b, and said parts 420a is threw into the parts catcher 419 being at the lower part in Fig.81. In this way, the first routine is performed in parallel with the second routine, so that the successive machining is performed toward the bar shaped workpiece 420, and a large number of the machined parts 420a are made.

In the above-descrived embodiment, it mentioned the case that the bar shaped workpiece 420 was respectively fed with the predetermined length through the chuck 403b from the spindle stock 403 in the direction as shown by the arrow WB in two times, that is, one time is before the cutting-off and the other time is after the cutting-off, by means of the bar-feedeer apparatus (not shown) as shown in Fig.77 and Fig.78. With respect to the time that the bar shaped workpiece 420 is fed, that isn't the thing. The said delivering activity can finish at one time, either before the cutting-off or after the cutting-off.

In the above-described embodiment, it has mentioned the case that after the first routine finishes toward the bar shaped workpiece 420, the portion of which the first routine is performed toward the bar shaped workpiece 420 is fed in the direction as shown by the arrow WB by means of the barfeeder apparatus, to hold it by the chuck 405b, in this state, the bar shaped workpiece 420 is cut off to leave the parts 420a from the other raw portion. However, it may be the case that the bar shaped workpiece 420 is pulled out with the quantity to be performed the first routine next from the chuck 403b in the direction as shown by the arrow WB by means of the spindle stock 405 without the barfeeder apparatus before the cutting-off, then cut off. That is, after the first routine finishes toward the bar shaped workpiece 420 as shown in Fig.76, the rotation of the chuck 403b in the direction as shown by the arrow WC is stopped. In the state, the chuck 405b of the spindle stock 405 is loosened. Furthermore, the tool rest 405 is moved the predetermined distance in the direction as shown by the arrow WA, and the the portion of the bar shaped workpiece 420 to which the first routine is performed is fitted into the chuck 405b. At the time that said portion is fitted into the chuck 405b, the chuck 405b is fastened, and the bar shaped workpiece 420 is held. At the same time, the chuck 403b is loosened, and the holding relation between the chuck 403b and the bar shaped workpiece 420 is released. In this state, the spindle stock 405 is moved the predetermined distance together with the chuck 405b in the direction as shown by the arrow WB, that is, in the direction away from the spindle stock 403. Then, the bar shaped workpiece 420 is pulled out with the quantity to be performed the first routine next from the chuck 403b in the direction as shown by the arrow WB in the shape of being pulled by the spindle stock 405. In this way, when the bar shaped workpiece 420 is pulled out with the quantity to be performed the first routine next from the chuck 403b, the chuck 403b is fastened to hold the bar shaped workpiece 420.

In this way, when the bar shaped workpiece 420 is supported between the chucks 403b and 405b, the chuck 403b, 405b is synchronously rotated in the direction as shown by the arrow WC, and the spindle stock 403, 405 is properly moved together with the bar shaped workpiece 420 in the directions as shown by the arrows WA and WB (Z axis direction). So, the tool 416 for cutting-off which is installed in the tool rest 413 is faced to the portion of the bar shaped workpiece 420 to be cut off. In this state, the tool rest 413 is fed with the predetermined distance in the direction as shown by the arrow WH, to cut the bar shaped workpiece 420 by means of the tool 416 for cutting-off. In this way, the parts 420a is cut off from the other raw portion of the bar shaped workpiece 420. Then, the bar shaped workpiece 420 is pulled out with the length corresponding to the length to be performed the first routine of the machining next, at the side of the spindle stock 403, to be able to start the machining immediately.

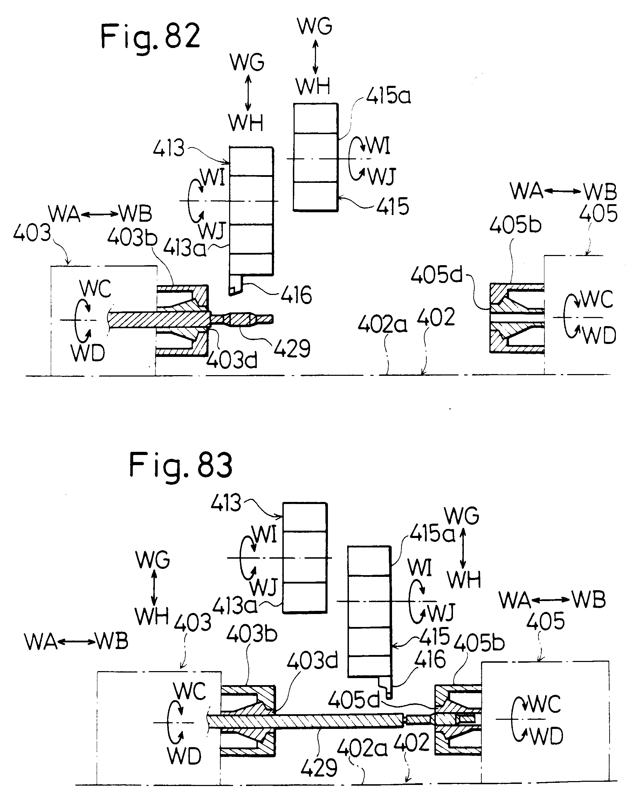

Thereafter, in the case that the long and slender shaft shaped workpiece 429 as shown in Fig.82 is machined making use of the complex machining machine tool 401, the shaft shaped workpiece 429 is held by the chuck 403b in the shape of projecting with the predetermined length from the chuck 403b which is installed in the spindle stock 403 in the direction as shown by the arrow WB. When the shaft shaped workpiece 429 is held by the chuck 403b as shown in Fig.82, the chuck 403b is rotated in the direction as shown by the arrow WC. At the same time, the tool 416 for turning is positioned at the position facing to the shaft shaped workpiece 429 in such a manner that the turret head 413a of the tool rest 413 is properly rotated in the direction as shown by the arrow WI or in the direction as shown by the arrow WJ in Fig.82. Thereafter, in this state, the spindle stock 403 is moved and driven together with the chuck 403b in the directions as shown by the arrows WA and WB (Z axis direction). Moreover, the tool rest 413 is properly moved and driven in the directions as shown by the arrows WG and WH (X axis direction). So, the machining for turning is performed toward the portion of the shaft shaped workpiece 429 projecting from the chuck 403b in the direction as shown by the arrow WB by means of the tool 416.

When the machining for turning is performed toward the said portion of the shaft shaped workpiece 429, the tool rest 413 is properly moved in the direction as shown by the arrow WG to be retracted from the shaft shaped workpiece 429. Thereafter, the workpiece holding portion 405d of the chuck 405b which is installed in the spindle stock 405 as shown in Fig.82 is loosened. In this state, the spindle stock 405 is moved the predetermined distance together with the chuck 405b toward the spindle stock 403 in the direction as shown by the arrow WA, and the machined portion of the shaft shaped workpiece 429 is fitted into the workpiece holding portion 405d. At the time that the said portion is fitted into the workpiece holding portion 405d, the workpiece holding portion 405d is fastened, the shaft shaped workpiece 429 is hold. At the same time, the workpiece holding poriton 403b of the chuck 403b is loosened, and the holding relation between the chuck 403b and the shaft shaped workpiece 429 is released.

In this state, the spindle stock 405 is moved the predetermined distance together with the chuck 405b in the direction as shown by the arrow WB, that is, in the direction away from the spindle stock 403. Then, the shaft shaped workpiece 429 is pulled out with the predetermined length from the chuck 403b which is installed in the spindle stock 403 in the direction as shown by the arrow WB in the shape of being pulled by the spindle stock 405 as shown in Fig.83. In this way, when the raw portion of the shaft shaped workpiece 429 is pulled out with the predetermined length from the chuck 403b,the workpiece holding portion 403d of the chuck 403b is fastened to hold the shaft shaped workpiece 429.

In this state, the chuck 403b, 405b as shown in Fig.83 is synchronously rotated in the direction as shown by the arrow WC, at the same time the tool 416 using for the machining is positioned at the position facing to the shaft shaped workpiece 429 in such a manner that the turret head 415a of the tool rest 415 is properly rotated in the direction as shown by the arrow WI or in the direction as shown by the arrow WJ. Thereafter, the machining for turning is performed toward the the raw portion (The raw portion of the nearby chuck 403b is excluded.) of the shaft shaped workpiece 429 which is pulled from the chuck 403b in the direction as shown by the arrow WB in such a manner that the spindle stock 403, 405 is synchronously and properly moved in the directions as shown by the arrows WA and WB (Z axis direction), and the tool rest 415 is moved together with the tool 416 in the directions as shown by the arrows WG and WH (X axis direction).

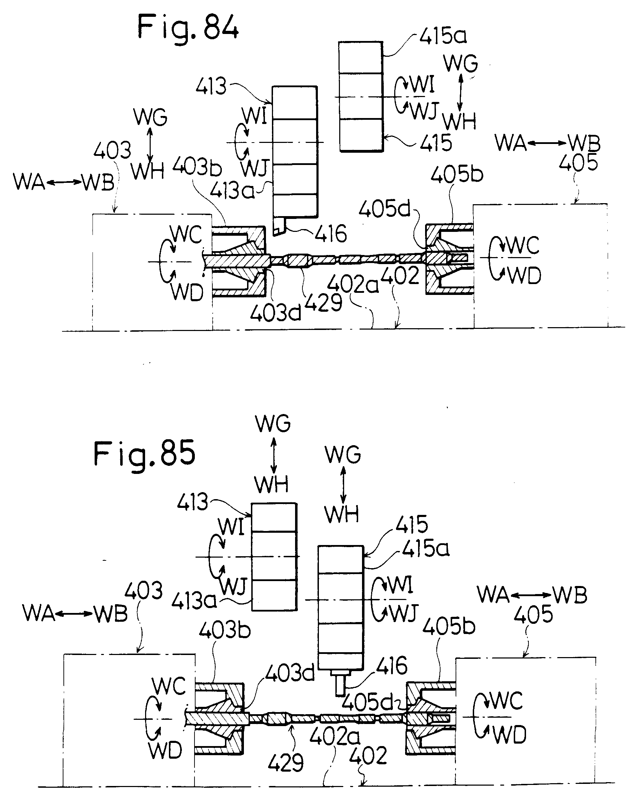

When the machining for turning is performed toward the said raw portion, the tool rest 415 is properly moved in the direction as shown by the arrow WG as shown in Fig.84, to be retracted from the shaft shaped workpiece 429. Next, the tool 416 using for the machining is positioned at the position facing to the shaft shaped workpiece 429 in such a manner that the tool rest 413 is properly rotated in the direction as shown by the arrow WI or in the direction as shown by the arrow WJ. In this state, the spindle stock 403, 405 is synchronously and properly moved in the directions as shown by the arrows WA and WB (Z axis direction). And, the tool rest 413 is properly moved together with the tool 416 in the direcions as shown by the arrows WG and WH (X axis direction). Then, the machining for turning is performed toward the raw portion of the shaft shaped workpiece 429 adjacent to the chuck 403b.

In this way, when the machining for turning is performed toward the outside cylindrical portion of the shaft shaped workpiece 429 as shown in Fig.84, the rotation of the chuck 403b, 405b in the direction as shown by the arrow WC is stopped, and the tool rest 413 is retracted from the shaft shaped workpiece 429. Thereafter, the tool 416 for the milling machining is positioned at the position facing to the shaft shaped workpiece 429 as shown in Fig.85 in such a manner that the tool rest 415 is properly rotated in the direction as shown by the arrow WI or in the direction as shown by the arrow WJ. In this state, the tool rest 415 is fed with the predetermined quantity together with the tool 416 for the milling machining in the direction as shown by the arrow WH. Furthermore, the spindle stock 403, 405 is synchronously and properly moved in the directions as shown by the arrows WA and WB (Z axis direction). So, the milling machining is performed toward the outside surrounding portion of the shaft shaped workpiece 429. On this occasion, the milling machining can be performed in such a manner that the chuck 403b, 405b is synchronously and properly rotated in the directions as shown by the arrows WC and WD by means of the C-axis control. After the milling machining finishes, the tool rest 415 is retracted from the shaft shaped workpiece 429.

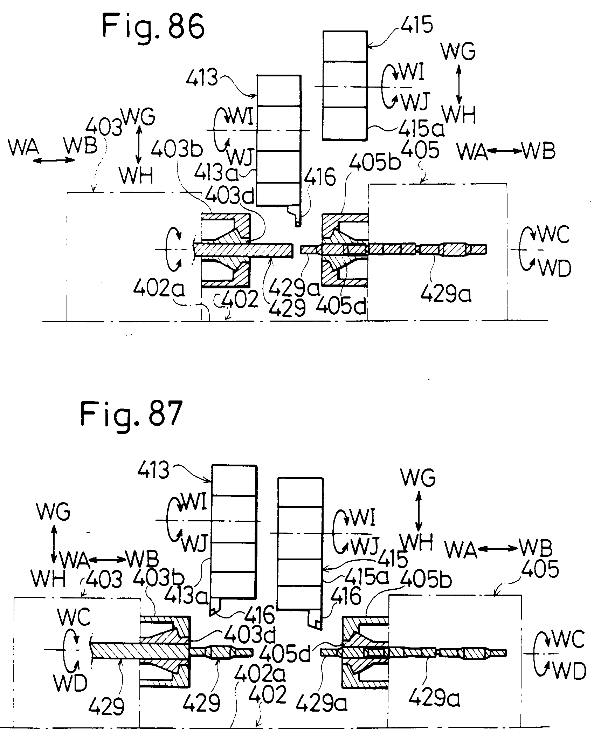

In this way, when the top edge portion of the shaft shaped workpiece 429 is machined with the predetermined length, the holding relation between the chuck 405b and the shaft shaped workpiece 429 is released by loosening the chuck 405b. Moreover, in this state, the spindle stock 405 is moved with the predetermined distance in the direction as shown by the arrow WA. Then, the chuck 405b is moved in the direction as shown by the arrow WA in the shape of making the machined portion of the shaft shaped workpiece 429 successively pass in the workpiece holding portion 405d, to be positioned at the position adjacent to the chuck 403b. In this state, the chuck 405b is fastened to hold the shaft shaped workpiece 429, and the chuck 403b is loosened. Next, in this state, the spindle stock 405 is moved the predetermined distance together with the chuck 405b in the direction as shown by the arrow WB, to pull out the shaft shaped workpiece 429 from the chuck 403b with the predetermined length in the direction as shown by the arrow WB. When the shaft shaped workpiece 429 is pulled out with the predetermined length from the chuck 403b, the chuck 403b is fastened to hold the shaft shaped workpiece 429. In this state, the chuck 403b, 405b is synchronously rotated in the direction as shown by the arrow WC. Furthermore, the spindle stock 403, 405 is properly moved together with the shaft shaped workpiece 429 in the directions as shown by the arrows WA and WB. So, the porion of the shaft shaped workpiece 429 to be cut is faced to the tool for cutting-off 416 which is installed in the tool rest 413. Thereafter, the tool rest 413 is fed with the predetermined distance together with the tool 416 for cutting-off in the direction as shown by the arrow WH as shown in Fig.86. Then, the shaft shaped workpiece 429 is cut by means of the tool 416 in the directions as shown by the arrows WG and WH, and the machined portion (It is called the parts 429a, hereinafter) is cut off from the other raw portion of the shaft shaped workpiece 429.

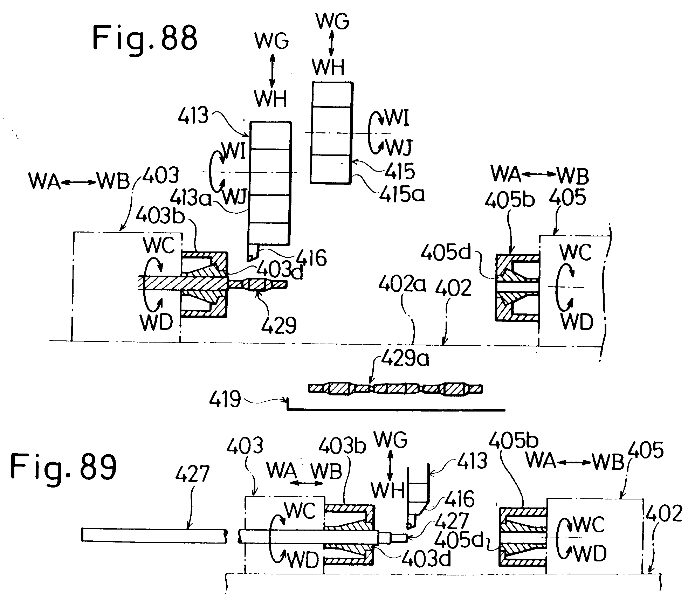

When the shaft shaped workpiece 429 is cut off, the tool rest 413 is retracted from the shaft shaped workpiece 429, and the spindle stock 405 is moved the predetermined distance together with the chuck 405b in the direction as shown by the arrow WB as shown in Fig.87. Then, the parts 429a is moved the predetermined distance together with the chuck 405b in the direction as shown by the arrow WB. In this state, the spindle stock 405 is moved and driven in the directions as shown by the arrows WA and WB (Z axis direction), and the tool rest 415 is moved and driven together with the tool 416 in the directions as shown by the arrows WG and WH (X axis direction). So, the predetermined machining is performed toward the parts 429a. In parallel with this, the spindle stock 403 is moved and driven in the directions as shown by the arrows WA and WB (Z axis direction). Moreover, the tool rest 413 is moved and driven together with the tool 416 in the directions as shown by the arrows WG and WH (X axis direction). So, the same machining with the machining as shown in Fig.82 is performed toward the raw portion of the shaft shaped workpiece 429 being held by the chuck 403b. When the machining finishes toward the parts 429a, the chuck 405b is loosened to take out the parts 429a from the chuck 405b, and the parts 429a is threw in the parts catcher 419 as shown in Fig.88 below.

Furthermore, the case that the long sized workpiece 427 as shown in Fig.89 is fed from the spindle stock 403 in the direction as shown by the arrow WB without using the barfeeder apparatus, by means of the workpiece machining method in the complex machining machine tool of the present invention, and the machining toward the workpiece 427 is performed without using the center rest, will be described. That is, in order to machine the workpiece 427, the workpiece 427 is set so as to project with the predetermined length from the chuck 403b through the workpiece holding portion 403d of the chuck 403b which is installed in the spindle stock 403 in the direction as shown by the arrow WB. Thereafter, the chuck 403b is rotated together with the workpiece 427 in the direction as shown by the arrow WC, and the tool 416 using for the machining among the tools 416 which are installed in the tool rest 413 is positioned at the position facing to the workpiece 427. Next, in this state, the spindle stock 403 is properly moved together with the chuck 403b (that is, the workpiece 427) in the directions as shown by the arrows WA and WB (Z axis direction), and the tool rest 413 is properly moved together with the tool 416 for the machining in the directions as shown by the arrows WG and WH (X axis direction). Then, the top edge portion of the workpiece 427 is macnined by means of the tool 416.

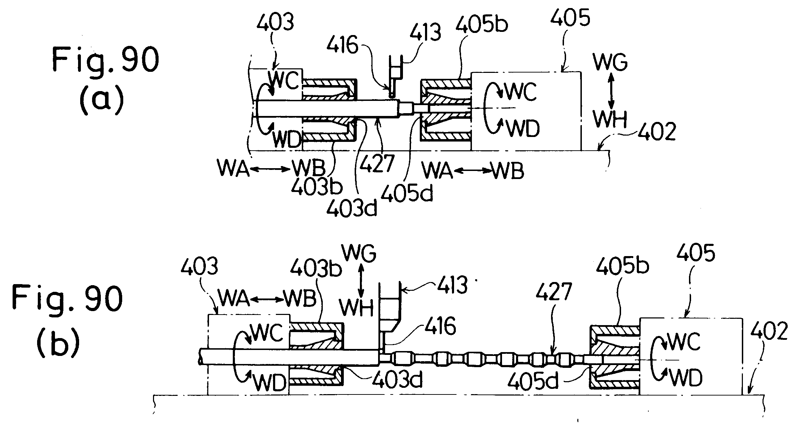

When the top edge portion of the workpiece 427 is machined, the rotation of the chuck 403b in the direction as shown by the arrow WC is stopped, and the tool rest 413 is moved in the direction as shown by the arrow WG to be retracted from the workpiece 427. Moreover, in this state, the tool using for the next machining (see Fig.90 (a) ) among the tools 416 which are installed in the tool rest 413 is positioned at the position facing to the workpiece 427. Next, the workpiece holding portion 405d of the chuck 405b which is installed in the spindle stock 405 as shown in Fig.89 is loosened. In this state, the spindle stock 405 is moved the predetermined distance together with the chuck 405b toward the spindle stock 403 in the direction as shown by the arrow WA, to fit the top edge portion of the workpiece 427 into the workpiece holding portion 405d as shown in Fig.90 (a). When the said top edge portion fits into the workpiece holding portion 405d, the workpiece holding portion 405d is fastened, and the top edge portion is held by the spindle stock 405. At the same time, the workpiece holding portion 403d of the chuck 403b is loosened a little. So, the holding relation between the spindle stock 403 and the workpiece 427 is revised so as to move in the directions as shown by the arrows WA and WB (Z axis direction), although the workpiece 427 can't rotate in the directions as shown by the arrows WC and WD toward the chuck 403b.

In this way, when the workpiece 427 is held by each chuck 403b, 405b of the spindle stock 403, 405, the spindle stock 403, 405 is synchronously moved in the directions as shown by the arrows WA and WB, and the chuck 403b, 405b is synchronously rotated in the direction as shown by the arrow WC or in the direction as shown by the arrow WD. And, the tool rest 413 is fed with the predetermined quantity together with the tool 416 for the machining in the direction as shown by the arrow WH. Then, the tool rest 413 is positioned at the position aproaching the chuck 403b of the spindle stock 403 as shown in Fig.90 (a), and the tool 416 for the machining is positioned at the position of the machining start.

Thereafter, in the state that the spindle stock 403 is positioned at the machining position, the spindle stock 405 as shown in Fig.90 (a) is gradually moved together with the chuck 405b in the direction as shown by the arrow WB, that is, in the direction away from the spindle stock 403. Then, the workpiece 427 is pulled in the direction as shown by the arrow WB by the spindle stock 405, and the raw portion of the workpiece 427 is gradually pulled out from the chuck 403b in the direction as shown by the arrow WB through the workpiece holding portion 403d of the chuck 403b. So, the successive machining is performed toward the raw portion of the workpiece 427 being gradually pulled out from the chuck 403b by means of the tool 416 as shown in Fig.90 (a) and Fig.90 (b) in such a manner that the tool rest 413 is properly moved together with the tool 416 in the directions as shown by the arrows WG and WH. On this occasion, the chuck 403b of the spindle stock 403 holds the workpiece 427 in the state of being loosened a little so as to move in the directions as shown by the arrows WA and WB (Z axis direction) although the workpiece 427 isn't rotated in the directions as shown by the arrows WC and WD, and the machining by the tool rest 413 is performed at the position aproaching the chuck 403b. Therefore, the chuck 403b fills the role of the center rest, the workpiece 427 is machined without deflecting from the center. And, the workpiece 427 is smoothly pulled out in the direction as shown by the arrow WB on account of the above-described reason.

In the above-described embodiment, it mentioned the case that the spindle stock 405 was moved toward the spindle stock 403 in the direction as shown by the arrow WA, and in this state, the top edge portion of the workpiece 427 was held by the spindle stock 405. In the holding method of the top edge portion of the workpiece 427 by means of the spindle stock 405, that isn't the thing. Any holding method is available if the top edge portion can be properly held by the spindle stock 405. For example, the top edge portion of the workpiece 427 may be held by the spindle stock 405 in such a manner that the spindle stock 403 is moved the predetermined distance together with the workpiece 427 toward the spindle stock 405 in the direction as shown by the arrow WB. And, the top edge portion of the workpiece 427 can be held by the spindle stock 405 in such a manner that the spindle stock 403, 405 is relatively moved in Z axis direction, and the interval between the spindle stocks 403 and 405 is properly narrowed.

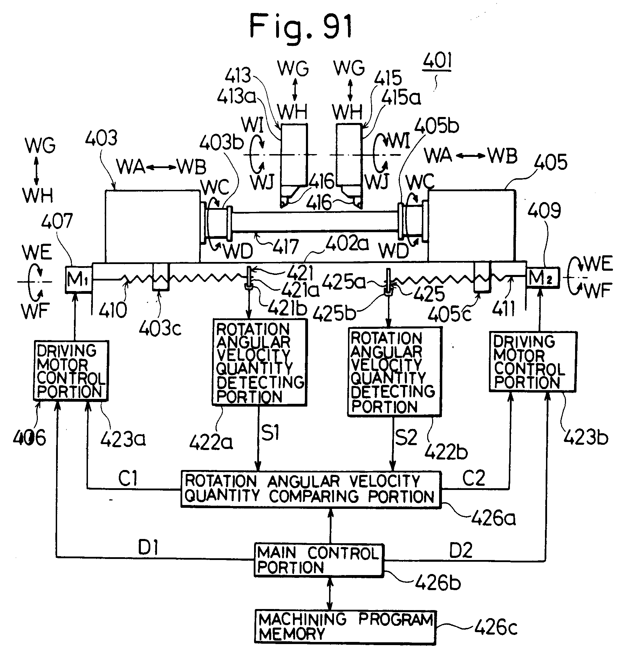

The another constitution example will be described in Fig.91, that is, the spindle stock 403, 405 facing mutually is synchronously moved in the directions as shown by the arrows WA and WB. The same portion with the described portion in Fig.73 marks the same numerals, and the explanation of the portion will be omitted.

The spindle stock driving unit 406 is provided with the machine body 402 of the complex machining machine tool 401 as shown in Fig.91. The spindle stock driving unit 406 has a driving motor 407, 409, a driving screw 410, 411, a rotary encoder 421, 425, a rotation angular velocity quantity detecting portion 422a, 422b, a driving motor control portion 423a, 423b and the like. That is, the driving motors 407 and 409 are provided with both right and left edge portions of the machine body 402 in Fig.91. Each driving motor control portion 423a, 423b is connected with the driving motor 407, 409. The driving motor control portion 423a, 423b connects with the rotation angular velocity quantity comparing portion 426a and the main control portion 426b. The rotation angular velocity quantity comparing portion 426a connects with the main control portion 426b. The machining program memory 426c connects with the main control portion 426b.

The driving screw 410, 411 being the same pitch rotatably connects with the driving motor 407, 409 in the directions as shown by the arrows WE and WF. Each nut 403c, 405c, as decribed before, fits in the driving screw 410, 411. The spindle stock 403, 405 is moved and driven through each nut 403c, 405c in the direction as shown by the arrow WA or in the direction as shown by the arrow WB (Z axis direction) in such a manner that the driving motor 407, 409 is driven to rotate the driving screw 410, 411 in the direction as shown by the arrow WE or in the direction as shown by the arrow WF.

The rotary encoder 421, 425 is installed in the top edge portion of the driving screw 410, 411. The rotary encoder 421, 425 has the disc 421a, 425a with which a number of the magnetic and optical marks (not shown) are provided. The sensor 421b, 425b to read the marks is provided with the lower portion of the disc 421a, 425a in Fig.91. The rotary encoder 421, 425 is connected with each rotation angular velocity quantity detecting portion 422a, 422b. The rotation angular velocity quantity detecting portion 422a, 422b connects with the rotation velocity quantity comparing poriton 426a.

With the above constitution of the complex machining machine tool 401, in the case that the long sized workpiece 417 is required to be machined as shown in Fig.91, both right and left edge portions in the figure of the workpiece 417 are held by the chucks 403b and 405b. In this way, when the workpiece 417 is held by the chuck 403b, 405b, the chuck 403b, 405b is synchronously rotated and driven together with the workpiece 417 in the direction as shown by the arrow WC or in the direction as shown by the arrow WD on the basis of the machining program using for the machining of the workpiece 417, being stored in the machining program memory 426c. At the same time, the turret head 413a, 415a of the tool rest 413, 415 as shown in Fig.72 is properly rotated and driven in the direction as shown by the arrow WI or in the direction as shown by the arrow WJ. So, the tool 416 to be used for the machining is positioned at the position facing to the workpiece 417. Thereafter, the driving signal D1, D2 indicating the synchronous movement of the spindle stock 403, 405 is outputted toward each driving motor control portion 423a, 423b from the main control portion 426b.

The driving motor control portion 423a, 423b receives the signals to rotate and driven the driving motor 407, 409 at the same speed. Then, the driving screw 410, 411 being connected with the driving motor 407, 409 is rotated with the same angular velocity quantity in the direction as shown by the arrow WE or in the direction as shown by the arrow WF. As a result, the spindle stock 403, 405 is synchronously moved through the nut 403c, 405c at the same speed in the directions as shown by the arrows WA and WB (that is, Z axis direction). On this occasion, the disc 421a, 425a being composed of the rotary encoder 421, 425 is also rotated in the direction as shown by the arrow WE or in the direction as shown by the arrow WF. Then, the sensor 421b, 425b reads the marks on the disc 421a, 425a. The read signal is sent to the rotation angular velocity quantity detecting portion 422a, 422b.

The rotation angular velocity quantity detecting portion 422a, 422b on the basis of the receiving the signal, detects the rotation angular velocity quantity of the driving screw 410, 411 in Fig.91 in the direction as shown by the arrow WE or in the direction as shown by the arrow WF. And, the detecting signal S1, S2 corresponding to the said rotation angular velocity quantity is outputted toward the rotation angular velocity quantity comparing portion 426a. Then, the rotation angular velocity quantity comparing portion 426a on the basis of the signals outputs the control signal C1, C2 toward the driving motor control portion 423a, 423b so that the difference between the detected rotation angular velocity quantity of the driving screws 410 and 411 becomes zero. The driving motor control portion 423a, 423b on the basis of the signals drives and controls the driving motor 407, 409. Accordingly, the rotation angular velocity quantity of the driving screw 410, 411 in the directions as shown by the arrows WE and WF always keeps the same by means of the above-described control even if the rotation of the motor 407, 409 changes while the spindle stock 403, 405 is synchronously moving in the directions as shown by the arrows WA and WB (that is, Z axis direction). Therefore, the synchronous movement is smoothly performed.

In this way, the spindle stock 403, 405 as shown in Fig.91 is synchronously moved together with the workpiece 417 in the directions as shown by the arrows WA and WB (Z axis direction). Moreover, the tool rest 413, 415 is properly moved together with the tool 416, 416 in the directions as shown by the arrows WG and WH (Z axis direction). So, the workpiece 417 is machined in the predetermined shape by means of each tool 416.

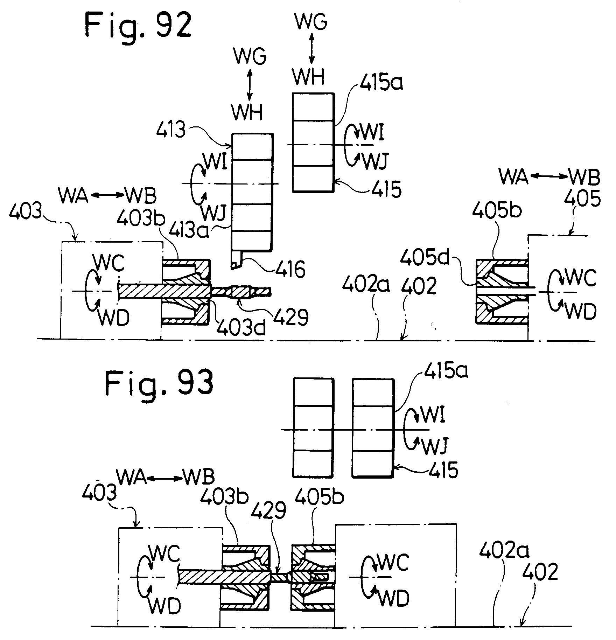

Thereafter, in the case that the slender and long sized and shaft shaped workpiece 429 as shown in Fig.92 is machined, the shaft workpiece 429 is preset in the shape of projecting with the predetermined length from the spindle stock 403 in the direction as shown by the arrow WB through the chuck 403b being installed in the spindle stock 403. When the shaft shaped workpiece 429 is set, the chuck 403b is rotated in the direction as shown by the arrow WC. At the same time, the turret head 413a of the tool rest 413 is properly rotated in the direction as shown by the arrow WI or in the direction as shown by the arrow WJ in Fig.92. So, the tool 416 for turning is positioned at the position facing to the shaft shaped workpiece 429. Next, in this state, the spindle stock 403 is moved and driven together with the chuck 403b in the directions as shown by the arrows WA and WB (Z axis direction). And, the tool rest 413 is properly moved and driven together with the tool 416 for turning in the directions as shown by the arrows WG and WH (X axis direction). So, the machining for turning is performed toward the outside cylindrical portion of the shaft shaped workpiece 429 projecting from the chuck 403b of the spindle stock 403 in the direction as shown by the arrow WB by means of the tool 416.

When the machining for turning is performed toward the outside cylindrical portion of the shaft shaped workpiece 429, the tool rest 413 is properly moved in the direction as shown by the arrow WG to be retracted from the shaft shaped workpiece 429. Furthermore, the rotation of the chuck 403b in the direction as shown by the arrow WC is stopped. Thereafter, the workpiece holding portion 405d of the chuck 405b being installed in the spindle stock 405 as shown in Fig.92 is loosened. In this state, the spindle stock 405 is moved the predetermined distance together with the chuck 405b toward the spindle stock 403 in the direction as shown by the arrow WA as shown in Fig.93, to insert the machined portion of the shaft shaped workpiece 429 into the workpiece holding portion 405d. When the machined portion is inserted into the workpiece holding portion 405d, the workpiece holding portion 405d is fastened to hold the shaft shaped workpiece 429 by the spindle stock 405. At the same time, the workpiece holding portion 403d of the chuck 403b is loosened to release the holding relation between the spindle stock 403 and the shaft shaped workpiece 429.

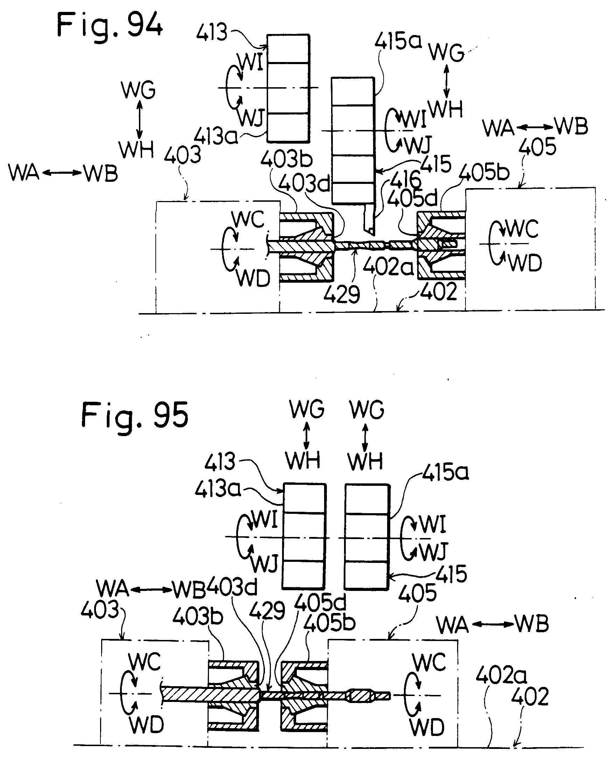

In this state, the spindle stock 405 is moved the predetermined distance together with the chuck 405b in the direction as shown by the arrow WB in Fig.93, that is, in the direction away from the spindle stock 403. Then, the shaft shaped workpiece 429 is pulled by the spindle stock 405 as shown in Fig.94, and its raw portion is pulled out with the predetermined length through the chuck 403b from the spindle stock 403 in the direction as shown by the arrow WB. In this way, when the raw portion of the shaft shaped workpiece 429 is pulled out with the predetermined length from the spindle stock 403, the workpiece holding portion 403d of the chuck 403b is fastened to hold the shaft shaped workpiece 429 by the spindle stock 403, 405.

In this state, the chuck 403b, 405b as shown in Fig.94 is synchronously rotated in the direction as shown by the arrow WC and the tool 416 for turning to be used in the machining is positioned at the position facing to the shaft shaped workpiece 429 in such a manner that the turret head 415a of the tool rest 415 is properly rotated in the direction as shown by the arrow WI or in the direction as shown by the arrow WJ. Thereafter, the spindle stock 403, 405 is synchronously and properly moved in the directions as shown by the arrows WA and WB (Z axis direction), and tool rest 415 is moved together with the tool 416 for turning in the directions as shown by the arrows WG and WH (X axis direction). So, the machining for turning is performed toward the raw portion of the shaft shaped workpiece 429, which is pulled out anew.

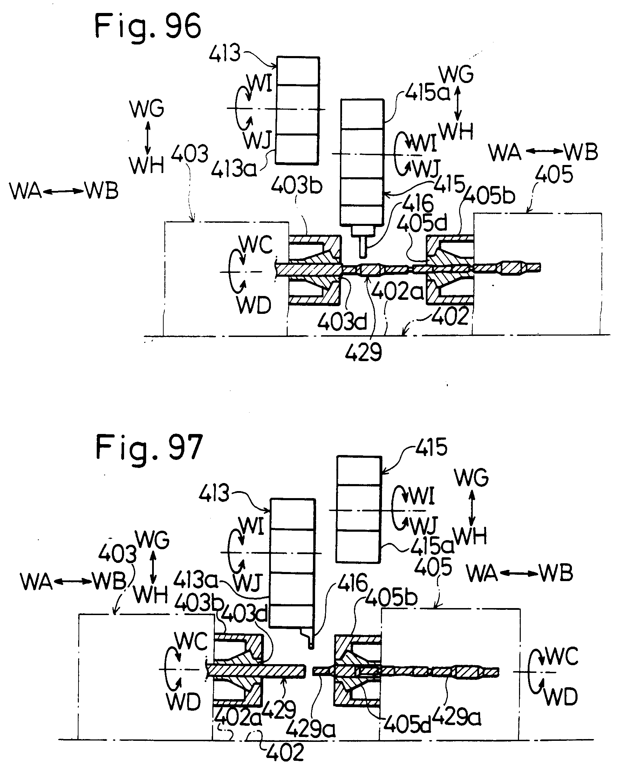

When the machining for turning is performed toward the raw portion of the shaft shaped workpiece 429 as shown in Fig.94, the rotation of the chuck 403b, 405b in the direction as shown by the arrow WC is stopped, and the tool rest 415 is moved in the direction as shown by the arrow WG to be retracted from the shaft shaped workpiece 429. Thereafter, the workpiece holding portion 405d of the chuck 405b is loosened to release the holding relation between the spindle stock 405 and the shaft shaped workpiece 429. Furthermore, in this state, the spindle stock 405 is moved the predetermined distance toward the spindle stock 403 in the direction as shown by the arrow WA. Then, chuck 405b is also moved in the direction as shown by the arrow WA in such a manner that making the machined portion of the shaft shaped workpiece 429 pass in the workpiece holding portion 405d, to position at the position aproaching the chuck 403b as shown in Fig.95. In this state, the chuck 405b is fastened to hold the shaft shaped workpiece 429 by the spindle stock 405. At the same time, the chuck 403b is loosened to release the holding relation between the spindle stock 403 and the shaft shaped workpiece 429. In this state, the spindle stock 405 is moved the predetermined distance together with the chuck 405b in the direction as shown by the arrow WB in Fig.96, that is, in the direction away from the spindle stock 403. So, the raw portion of the shaft shaped workpiece 429 is pulled out with the predetermined length from the spindle stock 403 through the chuck 403b in the direction as shown by the arrow WB. In this way, when the raw portion of the shaft shaped workpiece 429 is pulled out with the predetermined length from the spindle stock 403, the workpiece holding portion 403d of the chuck 403b is fastened to hold the shaft shaped workpiece 429 by the spindle stock 403, 405. Thereafter, the tool rest 415 is properly rotated in the direction as shown by the arrow WI or in the direction as shown by the arrow WJ, to position the tool 416 for the milling machining at the position facing to the shaft shaped workpiece 429, and rotated the tool 416. In this state, tool rest 415 is fed with the predetermined quantity together with the tool 416 in the direction as shown by the arrow WH. Futhermore, the spindle stock 403, 405 is synchronously moved in the directions as shown by the arrows WA and WB (Z axis direction). So, the milling machining is performed toward the raw portion of the shaft shaped workpiece 429 which is pulled out anew. The chuck 403b, 405b is synchronously rotated with the predetermined angle in the directions as shown by the arrows WC and WD in such a manner that the C-axis control is performed toward each spindle (not shown) of the spindle stock 403, 405. In this state, the milling machining can be performed.

In the case that the milling machining is performed, the portion of the shaft shaped workpiece 429 to be performed the milling machining is positioned at the position near the chuck 403b or 405b, and is hold. In this state, the portion of the shaft shaped workpiece 429 to be performed the milling machining is machined by means of the tool rest 415 in such a manner that the spindle stock 403, 405 is synchronously moved in the directions as shown by the arrows WA and WB. Then, the chuck 403b or 405b fills the role of the center rest since the workpiece 429 is always machined at the position approaching the chuck 403b or 405b. Accordingly, the generation of the chattering can be efficiently prevented to the workpiece 429 during the machining, and the machining can be performed with accuracy.

In this way, when the shaft shaped workpiece 429 is machined with the predetermined length, the tool rest 415 is retracted from the shaft shaped workpiece 429. Moreover, the tool 416 for cutting-off being installed in the tool rest 413 is positioned at the position facing to the shaft shaped workpiece 429. Next, the spindle stock 405 is moved in the direction as shown by the arrow WA again, to hold the workpiece 429. Furthermore, the workpiece holding portion 403d of the chuck 403b is loosened to release the holding relation between the spindle stock 403 and the shaft shaped workpiece 429. In this state, the spindle stock 405 is moved the predetermined distance together with the chuck 405b in the direction as shown by the arrow WB. Then, the raw portion of the shaft shaped workpiece 429 is pulled out with the predetermined length through the chuck 403b from the spindle stock 403 in the direction as shown by the arrow WB in such a manner that the shaft shaped workpiece 429 is pulled in the direction as shown by the arrow WB by the spindle stock 405. When the raw portion is pulled with the predetermined length from the spindle stock 403, the workpiece holding portion 403d of the chuck 403b is fastened to hold the shaft shaped workpiece 429 by the spindle stock 403, 405. When the shaft shaped workpiece 429 is held by the spindle stock 403, 405, the spindle stock 403, 405 is moved together with the shaft shaped workpiece 429 in the directions as shown by the arrows WA and WB (that is, Z axis direction). So, the portion of the shaft shaped workpiece 429 to be cut off (the boundary position between the machined portion and the raw portion) is faced to the tool 416 for cutting off being installed in the tool rest 413. In this state, the chuck 403b, 405b as shown in Fig.97 is synchronously rotated together with the shaft shaped workpiece 429 in the direction as shown by the arrow WC, and the tool rest 413 is fed with the predetermined quantity together with the tool 416 for cutting off in the direction as shown by the arrow WH. Then, the shaft shaped workpiece 429 is cut by means of the tool 416, and the machined portion (It is called as the parts 429a hereinafter) is cut off from the other raw portion of the shaft shaped workpiece 429.

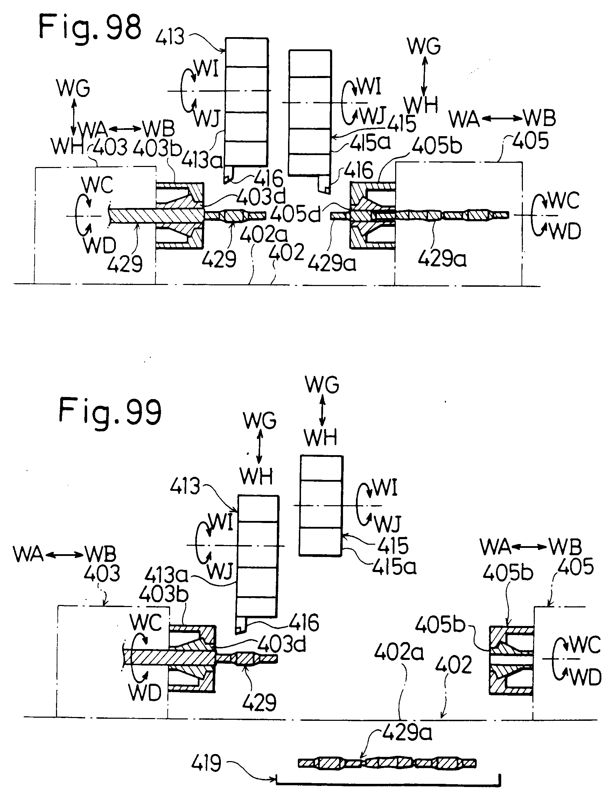

When the shaft shaped workpiece 429 is cut, the tool rest 413 is retracted from the shaft shaped workpiece 429, and the spindle stock 405 is moved with the predetermined distance together with the chuck 405b in the direction as shown by the arrow WB. Then, the parts 429a is moved the predetermined distance together with the chuck 405b in the direction as shown by the arrow WB as shown in Fig.98. In this state, the spindle stock 405 is moved the predetermined distance in the direction as shown by the arrow WA or in the direction as shown by the arrow WB (Z axis direction). Moreover, in this state, the tool rest 415 is fed with the predetermined quantity together with the tool 416, such as a cutting tool, in the direction as shown by the arrow WH, to machine the left edge surface in the figure of the parts 429a. In parallel with this, the spindle stock 403 is moved and driven in the directions as shown by the arrows WA and WB (Z axis direction). Moreover, the tool rest 413 is moved and driven together with the tool 416 in the directions as shown by the arrows WG and WH (X axis direction). So, the same machining with the machining as shown in Fig.92 is performed toward the raw portion of the shaft shaped workpiece 429 being held by the chuck 403b. In this way, when the parts 429a is machined in the predetermined shape, the chuck 405b is loosened, and the machined parts 429a is detached from the chuck 405b to throw the parts 429a to the parts catcher 419 as shown at the lower portion of Fig.99.

In the above-described embodiment, it mentioned the case that the shaft shaped workpiece 429 was pulled out in such a manner that only spindle stock 405 was moved toward the spindle stock 403 in Z axis direction without moving for the spindle stock 403 in Z axis direction in the case of pulling out the shaft shaped workpiece 429 from the spindle stock 403 in the direction as shown by the arrow WB by means of the spindle stock 405. However, in the movement method of the spindle stock 403, 405 when the pulling out is performed, that isn't the thing. Any movement method is available if the distance between the spindle stocks 403 and 405 can be narrowed and extended properly. For example, the spindle stock 405 is stopped, and the spindle stock 403 may be moved toward the spindle stock 405 in Z axis direction. And, the shaft workpiece 429 may be pulled out in such a manner that both spindle stocks 403 and 405 are moved in Z axis direction.

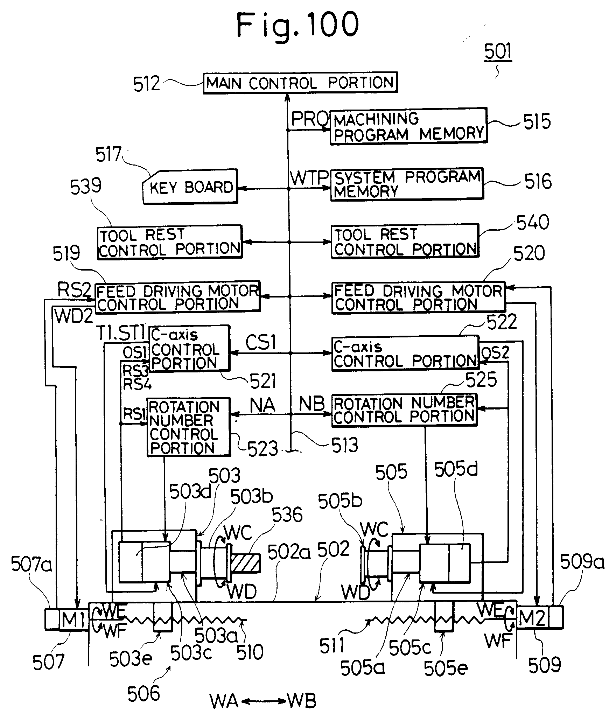

Another embodiment of the complex machining machine tool will be described in Fig.100 through Fig.111.

The complex machining machine tool 501 has the machine body 502 with which the guide surface 502a is provided on the upper portion as shown in Fig.100. Two spindle stocks 503, 505 are faced mutually, and are movably and drivably provided in the shape of being independent in the right and left directions in the figure, that is, in the directions as shown by the arrows WA and WB (Z axis direction) on the guide surface 502a. Each spindle 503a, 505a is rotatably and drivably provided in the directions as shown by the arrows WC and WD with the spindle stock 503, 505. Each chuck 503b, 505b is rotatably installed in the spindle 503a, 505a in the directions as shown by the arrows WC and WD.

Each spindle driving motor 503c, 505c is directly connected with the spindle 503a, 505a. Each transducer 503d, 505d for detecting the rotation angular quantity of the spindle driving motor 503c, 505c in the directions as shown by the arrows WC and WD (that is, the rotation angular quantity of the spindle 503a, 505a in the directions as shown by the arrows WC and WD) is installed in the spindle driving motor 503c, 505c.

Furthermore, the spindle stock feed driving unit 506 is provided with the machine body 502 as shown in Fig.100. The spindle stock feed driving unit 506 has the nut 503e, 505e, the feed driving motor 507, 509, the driving screw 510, 511, and the like. That is, each nut 503e, 505e projects in the machine body 502 through the guide surface 202a at the lower edge portion of the spindle stock 503, 505 in Fig.100, and is movably provided together with the spindle stock 503, 505 in the directions as shown by the arrows WA and WB (Z axis direction) in the machine body 502. Each female screw (not shown) is disposed in the shape of penetrating in Z axis direction, that is, in the directions as shown by the arrows WA and WB at the nut 503e, 505e. The driving screw 510, 511 being same pitch is rotatably fitted in the nut 503e, 505e in the directions as shown by the arrows WE and WF. Each feed driving motor 507, 509 is connected with the driving screw 510, 511. The transducer 507a, 509a for detecting the rotation angular quantity of each feed driving motor 507, 509 in the directions as shown by the arrows WE and WF is installed in the feed driving motor 507, 509. The spindle stock 503, 505 is moved and driven through each nut 503e, 505e in the direction as shown by the arrow WA or in the direction as shown by the arrow WB (Z axis direction) in such a manner that the feed driving motor 507, 509 is driven to rotate the driving screw 510, 511 in the direction as shown by the arrow WE or in the direction as shown by the arrow WF.

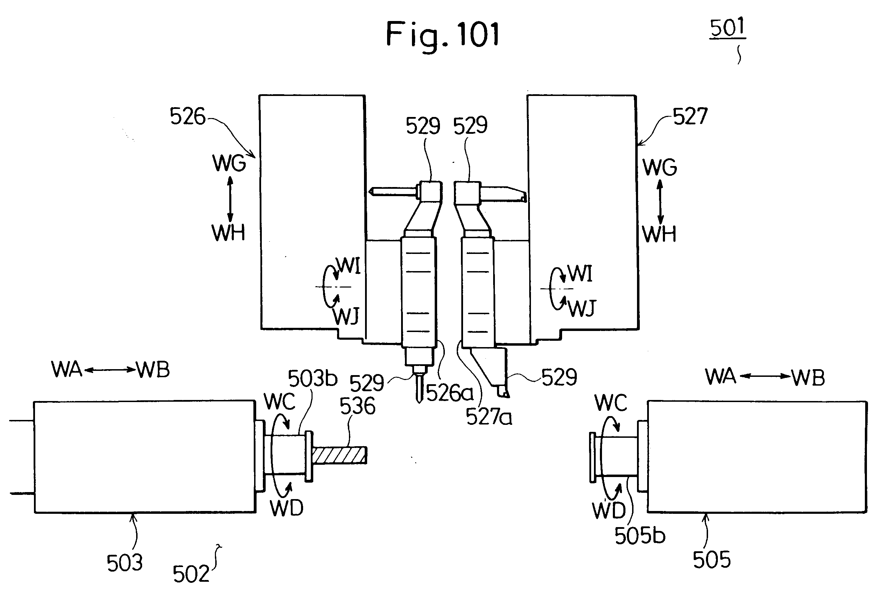

The complex machining machine tool 501 has the main control portion 512 as shown in Fig.100. The machining program memory 515, the system program memory 516, the keyboard 517, the tool rest control portion 539, 540, the feed driving motor control portion 519, 520, the C-axis control portion 521, 522 and the rotation number control portion 523, 525 are connected with the main control portion 512 through the bus line 513. The tool rest control portion 539 connects with the tool rest 526 as shown in Fig.101. And, the tool rest control portion 540 connects with the tool rest 527. The feed driving motor 507 as described before and the transducer 507a connect with the feed driving motor control portion 519. The feed driving motor 509 and the transducer 509a connect with the feed driving motor control portion 520.

The spindle driving motor 503c and the transducer 503d connect with the C-axis control portion 521. The spindle driving motor 505c and the transducer 505d conntect with the C-axis control portion 522. Furthermore, the spindle driving motor 503c and the transducer 503d connect with the rotation number control portion 523. The spindle driving motor 505c and the transducer 505d connect with the rotation number control porion 525.

Two turret type tool rests 526 and 527 are movably and drivably provided only in the directions as shown by the arrows WG and WH (that is, X axis direction) being perpendicular toward the directions as shown by the arrows WA and WB (Z axis direction) with the machine body 502 as shown in Fig.101, respectively. Each turret head 526a, 527a is supported being free to rotate and drive in the directions as shown by the arrows WI and WJ by the tool rest 526, 527. The plural tools 529 being composed of a turning tool, such as a cutting tool, and a rotation tool, such as a drill and a milling cutter are installed being free to attach and detach in the turret head 526a, 527a.

With the above-described constitution of the complex machining machine tool 501, in the case of the machining of the workpiece, at first, the workpiece 536 to be machined is attached to the spindle 503a through the chuck 503b as shown in Fig.100. Thereafter, in this state, the worker commands the main control portion 512 to start the machining of the workpiece 536 through the keyboard 517. Then, the main control portion 512 reads out the machining program PRO corresponding to the workpiece 536 to be machined from the machining program memory 515. And, the predetermined machining is performed toward the workpiece 536 on the basis of the machining program PRO.

That is, the main control portion 512 as shown in Fig.100 commands the rotation number control portion 523 that the spindle 503a is rotated in the direction as shown by the arrow WC at the predetermined rotation number NA provided by the machining program PRO. The rotation number control portion 523 on the basis of the command, makes the spindle driving motor 503c rotate together with the spindle 503a in the direction as shown by the arrow WC. Then, the rotation signal RS1 is outputted for the rotation number control portion 523 from the transducer 503d being installed in the spindle driving motor 503c every predetermined rotation angle of the spindle driving motor 503c (that is, the spindle 503a). The rotation number control portion 523 counts the input number of the rotation signal RS1 per hour predetermined, to obtain the rotation number of the spindle 503a, and to control so that the rotation number of the spindle driving motor 503c is the predetermined rotation number NA.

The main control portion 512 as shown in Fig.100 commands the feed driving motor control portion 519 that the spindle stock 503 is moved the predetermined quantity in Z axis direction. The feed driving motor control portion 519 on the basis of the command, outputs the driving signal WD2 to the feed driving motor 507. Then, the feed driving motor 507 makes the driving screw 510 rotate and drive in the direction as shown by the arrow WE or in the direction as shown by the arrow WF, and makes the spindle stock 503 move through the nut 503e in the direction as shown by the arrow WA or in the direction as shown by the arrow WB (Z axis direction). On this occasion, the rotation signal RS2 is outputted to the feed driving motor control portion 519 from the transducer 507a being installed in the feed driving motor 507 whenever the feed driving motor 507 (that is, the driving screw 510) is rotated with the predetermined angle in the direction as shown by the arrow WE or in the direction as shown by the arrow WF. The feed driving motor control portion 519 counts the input number of the rotation signal RS2, and detects the movement quantity of the spindle stock 503 in Z axis direction being in proportion to the rotation angle quantity of the feed driving motor 507 in the directions as shown by the arrows WE and WF. Accordingly, the rotation of the feed driving motor 507 is controlled so that the said movement quantity becomes the movement quantity provided in the machining program PRO.

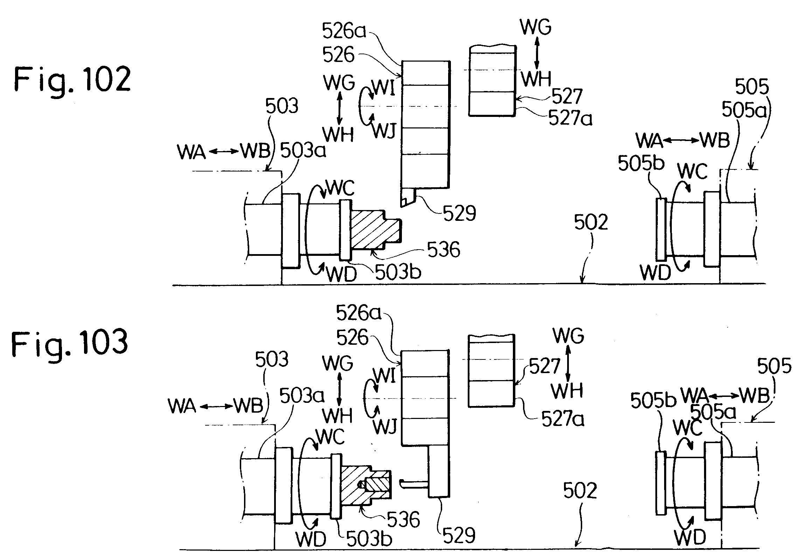

Furthermore, the main control portion 512 commands the tool rest control portion 539 that the selection of the tool 529 using for the machining and the movement quantity of the tool 529 in X axis direction are controlled. Then, the tool rest control portion 539 makes the turret head 526a of the tool rest 526 rotate in the direction as shown by the arrow WI or in the direction as shown by the arrow WJ in Fig.102 properly. So, the tool 529 for turning the outside diameter is positioned at the position facing to the workpiece 536. Moreover, the tool rest 526 is properly moved and driven together with the tool 529 for turning in the directions as shown by the arrows WG and WH. So, the machining for turning is performed in the predetermined shape toward the outside cylindrical portion of the workpiece 536 by means of the tool 529.

When the machining for turning is performed toward the outside cylindrical portion of the workpiece 536 as shown in Fig.102, the tool rest 526 is properly moved in the direction as shown by the arrow WG to be retracted from the workpiece 536. In this state, the turret head 526a of the tool rest 526 is properly rotated in the direction as shown by the arrow WI or in the direction as shown by the arrow WJ. So, the tool 529 for turning the inside diameter, such as a drill, a boring tool, is positioned at the position facing to the workpiece 536 as shown in Fig.103. Next, in this state, the tool rest 526 is fed with the predetermined distance together with the tool 529 in the direction as shown by the arrow WH in Fig.103. Furthermore, the spindle stock 503 is properly moved and driven in the directions as shown by the arrows WA and WB (Z axis direction) in the shape of holding the workpiece 536 by the chuck 503b. In this way, the inside diameter portion of the workpiece 536 is machined by means of the tool 529. After the machining, the spindle stock 503 is properly moved in the direction as shown by the arrow WA in Fig.103, to make the tool 529 be out of the inside diameter portion of the workpiece 536. In this state, the rotation of the chuck 503b in the direction as shown by the arrow WC is stopped. And, the tool rest 526 is moved in the direction as shown by the arrow WG to be retracted from the workpiece 536 in preparation for the next milling machining. Furthermore, in this state, the tool 529 for the milling machining being installed in the tool rest 526 is positioned at the position facing to the workpiece 536.

In this way, when the inside diameter portion of the workpiece 536 is machined as shown in Fig.103, the milling machining with C-axis control is performed toward the workpiece 536. That is, the main control portion 512 as shown in Fig.100 commands the C-axis control portion 521 that the spindle 503a is returned to the origin. Then, the C-axis control portion 521 makes the spindle driving motor 503c rotate at low speed in the direction as shown by the arrow WC or in the direction as shown by the arrow WD.

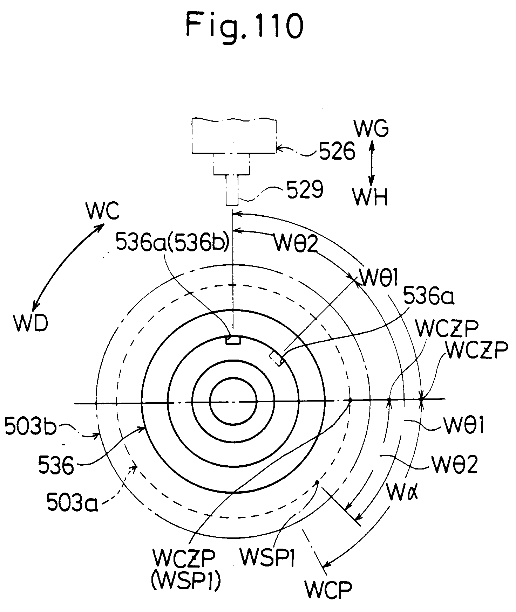

When the spindle 503a reaches at the predetermined position, the origin detecting signal OS1 is outputted for the C-axis control portion 521 from the transducer 503d. The C-axis control portion 521 on the basis of the signal, is immediately stopped the driving for the rotation of the spindle driving motor 503c in the direction as shown by the arrow WC or in the direction as shown by the arrow WD. Then, the spindle 503a stops the rotation in the direction as shown by the arrow WC or in the direction as shown by the arrow WD, and the predetermined standard position WSP1 of the spindle 503a is positioned at the C-axis origin WCZP as shown in Fig.110.

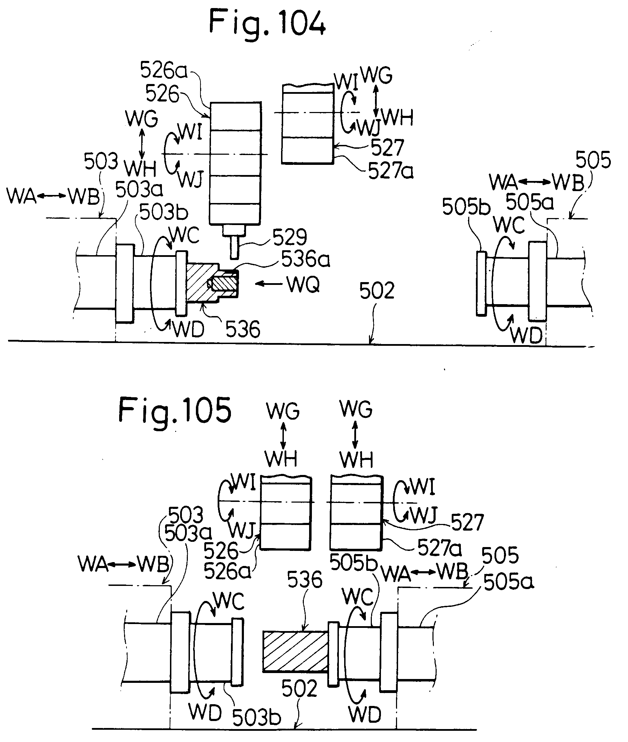

Next, the main control portion 512 drives the tool rest control portion 539, and the tool rest 526 as shown in Fig.104 is moved the predetermined distance in the direction as shown by the arrow WH in the state that the tool 529 for the milling machining is rotating. Furthermore, the spindle stock 503 is properly moved and driven in the direction as shown by the arrow WB. Then, the ditch 536a is formed at the outside surrounding portion of the workpiece 536 by means of the tool 529 in the shape of being distant with the predetermined angle W 1 from the C-axis origin WCZP in the direction as shown by the arrow WD as shown in Fig.110. When the ditch 536a is formed, the tool rest 526 is properly moved in the direction as shown by the arrow WG to make the tool 529 retract from the workpiece 536. Next, the main control portion 512 outputs the C-axis control signal CS1 to the C-axis control portion 521 as shown in Fig.100. Then, the C-axis control portion 521 makes the spindle driving motor 503c rotate together with the spindle 503a at low speed in the direction as shown by the arrow WC. Then, the rotation signal RS3 is outputted to the C-axis control portion 521 from the transducer 503d every predetermined rotation angle of the spindle driving motor 503c. The C-axis control portion 521 counts the input number of the rotation signal RS3 to detect the rotation angular quantity of the spindle 503a. The C-axis control portion 521 stops the driving for the rotation of the spindle driving motor 503c in the direction as shown by the arrow WC when the said rotation angular quantity becomes@the predetermined rotation angular quantity W 2. Then, the spindle 503a stops the rotation in the direction as shown by the arrow WC, together with the workpiece 536, and the spindle 503a (that is, the workpiece 536) is positioned at the position rotated with the predetermined angle W 2 in the direction as shown by the arrow WC from the C-axis origin WCZP.

Thereafter, in this state, the tool rest 526 being retracted is moved the predetermined distance together with the tool 529 for the milling machining, toward the workpiece 536 in the direction as shown by the arrow WH in Fig.104. Furthermore, the spindle stock 503 is properly moved and driven in the direction as shown by the arrow WB. Then, the ditch 536b is formed at the outside surrounding portion of the workpiece 536 in the shape of being distant from the ditch 536a formed before with the predetermined angle $W\theta2$ in the direction as shown by the arrow WD in Fig.110.

In this way, when the first routine of the machining finishes after the milling machining of the workpiece 536, the main control portion 512 calls the workpiece delivery program WTP from the system program memory 516 as shown in Fig.100, and the workpiece delivery program WTP is executed. That is, the main control portion 512 commands the C-axis control portion 521 that the spindle 503a is positioned at the delivery position WCP (see Fig.110). Then, the C-axis control portion 521 on the basis of the command drives the spindle driving motor 503c. So, spindle 503a is slowly rotated together with the workpiece 536 in the direction as shown by the arrow WC or in the direction as shown by the arrow WD. Then, the transducer 503d being installed in the spindle driving motor 503c outputs the rotation signal RS4 to the C-axis control portion 521 every predetermined rotation angle of the spindle driving motor 503c in the direction as shown by the arrow WC or in the direction as shown by the arrow WD.

Then, the C-axis control portion 521 counts the input number of the rotation signal RS4, and obtains the position to the C-axis origin WCZP of the spindle 503a (see Fig.110). When the standard position WSP1 of the spindle 503a is positioned at the delivery positon WCP being distant from the C-axis origin WCZP with the predetermined angle $W\alpha$ in the direction as shown by the arrow WC, the stop signal ST1 is outputted to the spindle driving motor 503c as shown in Fig.100. Then, the spindle driving motor 503c on the basis of the signal stops the rotation in the direction as shown by the arrow WC or in the direction as shown by the arrow WD.

In result, the spindle 503a stops the rotation in the direction as shown by the arrow WC or in the direction as shown by the arrow WD together with the workpiece 536, and the spindle 503a is positioned at the delivery position WCP. Incidentally, as the delivery position WCP, the C-axis origin (that is, in the case of $W\alpha = 0$) can also be selected.

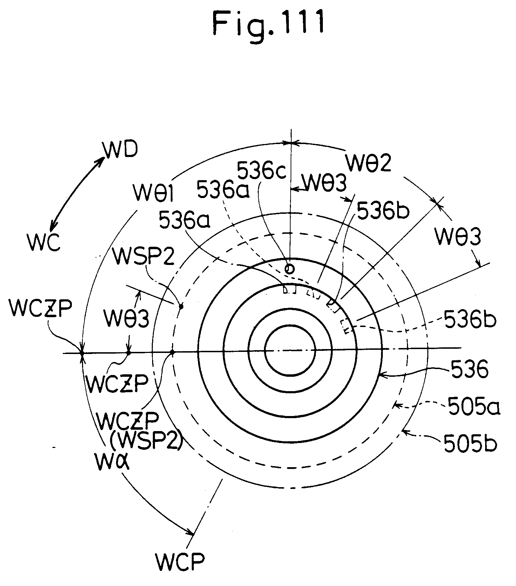

The main control portion 512 as shown in Fig.100 commands the C-axis control portion 522 that the spindle 505a is positioned at the delivery position WCP (see Fig.111). Then, the C-axis control portion 522 as shown in Fig.100 makes the spindle driving motor 505c rotate together with spindle 505a at low speed in the direction as shown by the arrow WC or in the direction as shown by the arrow WD, and detects this rotation angular quantity through the transducer 505d. The position in the directions as shown by the arrows WC and WD to the C-axis origin WCZP of the spindle 505a as shown in Fig.111 is obtained on the basis of the detected rotation angular quantity. When the standard positon WSP2 of the spindle 505a is positioned at the delivery position WCP being distant from the C-axis origin WCZP with the predetermined angle W in the direction as shown by the arrow WC, the rotation of the spindle driving motor 505c is stopped. Then, the spindle 505a stops the rotation in the direction as shown by the arrow WC or in the direction as shown by the arrow WD, to be positioned at the delivery position WCP.

In this way, When each standard position WSP1, WSP2 of the spindle 503a, 505a is positioned at each delivery position WCP, the chuck 505b being installed in the spindle 505a as shown in Fig.104 is loosened. In this state, the spindle stock 505 is moved together with the spindle 505a in the direction as shown by the arrow WA in Fig.104. So, the spindle 505a is approached the spindle 503a. In this state, the portion of the workpiece 536 to which the first routine is performed is inserted into the chuck 505b. In this state, the chuck 505b is fastened to hold the workpiece 536 by the chucks 503b and 505b.

When the workpiece 536 is held by the chucks 503b and 505b, the holding relation between the workpiece 536 and the chuck 503b is released. In this state, the spindle stock 505 is moved the predetermined distance in the direction as shown by the arrow WB, that is, in the direction going away from the spindle stock 503 in the state that the workpiece 536 is held by the chuck 505b. So, the spindle 503a is separated from the spindle 505a as shown in Fig.105. Then the workpiece 536 is transferred to the side of the spindle 505a from the side of the spindle 503a through the chuck 505b. This transferred movement of the workpiece 536 is performed in such a manner that the spindle 503a, 505a is positioned at the predetermined delivery position WCP respectively, and the workpiece 536 is directly held by the chuck 505b being installed in the spindle 505a. Therefore, the phase shift of the workpiece 536 toward the C-axis origin WCZP doesn't arise from the transferred movement.

In this way, when the workpiece 536 after the first routine is tranferred to the side of the spindle 505a, the second routine of the machining is performed toward the workpiece 536 on the basis of the machining program PRO corresponding to the workpiece 536. At the same time, the raw workpiece 536 is installed at the side of the spindle 503a through the chuck 503b, and the first routine of the machining as described before is performed toward the raw workpiece 536.

That is, the main control portion 512 as shown in Fig.100 commands the rotation number control portion 525 that the spindle 505a is rotated with the predetermined rotation number NB in the direction as shown by the arrow WC. Then, the rotation control portion 525 makes the spindle driving motor 505c rotate together with the spindle 505a in the direction as shown by the arrow WC. On this occasion, the rotation number control portion 525 detects the rotation number of the spindle driving motor 505c through the transducer 505d, and controls the spindle driving motor 505c so that the detected rotation number becomes the predetermined rotation number NB.

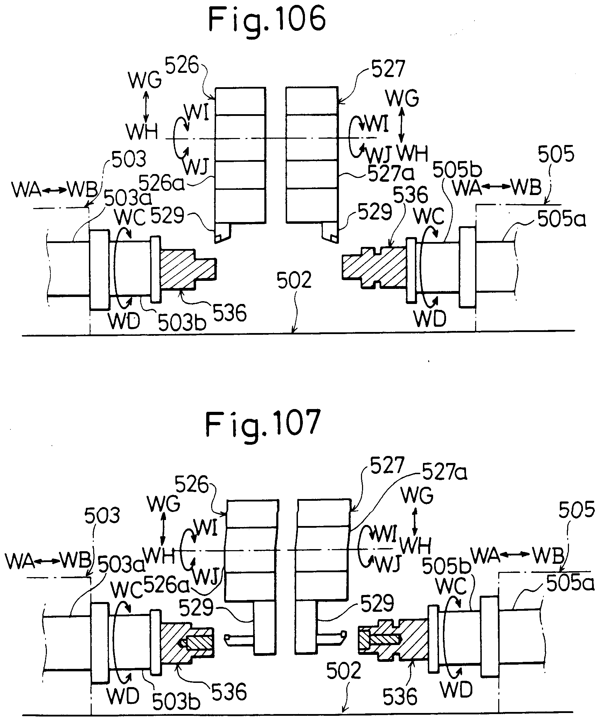

The main control portion 512 as shown in Fig.100 drives the feed driving motor control portion 520 to make the driving screw 511 rotate in the direction as shown by the arrow WE or in the direction as shown by the arrow WF. So, the spindle stock 505 is moved in the direction as shown by the arrow WA or in the direction as shown by the arrow WB (Z axis direction) through the nut 505e. On this occasion, the feed driving motor control portion 520 detects the movement quantity of the spindle stock 505 through the transducer 509a, and controls the driving motor 509 on the basis of the detected movement quantity. Moreover, the machining for turning is performed toward the outside cylindrical portion of the workpiece 536 in the predetermined shape by means of the tool 529 in such a manner that the main control portion 512 drives the tool rest control portion 540 to make the tool rest 527 as shown in Fig.106 properly move and drive together with the tool 529 for turning in the directions as shown by the arrows WG and WH.

The predetermined machining for turning is performed toward the raw workpiece 536 being held by the chuck 503b as shown in Fig.106 in such a manner that the spindle stock 503 is properly moved together with the workpiece 536 in the direction as shown by the arrow WA or in the direction as shown by the arrow WB (Z axis direction), and the tool rest 526 is properly moved and driven together with the tool 529 for turning in the directions as shown by the arrows WG and WH (X axis direction), as described before.

In this way, when the machining for turning is performed toward each outside cylindrical portion of the workpiece 536, 536 as shown in Fig.106 respectively, the tool rest 526, 527 is moved and retracted from the workpiece 536, 536 in the direction as shown by the arrow WG. In this state, the tool 529, 529 being installed in the tool rest 526, 527, for turning the inside diameter is positioned at the position facing to each workpiece 536. Thereafter, the tool rest 526, 527 is fed with the predetermined distance in the direction as shown by the arrow WH in Fig.107, and the tool 529, 529 for turning the inside diameter is faced to the right edge surface of the raw workpiece 536 in the figure, and to the left edge surface of the workpiece 536 after the first routine in the figure, respectively. In this state, each inside diameter portion of the raw workpiece 536 and the workpiece 536 after the first routine is machined in the predetermined shape in such a manner that the spindle stock 503, 505 is moved in the direction as shown by the arrow WA and in the direction as shown by the arrow WB (Z axis direction) respectively. After the machining, the spindle stock 503 is properly moved in the direction as shown by the arrow WA, and the spindle stock 505 is properly moved in the direction as shown by the arrow WB. So, each tool 529 being installed in the tool rest 526, 527 is brought out from each inside diameter portion. In this state, the tool rest 526, 527 is moved in the direction as shown by the arrow WG to be retracted from the workpiece 536 and the like. Furthermore, the rotation of the chuck 503b, 505b in the direction as shown by the arrow WC is stopped.

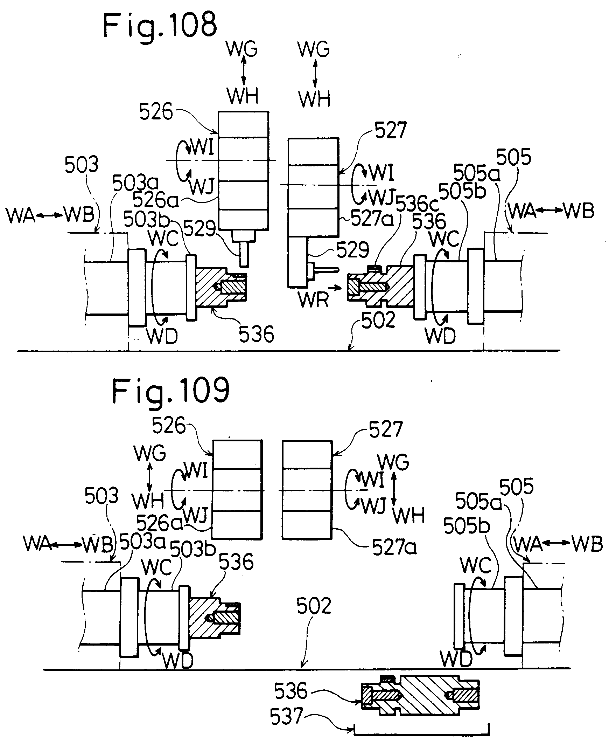

Next, in this state, the drill machining with the C-axis control is performed by means of the same method with the above-described method on the basis of Fig.104 toward the workpiece 536 after the first routine being held by the chuck 505b as shown in Fig.108. That is, the main control portion 512 as shown in Fig.100 drives the C-axis control portion 522, to rotate the spindle driving motor 505c together with the spindle 505a at low speed in the direction as shown by the arrow WD. Then, the standard position WSP2 of the spindle 505a as shown in Fig.111 is also rotated in the direction as shown by the arrow WD. AT the time that the standard position WSP2 corresponds with the C-axis origin WCZP, the origin detecting signal OS2 is outputted to the C-axis control portion 522 from the transducer 505d as shown in Fig.100. In the time that the standard position WSP2 of the spindle 505a coincides with the C-axis origin WCZP as shown in Fig.111, the ditch 536a, 536b being formed at the workpiece 536 in the first routine of the machining is positioned at the position being distant from the C-axis origin WCZP with the rotation angular quantity $W_{\theta}1$, $(W_{\theta}1 + W_{\theta}2)$ respectively in the direction as shown by the arrow WD as shown by the imaginary line in Fig.111. Furthermore, the C-axis control portion 522 stops the spindle driving motor 505c, when the rotation angular quantity of the spindle 505a in the direction as shown by the arrow WD, which is detected through the transducer 505d, becomes the predetermined angle $W_{\theta}3$ afrer the time that the origin detecting signal OS2 is inputted.

Then, the standard position WSP2 of the spindle 505a is positioned at the position being distant from the C-axis origin WCZP with the predetermined angle $W_{\theta}3$ in the direction as shown by the arrow WD in Fig.111.

Thereafter, in this state, the tool rest 527 as shown in Fig.108 is moved the predetermined distance toward the workpiece 536 in the direction as shown by the arrow WH in the state that the tool 529 for drilling, such as a drill, is being rotated. Moreover, the spindle stock 505 is properly moved and driven in the direction as shown by the arrow WA. Then, the workpiece 536 is delivered to the side of the spindle 505a without the phase shift after the first routine of the machining is performed at the side of the spindle 503a, as described before. Therefore, the hole 536c is formed and penetrated at the workpiece 536 in the shape of being exactly distant from the ditch 536a, 536b formed at the first routine as shown by the broken line in Fig.111, with the predetermined angle $W_{\theta}3$, $(W_{\theta}2 + W_{\theta}3)$ in the direction as shown by the arrow WC respectively.

In this way, when the second routine of the machining is performed toward the workpiece 536, the chuck 505b is loosened , and this machined workpiece 536 is detached from the chuck 505b. So, the workpiece 536 is thrown in the workpiece catcher 537 being at the lower portion in Fig.109. In parallel with this, the milling machining with the C-axis control is performed toward the workpiece 536 being held by the chuck 503b as shown in Fig.108 by means of the method as described before, making use of the tool 529 such as an end mill being installed in the tool rest 526 to form the ditch 536a, 536b as shown in Fig.110 at the workpiece 536. In this way, the first routine is perfomed in parallel with the secound routine, so that the successive machining is performed toward the workpiece 536.

In the above-described embodiment, it mentioned the case that when the workpiece 536 was delivered to the side of the spindle 505a from the side of the spindle 503a, the workpiece 536 was delivered in such a manner that the spindle stock 505 was moved together with the spindle 505a for the spindle 503a of the spindle stock 503 in the direction as shown by the arrow WA. However, in the method of the delivery, that isn't the thing. Any method is available, if the workpiece 536 can be delivered in the state that the spindle stock 503, 505 is relatively moved in the direction as shown by the arrow WA and in the direction as shown by the arrow WB (Z axis direction) to become close each other. For example, the spindle stock 503 is moved together with the spindle 503a toward the spindle 505a in the direction as shown by the arrow WB, so that the workpiece 536 may be delivered to the side of the spindle 505a from the side of the spindle 503a. The spindles 503a and 505a are approached each other in such a manner that the spindle stock 503 is moved in the direction as shown by the arrow WB, and the spindle stock 505 is moved in the direction as shown by the arrow WA. In this state, the workpiece 536 may be delivered.

The spindle 503a, 505a of the spindle stock 503, 505 is rotated in the direction as shown by the arrow WC and in the direction as shown by the arrow WD respectively, to position each standard position WSP1, WSP2 of the spindle 503a, 505a at the delivery position WCP, WCP as shown in Fig.110 and Fig.111. In this state, the workpiece 536 is delivered between the spindle stocks 503 and 505. However, the C-axis coordinates value $W\alpha$, $W\alpha$ of each deliver position WCP, WCP to the C-axis origin WCZP is changeable respectively. So, when each standard position WSP1, WSP2 of the spindle 503a, 505a is positioned at each delivery position WCP, WCP, the C-axis coordinates value $W\alpha$, $W\alpha$ of the delivery position WCP, WCP is preset so that the C-axis coordinates value of the clicks (not shown) of chucks 503b and 505b don't coincide each other. Accordingly, the delivery can be smoothly performed without interfering the clicks of the chucks 503b and 505b even if the workpiece 536 delivering between the spindle stocks 503 and 505 is short in the directions as shown by the arrows WA and WB in Fig.100.

In the above-described embodiment, it mentioned the case that the workpiece was delivered between the spindles 503a and 505a on the basis of the workpiece delivery program WTP being stored in the system program memory 516. However, in the command of the delivery of the workpiece, any method is avilable if the workpiece 536 can be directly delivered between the spindles 503a and 505a. For example, the delivery of the workpiece may be performed on the basis of the machining program PRO in such a manner that the machining program PRO composed in the shape of including the contents of the workpiece delivery program WTP, is stored in the machining program memory 515.

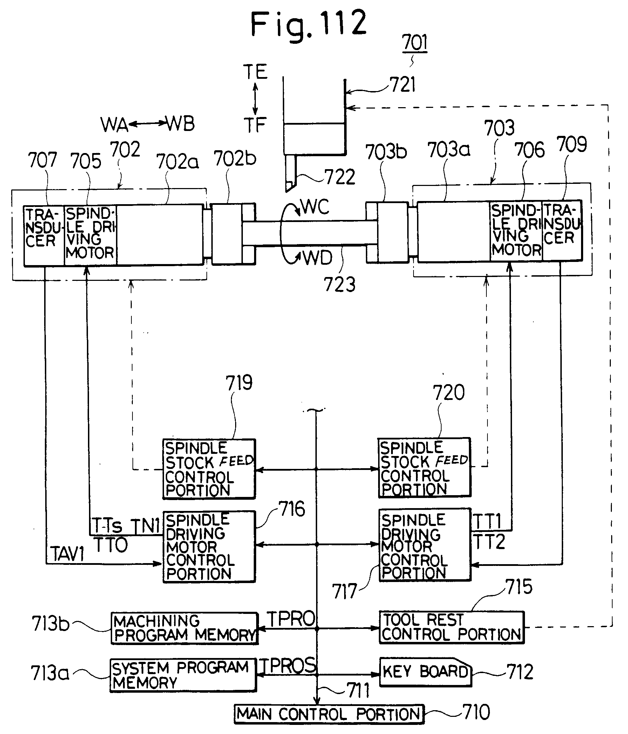

Another example of the complex machining machine tool will be described in Fig.112.

The complex machining machine tool 701 has the spindle stock 702, 703 as shown in Fig.112. The spindle stocks 702 and 703 are mutually faced, and are provided being free to move and drive in the directions as shown by the arrows WA and WB (Z axis direction). Each spindle 702a, 703a is rotatably and drivably provided with the spindle stock 702, 703 in the directions as shown by the arrows WC and WD. Each chuck 702b, 703b is installed in the spindle 702a, 703a. The workpiece 723 is held through the chuck 702b, 703b between the spindles 702a and 703a. The spindle driving motor 705, 706 of which each rating torque TTs is same, is connected with the spindle 702a, 703a in the shape of connecting with the spindle 702a, 703a directly. Each transducer 707, 709 is connected with the spindle driving motor 705, 706.

Furthermore, the complex machining machine tool 701 has the main control portion 710 as shown in Fig.112. The keyboard 712, the system program memory 713a, the machining program memory 713b, the tool rest control portion 715, the spindle driving motor control portion 716, 717, the spindle stock feed control portion 719, 720, and the like are connected with the main control portion 710 through the bus line 711. The tool rest control portion 715 connects with the tool rest 721 as described after. Each transducer 707, 709 and the like as described before connect with the spindle driving motor control portion 716, 717. Moreover, the spindle stock feed control portion 719, 720 connects with each spindle stock 702, 703.

On the other hand, in the upper portion in Fig.112, the tool rest 721 being composed of the complex machining machine tool 701 is movably and drivably provided in the directions as shown by the arrows TE and TF (that is , X axis direction) being perpendicular to the directions as shown by the arrows WA and WB (Z axis direction). The plural tools 722 are installed in the tool rest 721.

With the above-described constitution of the complex machining machine tool 701, in the case that the predetermined machining for cutting is performed toward the workpiece 723, the workpiece 723 is held between the spindles 702a and 703a through the chuck 702b, 703b. Next, the machining of the workpiece 723 is commanded to the main control portion 710 through the keyboard 712. Then, the main control portion 710 on the basis of the command reads out the machining program TPRO for the workpiece 723 from the machining program memory 713b, and machines the workpiece 723 on the basis of the machining program TPRO.

That is, the main control portion 710 drives the spindle stock feed control portion 719, 720 on the basis of the machining program TPRO to make the spindle stock 702, 703 synchronously move and drive in the directions as shown by the arrows WA and WB (Z axis direction), to position it at the predetermined machining start position. At the same time, the main control portion 710 drives the tool rest control portion 715 to position the tool 722 for turning, such as a cutting tool, among the tools 722 being installed in the tool rest 721 at the position facing to the workpiece 723.

Thereafter, the main control portion 710 reads out and execute the start control program TPROS stored in the system program memory 713a so that the workpiece 723 as shown in Fig.112 is rotated in the direction as shown by the arrow WC by energizing each spindle motor 705, 706. That is, the main control portion 710 drives the spindle driving motor control portion 717 on the basis of the start control program TPROS to drive the spindle driving motor 706 with the torque TT1 that is less than the rating torque TTs of the said motor. At the same time, the main control portion 710 commands the spindle driving motor control portion 716 to keep the current position in the directions as shown by the arrows WC and WD in such a manner making the self-hold function of the spindle driving motor 705 be fulfilled. Then, the torque TT1 is acted on the workpiece 723 being held between the spindles 702a and 703a through the spindle 703a and the chuck 703b being connected with the spindle driving motor 706.

Thereafter, the main control portion 710 as shown in Fig.112 drives the spindle driving motor control portion 716 on the basis of the start control program TPROS, to release the self-hold of the spindle driving motor 705 and generate the start torque TTO to the motor 705. Then, the spindle driving motor 705 starts to rotate together with the spindle 702a in the direction as shown by the arrow WC. And, the workpiece 723 being held between the spindles 702a and 703a also starts to rotate together with the spindle 702a, 703a in the direction as shown by the arrow WC, synchronously. On this occasion, the torque TT1 is already acted on the spindle 703a and the chuck 703b by means of the spindle driving motor 706. Therefore, the spindle 703a and the chuck 703b start to rotate in the direction as shown by the arrow WC by the torque TT1 when the self-hold of the spindle driving motor 705 is released. Accordingly, it's enough that the spindle driving motor 705 drives the rotation portion of the side of the spindle stock 702, such as a spindle 702a, a chuck 702b. It isn't necessary to start the rotation portion of the side of the spindle stock 703, such as a spindle 703a. In result, it isn't necessary that the workpiece 723 transmits the start torque of the motor 705 to the side of the spindle stock 703 from the side of the spindle stock 702, and the inetia of the rotation portion of the side of the spindle stock 703, such as a spindle 703a, a chuck 703b etc, doesn't operate toward the workpiece 723, so that the torsional torque acting on the workpiece 723 is restrained at a minimum.

In this way, when each spindle driving motor 705, 706 as shown in Fig.112 is energized, and the spindle 702a, 703a is rotated together with the workpiece 723 in the direction as shown by the arrow WC, the main control portion 710 drives the spindle driving motor control portion 716 on the basis of the machining program TPRO to rotate the spindle driving motor 705 together with the spindle 702a with the rating torque TTs of the motor 705, with the predetermined rotation number TN1 in the direction as shown by the arrow WC. On this occasion, the rotation angular velocity quantity TAV1 of the spindle driving motor 705 in the direction as shown by the arrow WC is detected through the transducer 707 as shown in Fig.112. The spindle driving motor control portion 716 controls the driving motor 705 on the basis of the detected rotation angular velocity quantity TAV1 so that the spindle driving motor 705 is rotated in the direction as shown by the arrow WC with the predetermined rotation number TN1.

At the same time, the main control portion 710 drives the spindle driving motor control portion 717 to rotate the spindle driving motor 706 together with the spindle 703a with the driving torque TT2 (for example, the torque corresponding to 50% of the rating torque TTs) which is smaller than the rating torque TTs of the spindle driving motor 705, in the direction as shown by the arrow WC.

Then, the torque acting on the spindle 703a by the spindle driving motor 706 is smaller than the torque acting on the spindle 702a by the spindle driving motor 705. Therefore, the spindle 703a is rotated with the same rotation number TN1 as the spindle 702a in the direction as shown by the arrow WC through the chuck 702b, 703b and the workpiece 723 in the shape of being accompanied by the spindle 702a.

That is, the rotation of the spindle 702a in the direction as shown by the arrow WC becomes main. The spindle 703a is rotated in the direction as shown by the arrow WC in the shape of following the spindle 702a. Therefore, even if the rotation angular velocity quantity of the spindle 702a in the direction as shown by the arrow WC changes according to the command of the spindle driving motor control portion 716 through the spindle driving motor 705 so as to keep the predetermined rotation number TN1, the driving motor 706 can't oppose the rating torque TTs of the side of the spindle 702a because of being driven with the driving torque TT2 which is smaller than the rating torque TTs. Accordingly, the rotation angular velocity of the spindle 703a is made coincide with the rotation angular velocity of the side of the spindle 702a. In result, the rotation angular velocity of the spindle 703a is controlled by the spindle 702a, that is, the spindle driving motor 705, so that the spindle driving motor 706 can't change the angular velocity of the spindle 703a positively.

Therefore, the spindle 702a, 703a is always and synchronously rotated in the direction as shown by the arrow WC in such a manner that the rotation of the spindle 702a is main, and the rotation of the spindle 703a is secondary, so that the torsional torque acting on the workpiece 723 is restrained at a minimum.

In this way, when the workpiece 723 being held between the spindles 702a and 703a is rotated in the direction as shown by the arrow WC in Fig.112 with the predetermined rotation number TN1, the main control portion 710 on the basis of the machining program TPRO drives the spindle stock feed control portion 719, 720 to synchronously drive and move the spindle stock 702, 703 in the directions as shown by the arrows WA and WB (Z axis direction), and drives the tool rest control portion 715 to drive and move the tool rest 721 together with the tool 722 for turning in the directions as shown by the arrows TE and TF. In this way, the predetermined machining for turning is performed toward the outside cylindrical portion of the workpiece 723 by means of the tool 722.

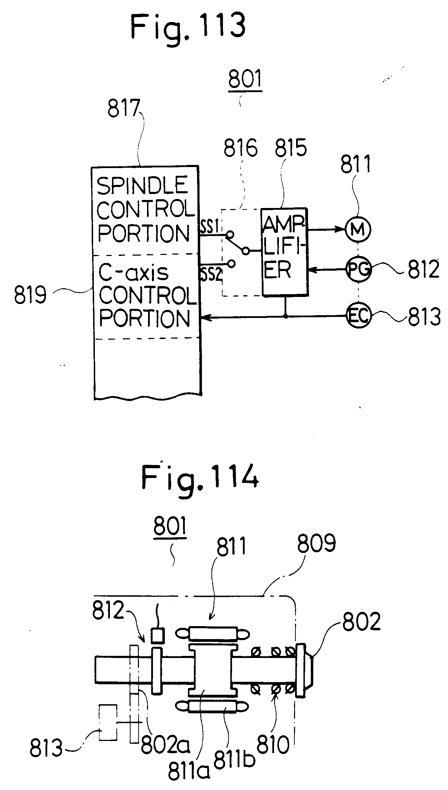

A example of the control of the spindle being provided with each spindle stock, in the complex machining machine tool will be described in Fig.113 and Fig.114.

The complex machining machine tool 801 has the spindle stock 809 as shown in Fig.114. The spindle 802 is rotatably supported at the spindle stock 809 by the bearing 810. The rotor 811a being composed of the spindle driving motor 811 is disposed at the spindle 802. The spindle 802 is a so-called built-in type. The stator 811b is disposed at the surrounding of the rotor 811a in the shape of covering the rotor 811a. Moreover, the pulse generator 812 is disposed at the left hand of the spindle 802 in the figure. And, the gear 802a is fixed to the left hand of the pulse generator 812. The encoder 813 is meshed with the wheel 802a.

The amplifier 815 connects with the spindle driving motor 811 and the pulse generator 812 as shown in Fig.113. The transfer switch 816 is connected with the amplifier 815. The spindle control portion 817 which controls the spindle driving motor 811 at the time of turning and the C-axis control portion 819 which controls the spindle driving motor 811 at the time of the C-axis control are connected with the transfer switch 816. The encoder 813 connects with the C-axis control portion 819.

With the above-described constitution of the complex machining machine tool 801, in the case of turning, the transfer switch 816 is pushed down at the side of the spindle control portion 817, and the spindle control portion 817 connects with the amplifier 815 as shown in Fig.113. Then, the control signal SS1 is inputted to the amplifier 815 through the transfer switch 816 from the side of the spindle control portion 817. Moreover, the signal SS1 amplified by means of the amplifier 815 is inputted to the spindle driving motor 811, and the spindle driving motor 811 is rotated with the predetermined rotation number. So, the machining for turning is performed. On this occasion, the rotation number of the spindle 802 is detected from the pulse generator 812, and the rotation number is feedbacked to the amplifier 815. Moreover, the amplifier 815 controls the spindle driving motor 811 on the basis of the output of the pulse generator 812 so that the spindle driving motor 811 is exactly rotated with the rotation number corresponding to the signal SS1.

Next, in the case of the machining with the C-axis control, the transfer switch 816 is transferred to the side of the C-axis control portion 819 from the side of the spindle control portion 817 at which the transfer switch was until now, and the C-axis control portion 819 is connected with the amplifier 815 through the transfer switch 816. In this state, the control signal SS2 for the C-axis control is outputted to the amplifier 815 from the C-axis control portion 819 through the transfer switch 816, and the amplifier 815 makes the spindle driving motor 811 rotate at the predetermined speed. In this way, the machining such as the predetermined milling machining is performed.

In the above-described embodiment, it was mentioned the case that the present invention was applied to a so-called built-in type machine tool of which the spindle driving motor 811 is built in the spindle 802. The machine tool isn't restricted to the built-in type. The present invention can naturally apply to the machine tool constituted so that the spindle driving motor 811 and the spindle 802 are provided respectively, and the torque is transmitted to the spindle 802 by means of a gear, a belt and the like.

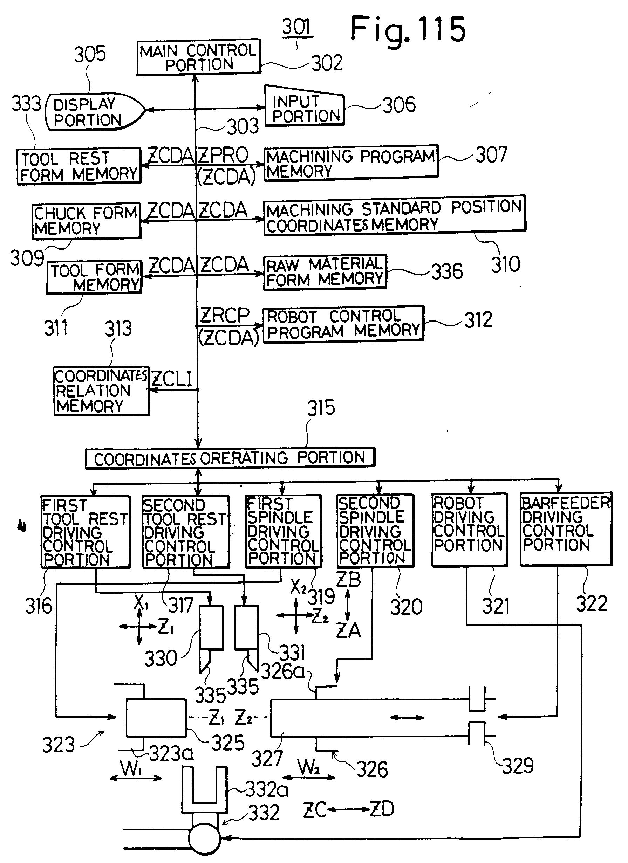

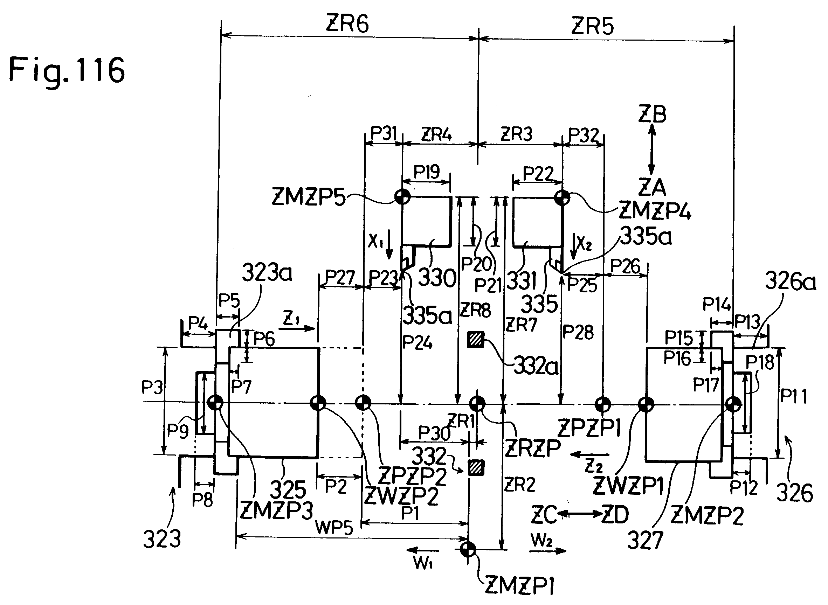

A example of the coordinates system control method in the complex machining machine tool will be described in Fig.115 and Fig.116.

The machine tool 301 has the main control portion 302 as shown in Fig.115. The display portion 305, such as a display, the input portion 306, such as a keyboard, the tool rest form memory 333, the machining program memory 307, the chuck form memory 309, the machining standard position coordinates memory 310, the tool form memory 311, the raw material form memory 336, the robot control program memory 312, the coordinates relation memory 313, the coordinates operating porion 315, and the like are connected with the main control portion 302 through the bus line 303. The first tool rest driving control portion 316, the second tool rest driving control portion 317, the first spindle driving control portion 319, the second spindle driving control portion 320, the robot driving control portion 321, the barfeeder driving control portion 322, and the like are connected with the coordinates operating portion 315.

The machine tool 301 has the first spindle 323. The first spindle 323 is rotatably and drivably supported with $Z_1$ axis as its center. The workpiece 325 is held by the first spindle 323 through the chuck 323a. The second spindle 326 is provided at the position facing to the first spindle 323, and is supported being free to rotate and drive with $Z_2$ axis which coincides with $Z_1$ axis and its positive and negative directions are provided conversely, as its center. The workpiece 327 is held by the second spindle 326 through the chuck 326a. The workpiece 327 is a bar shaped workpiece. The barfeeder 329 is disposed at the right hand of the workpiece 327 in Fig.115. The first tool rest 330 and the second tool rest 331 are provided between the first spindle 323 and the second spindle 326. The first tool rest 330 and the second tool rest 331 are movably and drivably provided in the direction as shown by the arrow ZA and in the direction as shown by the arrow ZB respectively, along the $X_1$, $X_2$ axis being perpendicular to the direction of $Z_1$, $Z_2$ axis. The handling robot 332 is movably disposed in the direction of $W_1$, $W_2$ axis being parallel to Z axis direction, at the lower hand of the tool rest 330, 331 in Fig.115.

The first spindle 323 is connected with the first spindle driving control portion 319. The second spindle 326 is connected with the second spindle driving control portion 320. The first tool rest 330 is connected with the the first tool rest driving control portion 316. The second tool rest 331 is connected with the second tool rest driving control portion 317. Moreover, the handling robot 332 is connected with the robot driving control portion 321. The barfeeder 329 is connected with the barfeeder driving control portion 322.

With the above-described constitution of the machine tool 301, in the case of the machining of the workpiece 325, 327, the main control portion 302 reads out the machining program ZPRO of the workpiece 325, 327 from the machining program memory 307, and the barfeeder driving control portion 322 is driven on the basis of the machining program ZPRO to push out the workpiece 327 in the direction as shown by the arrow ZC. Thereafter, the second spindle 326 is rotated through the second spindle driving control portion 320 at the predetermined speed indicated by the machining program ZPRO, and is moved in the directions as shown by the arrows ZC and ZD along $Z_2$ axis. Thereafter, the second tool rest 331 is moved through the second tool rest driving control portion 317 in the directions as shown by the arrows ZA and ZB along $X_2$ axis to perform the predetermined machining toward the workpiece 327.

In this way, when the predetermined machining is performed toward the workpiece 327, the second spindle 326 is moved in the direction as shown by the arrow ZC to make the first spindle 323 hold the top egde portion of the workpiece 327. In this state, the workpiece 327 is cut off. The cutoff workpiece 325 is held by the chuck 323a of the first spindle 323. So, the predetermined machining on the basis of the machining program ZPRO is performed toward the workpiece 325 being held by the first spindle 323. While the machining of the workpiece 325 is performed by means of the first spindle 323, the barfeeder 329 is driven, the new workpiece 327 is supplied with the chuck 326a, and the predetermined machining on the basis of the machining program ZPRO is performed toward the supplied workpiece 327. The workpiece 325 to which the machining finished at the first spindle 323, is detached from the chuck 323a by means of the handling robot 332 controlled on the basis of the robot control program ZRCP which is read out from the robot control program memory 312, to be thrown in the predetermined parts catcher.

At the time of such a machining, various kinds of coordinates system to be controlled and the coordinates system data relating to the coordinates systems, such as the machining program and parameters are set in the machine tool 301 as shown in Fig.116. That is, the coordinates systems are set as follows;

(a)$X_1$-$Z_1$ axis coordinates system standardizing the mechanical origin ZMZP3, ZMZP5 being used in the case that the first spindle 323 is driven and controlled in the directions as shown by the arrows ZC and ZD and the first tool rest 330 is driven and controlled in the directions as shown by the arrows ZA and ZB. (The right hand and upper hand in Fig.116 are positive.)

(b)$X_2$-$Z_2$ axis coordinates system standardizing the mechanical origin ZMZP2, ZMZP4 being used in the case that the second spindle 326 is driven and controlled in the directions as shown by the arrows ZC and ZD and the second tool rest 331 is driven and controlled in the directions as shown by the arrows ZA and ZB. (The left hand and upper hand in Fig.116 are positive.)

(c)$W_1$-$W_2$ axis coordinates system, using in the case that the hand 332a of the handling robot 332 is driven and controlled in the directions as shown by the arrows ZC and ZD. (The right and left directions from the mechanical origin ZMSP1 are positive.)

Furthermore, the coordinates system data set at each coordinates system is, for example, in the coordinates system of $X_1$-$Z_1$ axis, the dimension data P3-P9 showing the dimension form of the chuck 323a, and is the machining program ZPRO$_1$ machining the workpiece 325. And, in the coordinates system of $X_2$-$Z_2$ axis, the coordinates system data is the dimension data P11-P18 showing the dimension form of the chuck 326a, and is the machining program ZPRO$_2$ machining the workpiece 327. Those coordinates system data ZCDA are stored in the chuck form memory 309 and the machining program memory 307. In the coordinates system of $X_1$-$Z_1$ axis, the dimension data P19, P20 showing the dimension form of the first tool rest 330 are set. In the coordinates system of $X_2$-$Z_2$ axis, the dimension data P21, P22 showing the dimension form of the second tool rest 331 are set. Those coordinates system data ZCDA are stored in the tool rest form memory 333. The cutting edge data relating to each tool 335 being installed in the first tool rest 330, that is, the position data P23, P24, at $X_1$-$Z_1$ coordinates between the cutting edge 335a and the machining program origin ZPZP2, and the cutting edge data relating to each tool 335 being installed in the second tool rest 331, that is, the position data P25, P28, at $X_2$-$Z_2$ cooredinates system between the cutting edge 335a and the machining program origin ZPZP1 are also stored in the tool form memory 311 as a coordinates system data ZCDA. Moreover, the offset values P26, P27 between the workpiece origin ZWZP1, ZWZP2 of the workpiece 325, 327 machined on each coordinates system and each machining program origin ZPZP1, ZPZP2, and the position data P31, P32 indicating the distance of the direction of Z axis between the machining program origin ZPZP2, ZPZP1 and the origin ZMZP5, ZMZP4 of each tool rest 330, 331 etc. are also stored in the machining standard position coordinates memory 310 as a coordinates system data ZCDA. All the coordinates system data ZCDA are set on the basis of the coordinates system to which the coordinates system data ZCDA corresponds. The robot control program ZRCP stored in the robot control program memory 312 is also handled as the coordinates system data ZCDA.

Accordingly, each control object belonging to each coordinates system is usually controlled by means of the coordinates system data ZCDA corresponding to the coordinates system, in the said coordinates system. However, due to the contents of the machining, there is a case that the the control must be performed by means of the coordinates system data ZCDA set on the other coordinates system. For example, in the case that the handling robot 332 is driven in the directions as shown by the arrows ZC and ZD on the basis of the coordinates system $W_1$, $W_2$, it is necessary that the form of the chuck 323a, 326a is acknowledged so as to prevent the interference between the handling robot 332 and the chuck 323a, 326a, and that the robot driving control portion 321 controlls its movement condition so that the handling robot 332 isn't excessively driven in the directions as shown by the arrows ZC and ZD. The coordinates system data ZCDA relating to the dimension of the chuck 323a, 326a is stored in the chuck form memory 309. However, all the data ZCAD depend on the coordinates system $X_1$-$Z_1$, $X_2$-$Z_2$ to which the chuck 323a, 326a belongs, and don't depend on the coordinates system $W_1$-$W_2$ for controlling the handling robot 332. Accordingly, since the handling robot 332 can't be controlled on the basis of the said coordinates system data ZCDA, as it is, the robot driving control portion 321 demands the coordinates operating portion 315 to convert the coordinates system data ZCDA relating to the dimension of the chuck 323a, 326a, stored in the chuck form memory 309 into the coordinates system $W_1$-$W_2$.

Then, the coordinates operating portion 315 reads out the coordinates system data ZCDA relating to the dimension of the chuck 323a, 326a from the chuck form memory 309, immediately, and reads out the coordinates position relating information ZCLI showing the correlation between the coordinates system $W_1$-$W_2$ and the coordinates system $X_1$-$Z_1$, $X_2$-$Z_2$ from the coordinates relation memory 313. So, the conversion process is performed so that the coordinates system data ZCDA relating to the dimension of the chuck 323a, 326a created on the basis of the coordinates system $X_1$-$Z_1$, $X_2$-$Z_2$ is coverted on the coordinates system $W_1$-$W_2$, on the basis of the read out coordinates position relating information ZCLI. Since in the coordinates position relating information ZCLI, as shown in Fig.116, for example, the distances ZR1-ZR8 in the directions as shown by the arrows ZC and ZD, and in the direction as shown by the arrows ZA and ZB (corresponding to X axis direction and Z axis direction) from total standard point ZRZP (enabling to set at the optional position) which is standard for all the coodinates system on the machine tool 301, to the standard point of each coordinates system, that is, to each origin ZMZP1-ZMZP5 are displayed, the coordinates operating portion 315 can immediately acknowleges the position relation between the mutual coordinates systems from the coordinates position relating information ZCL1. So, the form of the chuck 323a, 326a is converted on the coordinates system $W_1$-$W_2$ on the basis of the position relation. Since the coordinates system $W_1$-$W_2$ is set only in the directions as shown by the arrows ZC and ZD, the coordinates system data ZCDA relating to the coordinates system $X_1$-$Z_1$, $X_2$-$Z_2$ is converted only the portion relating to Z axis, and is outputted to the robot driving control portion 321. However, for example, in the case that the coordinates system data ZCDA of the coordinates system $X_1$-$Z_1$ is converted on the $X_2$-$Z_2$, the converting process is performed toward X axis and Z axis. Therefore, the robot driving control portion 321, for example, can receive the dimension of the chuck 323a of the first spindle 323 in the directions as shown by the arrows ZC and ZD in such a manner that the data P5 on the basis of $Z_1$ axis is converted into the dimension data WP5 on the basis of $W_1$ axis on which the mechanical origin ZMZP1 is its origin. And, the robot driving control portion 321 can control so that the handling robot 333 don't interfere with the chuck 323a on the basis of the said data WP5.

The coordinates system data ZCDA relating to the coordinates system $X_1$-$Z_1$, $X_2$-$Z_2$ can also be applicable in the same way. In the case that the first spindle 323 is moved along $Z_1$ axis in the directions as shown by the arrows ZC and ZD, in order that the tool 335 of the second tool rest 331 can't interfere with the workpiece 325, the coordinates operating portion 315 always computes the position of the cutting edge of the tool 335 on the basis of the coordinates system $X_1$-$Z_1$, making use of the coordinates position relating information ZCLI. So, the position of the cutting edge can be watched. Therefore, the interference between the workpiece 325 and the tool 335 of the second tool rest 331 can be prevented, easily. (The form of the workpiece 325 can be easily acknowledged from the raw material dimension data inputted to the raw material form memory 336 through the input portion 306, on the coordinates system $X_1$-$Z_1$ in the case that the workpiece 325 is a raw material. During the machining, the machining program $ZPRO_1$ is analyzed to obtain the tool pass executing at present. So, the form of the workpiece 325 is easily obtained.)

The above-described embodiment explained the case that the distances ZR1-ZR8 from the total standard point ZRZP being standardized toward the all the coordinates systems on the machine tool 301 to the standard point of each coordinates system were displayed as the position relating information ZCLI as shown in Fig.116. However, the distances between the standard points of the coordinates systems are displayed as the coordinates position relating information ZCLI without providing the total standard point ZRZP. Thereafter, the coordinates operating portion 315 can naturally compute on the basis of the said distances.

The method of measuring of the position relation between the mechanical origin ZMZP1 of the handling robot 333 and the other coordinates system as the coordinates position relating information ZCLI is that the standard Surface of the robot hand 332a is come into contact with the cutting edge of the tool 335a and the tool length measuring means of which the position data is known on $X_1$-$Z_1$ co-ordinates system, and the position relation can be gotten from the position of the cutting edge 335a on the $X_1$-$Z_1$ coordinates and the position of the hand 332a on $W_1$-$W_2$ coordinates at that time. The position relation is also obtained by this method. For example, tool rest 330 is moved in $X_1$ direction, and the hand 332a is moved in $W_1$ direction, to bring the cutting edge 335a of the tool into contact with the hand standard surface. Then, the distance ZR1 between the origin ZMZP1 of the robot 332 and the total standard point ZRZP becomes clear from the equation, P30 + ZR1 = ZR4 + P31 - P23, immediately. That is, the distance ZR1 is known making use of the distance ZR4 between the origin ZMZP5 of the tool rest 330 and the total standard position ZRZP at that time, the position data P23 between the cutting edge 335a and the program origin ZPPP2, the position data P31 between the program origin ZPPP2 and the mechanical origin ZMZP5, and the coordinates position P30 of the hand 332a on $W_1$-$W_2$ coordinates.

The coordinates system control method according to the present invention can be off course used for any perposes as long as the coordinates system data ZCDA belonging to the different coordinates system (All the dimension information belonging to one coordinates system can be the coordinates system data ZCDA. Accordingly, the machining program ZPRO and the robot control program ZRCP is also regarded as the coordinates system data ZCDA in the case of creating on the basis of the specific coordinates system.) is converted into the coordinates system of one object substance to be controlled on the coordinates sytem on the basis of the coordinates position relating information ZCLI in the machine tool. The coordinates system control method can be also applied for the various kinds of a barrier and the prevention of the interference, the teaching toward the handling robot, and the case of the machining of the workpiece 327 installed in the second spindle 326 by means of the tool 335 installed in the first tool rest 330 (In this case, the command of the tool path relating to the machining of the workpiece 327 is converted into the coordinates system $X_1$-$Z_1$ from the coordinates system $X_2$-$Z_2$ to make the first tool rest 330 machine.), and the like.

**Claims**

1.  A complex machine tool having a frame, first and second spindle stocks provided on said frame so as to face each other, first and second workpiece spindles rotatably supported by respective said spindle stocks, means for rotating said first and second workpiece spindles, and workpiece holding means on each said workpiece spindle, said complex machine tool further comprising:

    said first and second spindle stocks being disposed on said frame such that at least one of said spindle stocks is movable relative to the other only in the direction of a central axis of said workpiece spindles, said at least one of said spindle stocks having means for moving said spindle stock in said direction of said central axis;

    first and second tool rests disposed on said frame on one side of said central axis such that each said tool rest corresponds to a respective said workpiece spindle, each said tool rest having means for moving said tool rest in at least a direction perpendicular to said direction of said central axis of said first and second workpiece spindles;

    tool holding means disposed on each of said first and said second tool rests having means for rotating said tool holding means on an axis parallel to said direction of said central axis of said first and second workpiece spindles;

    a plurality of tools disposed on each of said tool holding means, whereby said tools are free to be selectively positioned facing their respective corresponding workpiece spindles;

    a feed means for feeding a workpiece through one of said workpiece spindles;

    control means in control of said means for rotating said first and second workpiece spindles, said workpiece holding means of each said workpiece spindle, said means for moving said at least one of said spindle stocks, said means for moving of each said tool rest and said means for rotating of each said tool holding means for causing:

    a workpiece to be held with a said workpiece holding means;

    a first machining operation to be performed on said workpiece with one of said plurality of tools on one of said tool holding means;

    a first action to be executed after said first machining operation, said first action comprising relatively moving said second spindle stock a predetermined distance towards said first spindle stock and holding said workpiece between said first and second workpiece spindles;

a second action to be executed, said second action comprising rotating said first and second workpiece spindles at the same speed and cutting off and detaching a portion of said workpiece held by said workpiece holding means of said second workpiece spindle from the remainder of said workpiece with one of said plurality of tools on one of said tool holding means;

a third action to be executed, said third action comprising moving said second spindle stock together with said portion of said workpiece relative to and a predetermined distance away from said first spindle stock;

a fourth action to be executed, said fourth action comprising performing said first machining operation on said workpiece held by said workpiece holding means of said first workpiece spindle;

a fifth action to be executed, said fifth action comprising performing a second machining operation on said portion held by said workpiece holding means of said second workpiece spindle, and;

said workpiece to be fed by said feed means a predetermined length during at least one of the first to the fourth said actions.

2. A complex machine tool having a frame, first and second spindle stocks provided on said frame so as to face each other, first and second workpiece spindles rotatably supported by respective said spindle stocks, means for rotating said first and second workpiece spindles, and workpiece holding means on each said workpiece spindle, said complex machine tool further comprising:

said first and second spindle stocks being disposed on said frame such that at least one of said spindle stocks is movable relative to the other only in the axial direction of a central axis of said workpiece spindles, said at least one of said spindle stocks having means for moving said spindle stock in said direction of said central axis;

first and second tool rests disposed on said frame on one side of said central axis such that each said tool rest corresponds to a respective said workpiece spindle, each said tool rest having means for moving said tool rest in at least a direction perpendicular to said direction of said central axis of said first and second workpiece spindles;

tool holding means disposed on each of said first and said second tool rests having means for rotating said tool holding means on an axis parallel to said direction of said central axis of said first and second workpiece spindles;

a plurality of tools disposed on each of said tool holding means, whereby said tools are free to be selectively positioned facing their respective corresponding workpiece spindle; and

control means in control of said means for rotating said first and second workpiece spindles, said workpiece holding means of each said workpiece spindle, said means for moving said at least one of said spindle stocks, said means for moving of each said tool rest and said means for rotating of each said tool holding means for causing:

a workpiece to be held with said workpiece holding means of said first workpiece spindle;

a first machining operation to be performed on said workpiece with one of said plurality of tools on one of said tool holding means;

said second spindle stock to be moved relative to said first spindle stock a predetermined distance and said workpiece to be held between said first and second workpiece spindles;

the holding relation between said first workpiece spindle and said workpiece to be released such that said workpiece is held by said workpiece holding means of said second workpiece spindle;

said workpiece to be pulled a predetermined length out of said first workpiece spindle by relative movement of said second workpiece spindle away from said first workpiece spindle a distance equal to said predetermined length, and said workpiece to be held with and between said workpiece holding means of said first and second workpiece spindles after said workpiece has been pulled out;

said first and second workpiece spindles to be rotated at the same time rotational speed and a portion of said workpiece held by said workpiece holding means of said second workpiece spindle to be cut off from the remainder of said workpiece with one of said plurality of tools on said tool holding means;

said second spindle stock, together with said portion of said workpiece, to be relatively moved to a position a predetermined distance away from said first spindle stock; and

said first machining operation be performed on said remainder of said workpiece held by said workpiece holding means of said first workpiece spindle and a second machining operation to be performed on said portion held by said workpiece holding means of said second workpiece spindle.

3. A complex machine tool, said complex machine tool having a frame and first and second spindle stocks on said frame disposed so as to face each other, said first and second spindle stocks having first and second workpiece spindles rotatably supported thereby, respectively, means for rotating said first and second workpiece spindles, each said workpiece spindle having a workpiece holding means for holding a workpiece to be machined, said complex machine tool further comprising:

said first and second spindle stocks disposed on said frame such that at least one of said spindle stocks is free to be driven and moved relative to the other only in the direction of the central axis of said first and second workpiece spindles, said at least one of said spindle stocks having means for moving said spindle stock in said direction of said central axis;

first and second tool rests on said frame on one side of said central axis such that said first tool rest corresponds to said first workpiece spindle and said second tool rest corresponds to said second workpiece spindle, said first and second tool rests each having an inside portion thereof facing the other said tool rest and means for moving said tool rest in at least a direction perpendicular to said direction of said central axis of said first and second workpiece spindles;

tool holding means on each of said first and said second tool rests free to be driven and rotated on an axis parallel to said direction of said central axis of said first and second workpiece spindles such that each said tool holding means is disposed on said inside portion of its respective said tool rest, each said tool holding means having a side portion thereof mutually facing the said side portion of the other said tool holding means, and each said tool holding means having means for rotating said tool holding means on an axis parallel to said direction of said central axis of said first and second workpiece spindles;

a plurality of tools on each of said tool holding means, whereby said tools are free to be selectively positioned facing their respective corresponding workpiece spindle;

a machine tool control means for controlling said means for rotating said first and second workpiece spindles, said means for moving said at least one of said spindle stocks, said workpiece holding means of each said workpiece spindle, said means for moving each said tool rest and said means for rotating each said tool holding means such that:

a workpiece is held with said workpiece holding means of said first workpiece spindle,

said workpiece is machined while said workpiece is held by said first workpiece spindle,

a workpiece delivery action is performed, said action including rotationally positioning both said first and second workpiece spindles at respective predetermined angular delivery positions about their respective axes of rotation by angularly indexing each respective said workpiece spindle, relatively moving said first and second workpiece spindles to a delivery position whereat said first and second workpiece spindles are relatively close to each other and holding said workpiece with said second workpiece spindle, whereby said workpiece is held by both said first and second workpiece spindles, releasing the holding relation between said workpiece and said first workpiece spindle with said workpiece held by said second workpiece spindle, and moving said first and second workpiece spindles apart relative to each other, and

said workpiece is machined while said workpiece is held by said second workpiece spindle after finishing said workpiece delivery action;

wherein said workpiece holding means of each said workpiece spindle comprises a set of chuck jaws; and

wherein said predetermined angular delivery position of said first workpiece spindle is the same as the predetermined angular delivery position of said second workpiece spindle such that the respective said chuck jaws of said workpiece spindles are precisely positioned for delivering said workpiece between said first and second workpiece spindles.

4. A complex machine tool, said complex machine tool having a frame and first and second spindle stocks on said frame disposed so as to face each other, said first and second spindle stocks having first and second workpiece spindles rotatably supported thereby, respectively, means for rotating said first and second workpiece spindles, each said workpiece spindle having a workpiece holding means for holding a workpiece to be machined, said complex machine tool further comprising:

said first and second spindle stocks disposed on said frame such that at least one of said spindle stocks is free to be driven and moved relative to the other only in the direction of the central axis of said first and second workpiece spindles, said at least one of said spindle stocks having means for moving said spindle stock in said direction of said central axis;

first and second tool rests on said frame on one side of said central axis such that said first tool rest corresponds to said first workpiece spindle and said second tool rest corresponds to said second workpiece spindle, said first and second tool rests each having an inside portion thereof facing the other said tool rest and means for moving said tool rest in at least a direction perpendicular to said direction of said central axis of said first and second workpiece spindles;

tool holding means on each of said first and said second tool rests free to be driven and rotated on an axis parallel to said direction of said central axis of said first and second workpiece spindles such that each said tool holding means is disposed on said inside portion of its respective said tool rest, each said tool holding means having a side portion thereof mutually facing the said side portion of the other said tool holding means, and each said tool holding means having means for rotating said tool holding means on an axis parallel to said direction of said central axis of said first and second workpiece spindles;

a plurality of tools on each of said tool holding means, whereby said tools are free to be selectively positioned facing their respective corresponding workpiece spindle;

a machine tool control means, including a rotational angle positioning means for positioning said first and second spindles at respective optional rotational angular positions, for controlling said means for rotating said first and second workpiece spindles, said means for moving said at least one of said spindle stocks, said workpiece holding means of each said workpiece spindle, said means for moving each said tool rest and said means for rotating each said tool holding means such that:

a workpiece is held with said first workpiece spindle;

said workpiece is machined while said workpiece is held by said workpiece spindle;

a workpiece delivery action is performed, including positioning said first workpiece spindle with said workpiece holding means at a predetermined angular delivery position with said rotational angle positioning means,

positioning said second workpiece spindle at an angular delivery position different from said predetermined angular delivery position of said first workpiece spindle positioned by said rotational angle positioning means, relatively moving said first and second workpiece spindles so as to be relatively close to each other and holding said workpiece with said first and second workpiece spindles, releasing the holding relation between said workpiece and said first workpiece spindle with said workpiece held by said second workpiece spindle, and moving said first and second workpiece spindles apart relative to each other so as to hold said workpiece with said second workpiece spindle; and

said workpiece is machined while said workpiece is held by said second workpiece spindle after finishing said workpiece delivery action.

5. A complex machine tool, said complex machine tool having a frame and first and second spindle stocks on said frame disposed so as to face each other, said first and second spindle stocks having first and second workpiece spindles rotatably supported thereby, respectively, means for rotating said first and second workpiece spindles, each said workpiece spindle having a workpiece holding means, each said workpiece holding means comprising jaws for holding a workpiece to be machined, said complex machine tool further comprising:

said first and second spindle stocks disposed on said frame such that at least one of said spindle stocks is free to be driven and moved relative to the other only in the direction of the central axis of said first and second workpiece spindles, said at least one of said spindle stocks having means for moving said spindle stock in said direction of said central axis;

first and second tool rests on said frame on one side of said central axis such that said first tool rest corresponds to said first workpiece spindle and said second tool rest corresponds to said second workpiece spindle, said first and second tool rests each having an inside portion thereof facing the other said tool rest and means for moving said tool rest in at least a direction perpendicular to said direction of said central axis of said first and second workpiece spindles;

tool holding means on each of said first and said second tool rests free to be driven and rotated on an axis parallel to said direction of said central axis of said first and second workpiece spindles such that each said tool holding means is disposed on said inside portion of its respective said tool rest, each said tool holding means having a side portion thereof mutually facing the said side portion of the other said tool holding means, and each said tool holding means having means for rotating said tool holding means on an axis parallel to said direction of said central axis of said first and second workpiece spindles;

a plurality of tools on each of said tool holding means, whereby said tools are free to be selectively positioned facing their respective corresponding workpiece spindle;

a machine tool control means, including a rotational angle positioning means for positioning said first and second spindles at respective optional rotational angular positions, for controlling said means for rotating said first and second workpiece spindles, said means for moving said at least one of said spindle stocks, said workpiece holding means of each said workpiece spindle, said means for moving each said tool rest and said means for rotating each said tool holding means such that:

a workpiece is held with said first workpiece spindle,

said workpiece is machined while said workpiece is held by said first workpiece spindle,

a workpiece delivery action is performed, including positioning said first workpiece spindle with said workpiece holding means at a predetermined angular delivery position with said rotational angle positioning means, positioning said second workpiece spindle at a predetermined angular delivery position for said workpiece holding means of said workpiece spindle such that the phase of the jaws of said workpiece holding means of said second workpiece spindle is different from the phase of the jaws of said workpiece holding means of said first workpiece spindle, relatively moving said first and second workpiece spindles so as to be relatively close to each other and holding said workpiece with said first and second workpiece spindles, releasing the holding relation between said workpiece and said first workpiece spindle with said workpiece held by said second workpiece spindle, and moving said first and second workpiece spindles apart relative to each other so as to hold said workpiece with said second workpiece spindle; and

said workpiece is machined while said workpiece is held by said second workpiece spindle after finishing said workpiece delivery action.

6. A complex machine tool, said complex machine tool having a frame and first and second spindle stocks on said frame disposed so as to face each other, said first and second spindle stocks having first and second workpiece spindles rotatably supported thereby, respectively, means for rotating said first and second workpiece spindles, each said workpiece spindle having a workpiece holding means for holding a workpiece to be machined, said complex machine tool further comprising:

said first and second spindle stocks disposed on said frame such that at least one of said spindle stocks is free to be driven and moved relative to the other only in the direction of the central axis of said first and second workpiece spindles, said at least one of said spindle stocks having means for moving said spindle stock in said direction of said central axis;

first and second tool rests on said frame on one side of said central axis such that said first tool rest corresponds to said first workpiece spindle and said second tool rest corresponds to said second workpiece spindle, said first and second tool rests each having an inside portion thereof facing the other said tool rest and means for moving said tool rest in at least a direction perpendicular toe said direction of said central axis of said first and second workpiece spindles;

tool holding means on each of said first and said second tool rests free to be driven and rotated on an axis parallel to said direction of said central axis of said first and second workpiece spindles such that each said tool holding means is disposed on said inside portion of its respective said tool rest, each said tool holding means having a side portion thereof mutually facing the said side portion of the other said tool holding means, and each said tool holding means having means for rotating said tool holding means on an axis parallel to said direction of said central axis of said first and second workpiece spindles;

a plurality of tools on each of said tool holding means, whereby said tools are free to be selectively positioned facing their respective corresponding workpiece spindle;

first and second rotational angle positioning means for rotationally positioning said first and second spindles at respective predetermined angular delivery positions;

first and/or second driving means for driving and moving said first and/or said second spindle stocks relatively in the direction of said central axis of said first and second workpiece spindles;

memory means for storing workpiece delivery commands and a machining program corresponding to a workpiece to be machined;

a single main control means for driving and controlling said first and second rotational angle positioning means, and said first and/or said second driving means, respectively, according to said workpiece delivery commands stored in said memory means, such that machining of said workpiece is performed while said workpiece is held by said first workpiece spindle and a workpiece delivery action subsequently is performed according to said workpiece delivery commands stored in said memory means and includes:

relatively moving said first and second workpiece spindles to a delivery position whereat said first and second workpiece spindles are relatively close to each other,

rotationally positioning both said first and second workpiece spindles at respective predetermined angular delivery positions,

holding said workpiece held by said first spindle with said second workpiece spindle,

releasing the holding relation between said workpiece and said first workpiece spindle, and

moving said first and second workpiece spindles apart relative to each other so as to hold said workpiece with said second workpiece spindle.

7. A complex machine tool having a frame and first and second spindle stocks on said frame disposed so as to face each other, said first and second spindle stocks having first and second workpiece spindles rotatably supported thereby, respectively, each said workpiece spindle having a workpiece holding means for holding a workpiece to be machined,

at least one of said spindle stocks being movable relative to the other only along the direction of the central axis of said first and second workpiece spindles;

first and second tool rests on said frame on one side of said central axis such that each said tool rest corresponds to a respective workpiece spindle, and such that each said tool rest can be driven and moved in at least a direction perpendicular to said direction of said central axis of said first and second workpiece spindles;

tool holding means on each of said first and said second tool rests, which can be driven and rotated on an axis parallel to said central axis, such that each said tool holding means is disposed on an inside portion of its respective tool rest, each said tool holding means having a side portion thereof mutually facing the said side portion of the other said tool holding means;

a plurality of tools on each of said tool holding means, which tools can be selectively positioned facing their respective corresponding workpiece spindles;

a spindle angle rotational indexing control means for rotationally angularly indexing said first and said second workpiece spindles;

and control means operative to effect the following operations:-

holding a workpiece with said workpiece holding means of said first workpiece spindle;

machining said workpiece with one of said plurality of tools on one of said tool holding means while said workpiece is held by said first workpiece spindle;

positioning said first and second workpiece spindle at respective predetermined angular delivery positions by rotating and angularly indexing said workpiece spindles on each respective rotational axis and moving said first and second workpiece spindles to a delivery position by relative movement between said workpiece spindles to bring said workpiece spindles closer to each other;

holding said workpiece with said second workpiece spindle, whereby said workpiece is held by both said first and said second workpiece spindles;

releasing the holding relation between said workpiece and said first workpiece spindle with said workpiece held by said second workpiece spindle;

moving said first and second workpiece spindles apart;

angularly rotationally indexing said second workpiece spindle with said spindle angle rotational indexing control means and thus moving said second workpiece spindle to a predetermined angular machining position; and

machining said workpiece with one of said plurality of tools on one of said tool holding means while said workpiece is held by said second workpiece spindle.

8. The machine tool set forth in claim 7, in which the control means is operative to effect the step of;

angularly rotationally indexing said second workpiece spindle with said spindle angle rotational control means during said step of machining said workpiece while said workpiece is held by said second workpiece spindle.

9. The machine tool as set forth in claim 7, in which the control means is operative to;

maintain said workpiece at said predetermined angular machining position during said step of machining said workpiece while said workpiece is held by said second workpiece spindle.

**10.** A complex machine tool, having a frame and first and second spindle stocks on said frame disposed so as to face each other, said first and second spindle stocks having first and second workpiece spindles rotatably supported thereby, respectively, each said workpiece spindle having a workpiece holding means for holding a workpiece to be machined, at least one of said spindle stocks being movable relative to the other only along the direction of the central axis of said first and second workpiece spindles, first and second spindle rotational angle positioning means for positioning said first and second workpiece spindles at respective optional rotational angular positions provided on said first and second workpiece spindles, controlled by a single main control portion, first and second tool rests provided on said frame on one side of the said central axis such that said first tool rest corresponds to said first workpiece spindle and said second tool rest corresponds to said second workpiece spindle, tool holding means provided on each of said first and said second tool rests which can be driven and rotated on an axis parallel to said central axis of said first and second workpiece spindles, each said tool holding means being disposed on an inside portion of its respective tool rest, each said tool holding means having a side portion thereof mutually facing the said side portion of the other said tool holding means, at least one first milling tool provided on said first tool holding means so as to face said workpiece held by said workpiece holding means of said first workpiece spindle, and at least one second milling tool provided on said second tool holding means so as to face said workpiece held with said workpiece holding means of said second workpiece spindles,

the said main control portion being operative to effect the steps of:-

forming a first machining portion on a workpiece by machining said workpiece held by said workpiece holding means of said first workpiece spindle with a said first milling tool in co-operation with said first spindle rotational angular positioning means; and

forming a second machining portion on said workpiece by machining said workpiece, already formed with said first machining portion, held by said workpiece holding means of said second workpiece spindle with a said second milling tool in co-operation with said second spindle rotational angle positioning means controlled by said main control portion according to said first machining portion recognized by said main control portion.

**11.** A complex machine tool having a single frame, first and second workpiece spindles mounted on first and second spindle stocks respectively so as to be driven and rotated, said second spindle stock being mounted on said frame so that it can be driven and moved towards said first spindle stock mounted on said frame along central axes of said first and second workpiece spindles, said workpiece spindles facing each other, a tool rest mounted on said frame, said tool rest having a tool holding means for carrying a plurality of tools thereon, and control means operative to effect repeated execution of the following steps:

after a workpiece is held by said first and second workpiece spindles and a predetermined machining operation is performed, releasing the holding relation between said second workpiece spindle and said workpiece, relatively moving said second spindle stock towards said first spindle stock and thereafter again holding said workpiece with said first and second workpiece spindles;

subsequently releasing the holding relation between said first workpiece spindle and said workpiece and relatively moving said second spindle stock together with said workpiece to a position a predetermined distance away from said first spindle stock, wherein a fresh portion of said workpiece is exposed by a predetermined length from said first workpiece spindle between said first and second workpiece spindles; and

after said fresh portion has been exposed by said predetermined length from said first workpiece spindle, holding said workpiece with both said first and said second workpiece spindles and machining said fresh portion with a tool of said tool holding means.

**12.** The machine tool set forth in claim 11, wherein:

when said workpiece is machined after said fresh portion has been exposed by said predetermined length from said first workpiece spindle, said workpiece is machined with said fresh portion positioned near said first workpiece spindle or said second workpiece spindle.

**13.** A complex machine tool having a single frame, first and second workpiece spindles mounted on first and second spindle stocks respectively so as to be driven and rotated, said second spindle stock being mounted on said frame so as to be movable towards said first spindle stock mounted on said frame along central axes of said first and second workpiece spindles, each said workpiece spindle having a workpiece holding means facing the other said workpiece spindle, a tool rest mounted on said frame, said tool rest having a tool holding means and a plurality of tools disposed thereon, and control means operative to effect the following steps:

holding a workpiece with said workpiece holding means of said first workpiece spindle of said first spindle stock;

moving said second spindle stock towards said first spindle stock a predetermined distance and holding an end of said workpiece with said workpiece holding means of said second workpiece spindle;

holding said workpiece relative to said workpiece holding means of said first spindle so as to be movable along said axis of said first workpiece spindle; and

pulling out a fresh portion of said workpiece from said first workpiece spindle with said second spindle stock by moving said second spindle stock together with said workpiece away from said first spindle stock and machining said fresh portion with said tool of said tool holding means while pulling out said fresh portion of said workpiece.

14. The machine tool set forth in claim 13, wherein:

said step of pulling out and machining comprises positioning said fresh portion near said first spindle stock and machining said fresh portion at this position.

15. The machine tool set forth in claim 13, wherein:

said step of holding said workpiece is done by adjusting the holding relation between said workpiece holding means of said first workpiece spindle and said workpiece.

# Fig.1

EP 0 506 209 A1

EP 0 506 209 A1

# Fig. 2

# Fig.3

EP 0 506 209 A1

1

## Fig. 4

5  5  5a   7c  7b 7a   7

10

X1 ——— X

2a

2d

2

4

7b

100

## Fig. 6

106b   135

XF   XE

106c   XX1(XX3)

106   133   103   125b

125a

119

XX2 / XX4

117

106a

102b

109A

102b

102c

102

Fig.5

100

EP 0 506 209 A1

60

# Fig. 7

Fig. 8

# Fig. 9

Fig.10

Fig.11

Fig.12

Fig.13

EP 0 506 209 A1

Fig. 14

Fig. 15

Fig.16

Fig.17

Fig.18

Fig.19

Fig.20

Fig.21

Fig.22

Fig.23

Fig. 25

Fig. 26

Fig.24

Fig. 27

EP 0 506 209 A1

Fig.28

74

Fig. 29

Fig. 30

# Fig. 31

# Fig. 33

YA ←→ YB

EP 0 506 209 A1

# Fig. 32

$D_1$

$C_1$

$A_3 \leftrightarrow B_3 \leftrightarrow Z_1$

$X_1$

$D_2$

$C_2$

$A_4 \leftrightarrow B_4 \leftrightarrow Z_2$

$X_2$

206A

216

YJ

206B

YK

203

203b

230f

YJ

YK

205b  205

220A

YS

$A_1 \leftrightarrow B_1 \leftrightarrow W_1$

YT

233

$A_2 \leftrightarrow B_2 \leftrightarrow W_2$

230h  230

230e

YA $\leftrightarrow$ YB

230g 230i

Fig.34

Fig.35

EP 0 506 209 A1

Fig.37

Fig.36

EP 0 506 209 A1

## Fig. 38

## Fig. 39

## Fig.40

203a
203
203d
205
205a
203d

230

YA ←→ YB

## Fig.41

203a
203c
203
203b
205b 205
230

$A_1 \leftrightarrow B_1 \leftrightarrow W_1$

YS
YT

205a
205b 205
205c

$A_2 \leftrightarrow B_2 \leftrightarrow W_2$

YA ←→ YB

## Fig.42

203c
ARE3
205a
203 203a 203b
205b 205
230
205c

$A_1 \leftrightarrow B_1$

YS
YT

$A_2 \leftrightarrow B_2 \leftrightarrow W_2$

YS
YT

YA ←→ YB

Fig.43

Fig.44

Fig.45

Fig.46

Fig. 47

Fig. 48

241

203

$A_1 \leftrightarrow B_1 \leftrightarrow W_1$

203b

$\circlearrowleft$ YS
$\circlearrowleft$ YT

230 230r
230d

233

205b 205

$A_2 \leftrightarrow B_2 \leftrightarrow W_2$

$\circlearrowleft$ YS
$\circlearrowleft$ YT

YA $\leftrightarrow$ YB

241

203

$A_1 \leftrightarrow B_1 \leftrightarrow W_1$

203b

230 230d
230m

233

206A

$\circlearrowleft$ YS
$\circlearrowleft$ YT

YA $\leftrightarrow$ YB

206B

233

230r
230n

205b

205

$A_2 \leftrightarrow B_2$

EP 0 506 209 A1

Fig.49

241

A₁ ↔ B₁ ↔ W₁    203

YA ↔ YB

230s
230 230r
203b
233
205b
205
206B

A₂ ↔ B₂ ↔ W₂

$\binom{YS}{YT}$

230T 230n

Fig.50

241

A₁ ↔ B₁ ↔ W₁    203
$\binom{YS}{YT}$

203b
230 230d
233
206A

YA ↔ YB

206B
233
230T
230s
230r
205b
205

A₂ ↔ B₂

Fig.51

Fig.52

EP 0 506 209 A1

Fig.53

Fig.54

88

Fig.55

Fig.56

EP 0 506 209 A1

Fig.57

Fig.58

Fig.59

90

Fig. 60

203  203b  205b  205

$A_1 \leftrightarrow B_1 \leftrightarrow W_1$     $A_2 \leftrightarrow B_2 \leftrightarrow W_2$

230

$YA \leftrightarrow YB$

Fig. 61

203  203b          205b  205

$A_1 \leftrightarrow B_1 \leftrightarrow W_1$     $A_2 \leftrightarrow B_2 \leftrightarrow W_2$

230        230

$YA \leftrightarrow YB$

Fig. 62

203 203b  230          230  205b  205

$A_1 \leftrightarrow B_1 \leftrightarrow W_1$     $A_2 \leftrightarrow B_2 \leftrightarrow W_2$

$YA \leftrightarrow YB$

Fig. 63

203 203b 230          230 205b 205

$A_1 \leftrightarrow B_1 \leftrightarrow W_1$     $A_2 \leftrightarrow B_2 \leftrightarrow W_2$

$YA \leftrightarrow YB$

## Fig. 64

203  203b

230D

205b 205

YA ←→ YB

## Fig. 65

203
203b

$A_1 \leftrightarrow B_1 \leftrightarrow W_1$

205b  205

$A_2 \leftrightarrow B_2 \leftrightarrow W_2$

230E

230D

YA ←→ YB

## Fig. 66

203  203b

$A_1 \leftrightarrow B_1 \leftrightarrow W_1$

205b  205

$A_2 \leftrightarrow B_2 \leftrightarrow W_2$

230D

230E

YA ←→ YB

Fig.67

$A_1 \leftrightarrow B_1 \leftrightarrow W_1$

203 203b 230F 230G 205b 205

$A_2 \leftrightarrow B_2 \leftrightarrow W_2$

YA $\longleftrightarrow$ YB

Fig.68

203 203b 230F

$A_1 \leftrightarrow B_1 \leftrightarrow W_1$

205b 205

$A_2 \leftrightarrow B_2 \leftrightarrow W_2$

230G

YA $\longleftrightarrow$ YB

Fig.69

203 203b 230F 246 230G 205b 205

$A_1 \leftrightarrow B_1 \leftrightarrow W_1$

$A_2 \leftrightarrow B_2 \leftrightarrow W_2$

YA $\longleftrightarrow$ YB

Fig.70

203 203b 230F 246 230G 205b 205

$A_1 \leftrightarrow B_1 \leftrightarrow W_1$

$A_2 \leftrightarrow B_2 \leftrightarrow W_2$

YA $\longleftrightarrow$ YB

EP 0 506 209 A1

## Fig. 71

94

Fig. 72

401

Fig. 73

ROTATION ANGULAR VELOCITY QUANTITY DETECTING PORTION

ROTATION ANGULAR VELOCITY QUANTITY DETECTING PORTION

ROTATION ANGULAR VELOCITY QUANTITY DETECTING PORTION

DRIVING MOTOR CONTROL PORTION

Fig.74

Fig.75

# Fig.76

# Fig.77

## Fig.78

## Fig.79

## Fig.80

## Fig.81

## Fig.82

## Fig. 83

## Fig. 84

## Fig. 85

Fig. 86

Fig. 87

EP 0 506 209 A1

Fig.88

Fig.89

104

Fig. 90
(a)

Fig. 90
(b)

# Fig. 91

# Fig. 92

# Fig. 93

Fig. 94

Fig. 95

## Fig. 96

## Fig. 97

## Fig. 98

## Fig. 99

# Fig.100

512 — MAIN CONTROL PORTION

501

PRO | MACHINING PROGRAM MEMORY — 515

517

539

KEY BOARD ◄— WTP | SYSTEM PROGRAM MEMORY — 516

TOOL REST CONTROL PORTION ◄—► TOOL REST CONTROL PORTION — 540

519

RS2 | FEED DRIVING MOTOR CONTROL PORTION ◄—► FEED DRIVING MOTOR CONTROL PORTION — 520

WD2

T1.ST1 | OS1 | C-axis CONTROL PORTION | CS1 ◄—► C-axis CONTROL PORTION | OS2 — 522

RS3 RS4 — 521

RS1 | ROTATION NUMBER CONTROL PORTION | NA ◄— NB | ROTATION NUMBER CONTROL PORTION — 525

523 — 513

503d 503 503b 536

505 505d

505b WC

WC 502a 502 WD

507a

WD 509a

M1 WE WF

503e 503c 503a 510

507

511 505c WE WF M2

505a 505e 509

506

WA ◄—► WB

111

Fig. 101

112

Fig.102

Fig.103

# Fig. 104

# Fig. 105

# Fig.106

# Fig.107

EP 0 506 209 A1

## Fig.108

## Fig.109

# Fig.110

# Fig.111

# Fig.112

## Fig. 113

<u>801</u>

817

816  815

811

SPINDLE CONTROL PORTION

SS1

AMP LIFI ER

M

819

C-axis CONTROL PORTION

SS2

PG ~ 812

EC ~ 813

## Fig. 114

<u>801</u>

811      809

812

811

802

813

802a  811a 811b 810

Fig.115

301

MAIN CONTROL PORTION — 302

305

333 DISPLAY PORTION

303

INPUT PORTION — 306

TOOL REST FORM MEMORY ZCDA ZPRO (ZCDA) MACHINING PROGRAM MEMORY — 307

CHUCK FORM MEMORY ZCDA ZCDA MACHINING STANDARD POSITION COORDINATES MEMORY

309

TOOL FORM MEMORY ZCDA ZCDA RAW MATERIAL FORM MEMORY — 336 310

311 313

ZRCP (ZCDA) ROBOT CONTROL PROGRAM MEMORY — 312

COORDINATES RELATION MEMORY ZCLI

315

COORDINATES ORERATING PORTION

FIRST TOOL REST DRIVING CONTROL PORTION | SECOND TOOL REST DRIVING CONTROL PORTION | FIRST SPINDLE DRIVING CONTROL PORTION | SECOND SPINDLE DRIVING CONTROL PORTION | ROBOT DRIVING CONTROL PORTION | BARFEEDER DRIVING CONTROL PORTION

316 317 319 320 321 322

$X_1$ $Z_1$ 330 331 $X_2$ $Z_2$ ZB ZA

335 335 326a

$Z_1$ $Z_2$

323 323a 325 327 326 329

$W_1$ $W_2$

332a

332 ZC ZD

121

# Fig.116

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 178 991 (TI MACHINE TOOLS LIMITED)<br>* the whole document *<br>--- | 1-15 | B23Q39/04 |
| E | EP-A-0 272 825 (WICKMAN BENNETT MACHINE TOOL COMPANY LIMITED)<br>* abstract; figures 1,2 *<br>----- | 1-15 | |

TECHNICAL FIELDS
SEARCHED (Int. Cl.4)

B23Q
B23B

The present search report has been drawn up for all claims

| Place of search | Date of completion of the search | Examiner |
|---|---|---|
| BERLIN | 15 JULY 1992 | CUNY J. |